(19) Europäisches Patentamt / European Patent Office / Office européen des brevets

(11) **EP 2 904 582 B1**

(12) **FASCICULE DE BREVET EUROPEEN**

(45) Date de publication et mention de la délivrance du brevet:
**30.01.2019 Bulletin 2019/05**

(51) Int Cl.:
*G06T 7/00* *(2017.01)*   *G06T 7/20* *(2017.01)*
*G06T 7/215* *(2017.01)*

(21) Numéro de dépôt: **13815012.3**

(22) Date de dépôt: **07.10.2013**

(86) Numéro de dépôt international:
**PCT/FR2013/052381**

(87) Numéro de publication internationale:
**WO 2014/053796 (10.04.2014 Gazette 2014/15)**

(54) **SYSTEME ET PROCEDE POUR ESTIMER UNE QUANTITE D'INTERET DANS UN SYSTEME CINEMATIQUE PAR TOMOGRAPHIE PAR AGENT DE CONTRASTE**

SYSTEM UND VERFAHREN ZUM SCHÄTZEN EINER BESTIMMTEN QUANTITÄT IN EINEM KINEMATISCHEN SYSTEM DURCH KONTRASTMITTELTOMOGRAFIE

SYSTEM AND METHOD FOR ESTIMATING A QUANTITY OF INTEREST IN A KINEMATIC SYSTEM BY CONTRAST AGENT TOMOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1259479**

(43) Date de publication de la demande:
**12.08.2015 Bulletin 2015/33**

(73) Titulaire: **Olea Medical**
**13600 La Ciotat (FR)**

(72) Inventeur: **PAUTOT, Fabrice**
**F-13600 La Ciotat (FR)**

(74) Mandataire: **Brun, Philippe Alexandre Georges**
**MED'iNVENT CONSULTING**
**Espace Mistral - Bât.A**
**297 avenue du Mistral**
**ZI ATHELIA IV**
**13705 La Ciotat Cedex (FR)**

(56) Documents cités:
**FR-A1- 2 965 951**

• VIMMR J ET AL: "Non-Newtonian effects of blood flow in complete coronary and femoral bypasses", MATHEMATICS AND COMPUTERS IN SIMULATION, ELSEVIER, AMSTERDAM, NL, vol. 80, no. 6, 1 février 2010 (2010-02-01), pages 1324-1336, XP026947426, ISSN: 0378-4754, DOI: 10.1016/J.MATCOM.2009.01.004 [extrait le 2009-01-31]
• WINTERMARK M ET AL: "Comparative overview of brain perfusion imaging techniques", STROKE, LIPPINCOTT WILLIAMS & WILKINS, US, vol. 36, 1 janvier 2005 (2005-01-01), pages E83-E99, XP002526086, ISSN: 0039-2499, DOI: 10.1161/01.STR.0000177884.72657.8B
• Fabrice Pautot: "Theoretical basis of in vivo tomographic tracer kinetics", Quantitative Biology, 29 avril 2013 (2013-04-29), pages 1-24, XP055072224, viXra.org Extrait de l'Internet: URL:http://vixra.org/abs/1304.0162 [extrait le 2013-07-22]
• Timothy N Jones ET AL: "Patient-Specific Analysis of Left Ventricular Blood Flow", International Conference on Medical Image Computing and Computer-Assisted Intervention, 13 October 1998 (1998-10-13), pages 156-166, XP055320691,

**Description**

L'invention concerne un procédé pour produire une estimation d'une quantité d'intérêt relative à un écoulement au sein d'un volume polyédrique d'un système cinématique avantageusement mis en oeuvre par une unité de traitement d'un système d'imagerie tomographique. L'invention s'applique plus particulièrement mais de manière non limitative, à l'estimation de flux volumiques ou de volumes plasmatiques, interstitiels ou composés relatifs à l'écoulement d'un agent de contraste au sein d'un organe par imagerie de perfusion ou de perméabilité. L'invention se distingue notamment des procédés connus en ce qu'elle consiste à estimer, pour chaque volume d'intérêt, par exemple un voxel parallélépipédique, non pas un seul flux volumique, comme divulgué par exemple dans le brevet FR2965951 A1, mais chacun des six flux - dont au moins cinq sont libres - à travers respectivement chaque face dudit voxel.

Le document Vimmr J et al, "Non-Newtonian effects of blood flow in complete coronary and femoral bypasses", Mathematics and computers in simulation, vol. 80, no. 6, 2010, pages 1324-1336, ainsi que le document Timothy N Jones et al., "Patient-Specific Analysis of Left Ventricular Blood Flow", International conference on medical image computing and computer-assisted intervention, 1998, pages 156-166, divulguent des méthodes de modélisation du flux sanguin, faisant intervenir notamment des flux à travers les faces des voxels. Contrairement à la présente invention, ces documents considèrent le sang comme un fluide homogène.

L'invention s'appuie notamment sur des techniques d'imagerie tomographique telles que l'imagerie de perfusion par Résonance Magnétique (*Perfusion Weighted Magnetic Resonance Imaging* - PW-MRI - selon une terminologie anglo-saxonne), l'imagerie de perfusion par Susceptibilité Dynamique de Contraste (*Dynamic Susceptibility Contrast Imaging* - DSC - suivant une terminologie anglo-saxonne), l'imagerie de perfusion par tomographie à rayons X (*Computed Tomography Perfusion* - CTP - selon une terminologie anglo-saxonne), l'imagerie de perfusion par micro-tomographie à rayons X (*Micro-Computed Tomography Perfusion* selon une terminologie anglo-saxonne), l'imagerie de perfusion par marquage de spins (*Arterial Spin Labelling* - ASL - suivant une terminologie anglo-saxonne) ou encore par ultrasons (*Ultrasound Perfusion Imaging* suivant une terminologie anglo-saxonne).

L'invention peut s'appuyer en outre sur des techniques d'imagerie de perméabilité telles que l'imagerie par Rehaussement de Contraste Dynamique (*Dynamic Contrast Enhanced Imaging* - DCE - suivant une terminologie anglo-saxonne) par résonance magnétique (*DCE-MR,* suivant une terminologie anglo-saxonne) ou par Tomographie à rayons X (*DCE-CT,* suivant une terminologie anglo-saxonne), par Tomographie par Emission de Positrons (*Positrons Emission Tomography* - PET - suivant une terminologie anglo-saxonne) ou encore par Tomographie d'Emission Monophotonique (*Single Photon Emission Computed Tomography* - SPECT - suivant une terminologie anglo-saxonne).

Ces techniques permettent d'obtenir rapidement des informations précieuses sur l'hémodynamique d'organes tels que le cerveau ou le coeur. Ces informations sont particulièrement cruciales pour un praticien cherchant à établir un diagnostic, à faire un pronostic ou à prendre une décision thérapeutique dans le traitement de pathologies telles que les accidents vasculaires cérébraux ou les tumeurs cancéreuses. Par exemple, une ischémie cérébrale se caractérise principalement par un effondrement des flux sanguins dans le territoire vasculaire occlus ; la néoangiogénèse entraînée par l'expansion d'une tumeur cancéreuse peut se caractériser par une augmentation des flux sanguins, etc.

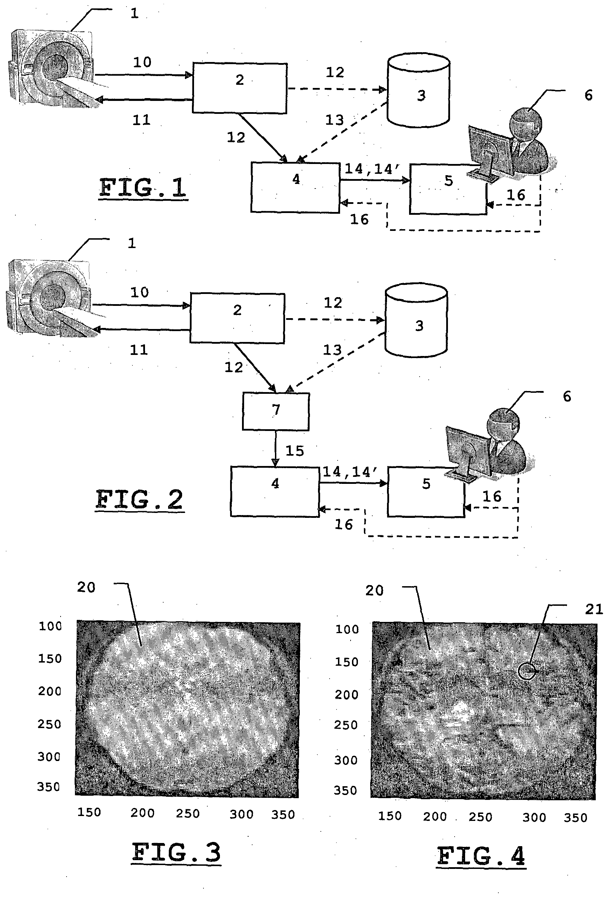

Pour mettre en oeuvre de telles techniques, on utilise - comme le décrit la figure 1 - un appareil 1 d'imagerie par Résonance Magnétique Nucléaire ou par tomographie commandé à l'aide d'une console 2. Un utilisateur peut ainsi choisir des paramètres 11 pour piloter l'appareil. Ce dernier délivre une pluralité de séquences d'images numériques 12 d'une partie du corps, notamment du cerveau. Ledit appareil applique pour cela une combinaison d'ondes électromagnétiques à haute fréquence sur la partie du corps considérée et mesure un signal d'intensité 10 réémis par certains atomes. L'appareil permet ainsi de déterminer la composition chimique et donc la nature des tissus biologiques en chaque volume élémentaire du volume imagé (usuellement appelé « voxel »).

Les séquences d'images sont optionnellement stockées par un serveur 3 et constituent généralement un dossier médical 13 d'un patient. Un tel dossier peut comprendre des images de différentes modalités (perfusion, perméabilité, etc.) Les séquences sont analysées au moyen d'une unité de traitement 4 dédiée. Cette unité de traitement délivre in fine - par l'intermédiaire d'un dispositif de restitution 5 proposant un rendu graphique, sonore ou autre - à un praticien 6 au moyen d'une interface homme-machine adaptée, une estimation d'une ou plusieurs quantités d'intérêt 14 (éventuellement formatées sous la forme d'un contenu 14') telles que des paramètres hémodynamiques. Le praticien peut ainsi réaliser un diagnostic et décider de l'action thérapeutique qu'il jugera adéquate. Il peut en outre paramétrer l'unité de traitement ou le dispositif de restitution à l'aide de commandes utilisateur 16. Il existe une variante décrite - à titre d'exemple pas la figure 2 - pour la laquelle un système d'imagerie tel que décrit précédemment comporte en outre une unité de prétraitement 7 pour analyser les séquence d'images 12 pour en déduire des signaux expérimentaux (de perfusion ou de perméabilité) 15 et les délivrer à l'unité de traitement 4 qui est ainsi déchargée de cette tâche.

La figure 3 illustre un exemple d'image typique 12 d'une tranche de 5 millimètres d'épaisseur d'un cerveau humain. Cette image est obtenue par Résonance Magnétique Nucléaire. A l'aide de cette technique, on peut obtenir, pour chaque tranche, une matrice de 128 x 128 voxels dont les dimensions sont de 1,5 x 1,5 x 5 millimètres. A l'aide d'une interpolation bilinéaire on peut produire une image à plat de 458 x 458 pixels telle que l'image 20.

Des images de perfusion ou de perméabilité dynamiques sont obtenues soit en injectant par voie intraveineuse un agent de contraste exogène (par exemple un chélate de gadolinium pour la DSC-MR, de l'iode pour la CTP, un radionucléide pour la PET et la SPECT ou encore un gaz tel que le xéon) soit en générant un agent de contraste endogène (par marquage des spins du sang artériel dans le cas de l'ASL) puis en mesurant au cours du temps un signal relié à la concentration dudit agent de contraste dans chaque voxel de l'image. Nous noterons $s(x,y,z,t)$ le signal ainsi obtenu au niveau du voxel de coordonnées spatiales $(x,y,z)$.

La figure 4 illustre une image 20 similaire à celle présentée en liaison avec la figure 3. Toutefois cette image est obtenue après une injection d'un agent de contraste. Cette image est un exemple d'image de perfusion typique d'un cerveau. Les artères apparaissent ainsi clairement contrairement à la même image décrite en figure 3.

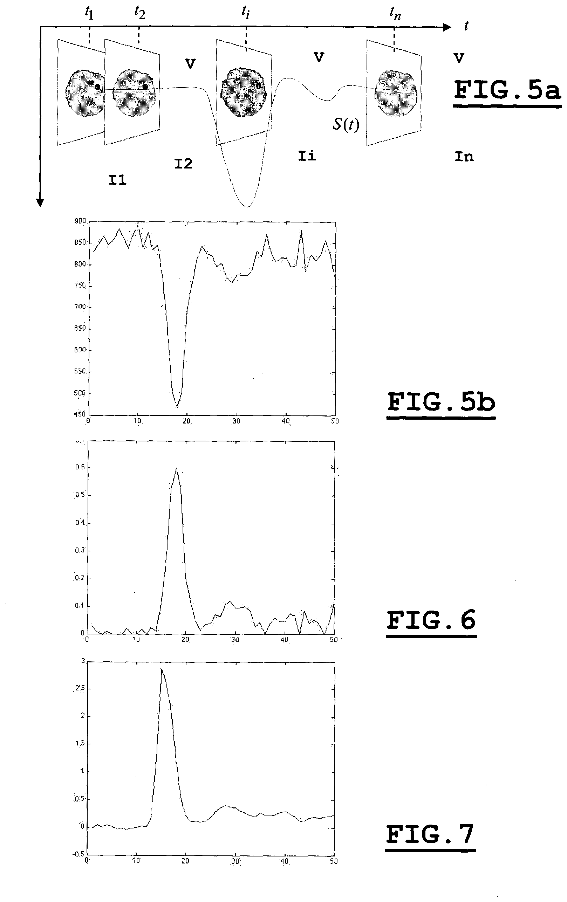

La figure 5b permet d'illustrer un exemple de signal de perfusion $s(x,y,z,t)$ par Résonance Magnétique Nucléaire tel que les signaux 15 délivrés par l'unité de prétraitement 7 décrite en liaison avec la figure 2. Le signal de perfusion est ainsi représentatif de l'évolution de la concentration d'un agent de contraste dans un voxel au cours du temps $t$ à la suite d'une injection dudit agent de contraste. A titre d'exemple, la figure 5b décrit un tel signal sur une durée de 50 secondes. L'axe des ordonnées décrit l'intensité du signal dont l'unité est arbitraire. Pour obtenir un tel signal, l'unité de traitement 4 selon la figure 1 (ou en variante l'unité de prétraitement 7 selon la figure 2), analyse une séquence de n images de perfusion par Résonance Magnétique Nucléaire I1, I2, ..., Ii, ..., In à des instants $t_1$, $t_2$,..., $t_i$,...,$t_n$ comme le décrit, à titre d'exemple, la figure 5a.

Les signaux $s(x,y,z,t)$ sont tout d'abord convertis en courbes de concentration $c(x,y,z,t)$ dudit agent de contraste. Par exemple, en tomographie de perfusion par rayons X, le signal pour chaque voxel est typiquement supposé être proportionnel à la concentration :

$$s(x,y,z,t) = k \cdot c(x,y,z,t) + s_0(x,y,z)$$

En imagerie de perfusion par DSC-MR, on suppose typiquement qu'il existe une relation exponentielle :

$$s(x,y,z,t) = s_0(x,y,z) \cdot e^{-k \cdot TE \cdot c(x,y,z,t)}$$

Dans les deux cas, $s_0(x,y,z)$ représente l'intensité moyenne du signal avant l'arrivée de l'agent de contraste et k est une constante. Sa valeur en chaque voxel étant inconnue, elle est fixée à une valeur arbitraire pour tous les voxels d'intérêt. On obtient ainsi des estimations relatives et non pas absolues. Ces informations relatives restent toutefois pertinentes puisque l'on est intéressé principalement par la variation relative de ces valeurs dans l'espace, en particulier entre les tissus sains et les tissus pathologiques.

La figure 6 présente une courbe de concentration déduite d'un signal de perfusion tel que celui décrit en figure 5b. La figure 6 permet ainsi de visualiser au cours du temps, l'évolution de la concentration massique d'un agent de contraste au sein d'un voxel. On note un pic de forte amplitude lors du premier passage (*first pass,* en langue anglaise) de l'agent de contraste dans le voxel suivi de pics d'amplitudes plus faibles lié à un phénomène de recirculation (*second pass,* en langue anglaise) dudit agent de contraste.

La figure 7 illustre quant à elle, une fonction d'entrée artérielle typique $c_a(t)$ représentative de la circulation d'un agent de contraste au sein d'un voxel artériel tel que le voxel 21 présenté en liaison avec la figure 4. La figure 7 permet de constater notamment que le phénomène de recirculation après un premier passage de l'agent de contraste est très faible.

Les courbes de concentration $c(x,y,z,t)$ ainsi obtenues par ces techniques sont décrites par des modèles mathématiques des phénomènes de transport de l'agent de contraste dans chaque voxel d'intérêt.

Dans le cas de l'imagerie de perfusion, le modèle standard est le modèle de Meier et Zierler qui peut s'écrire sous forme différentielle :

$$\frac{\partial c(x,y,z,t)}{\partial t} = BF(x,y,z)\left[c_a(x,y,z,t) - c_v(x,y,z,t)\right]$$

où $c_a(x,y,z,t)$ est la concentration de l'agent de contraste dans l'artère alimentant le volume de tissu contenu dans ledit voxel (fonction d'entrée artérielle ou *Arterial Input Function* - AIF - selon une terminologie anglo-saxonne) , $c_v(x,y,z,t)$ est la concentration de l'agent de contraste dans la veine drainant le volume de tissu contenu dans ledit voxel (fonction de sortie veineuse ou *Venous Output Function* - VOF - selon une terminologie anglo-saxonne) et *BF* est le « flux sanguin » (*Blood Flow* selon une terminologie anglo-saxonne).

Le système dynamique artère/tissu/veine étant linéaire et stationnaire (*Linear Time-invariant* - LTI - suivant une terminologie anglo-saxonne), il existe une réponse impulsionnelle ou fonction densité de probabilité du temps de transit dans le volume de tissu $h(x,y,z,t)$ telle que $c_v(x,y,z,t) = c_a(x,y,z,t) \otimes h(x,y,z,t)$ où $\otimes$ désigne le produit de convolution.

En introduisant la fonction de répartition complémentaire du temps de transit dans le volume de tissu *(residue*

$$R\left(x,y,z,t\right) = u(t) - \int_0^t h\left(x,y,z,\tau\right) d\tau$$

*function* selon une terminologie anglo-saxonne) où $u(t)$ est la fonction généralisée créneau de Heaviside, la solution de l'équation différentielle précédente avec condition initiale $c(x,y,z,t=0)=0$ s'écrit $c(x,y,z,t) = BF(x,y,z) \cdot c_a(x,y,z,t) \otimes R(x,y,z,t)$, ce qui constitue la forme intégrale du modèle standard de la perfusion de Meier et Zierler.

A partir de la fonction de répartition complémentaire du temps de transit du sang dans le volume de tissu, on définit le temps de transit moyen du sang dans le tissu (*Mean Transit Time* - MTT - selon une terminologie anglo-saxonne) par :

$$MTT\left(x,y,z\right) = \int_0^{+\infty} t \cdot h\left(x,y,z,t\right) dt = \int_0^{+\infty} R\left(x,y,z,t\right) dt$$

On définit également le volume sanguin par unité de volume BV (*Blood Volume* selon une terminologie anglo-saxonne) par la relation :

$$BV\left(x,y,z\right) = \frac{\int_0^{+\infty} c\left(x,y,z,t\right) dt}{\int_0^{+\infty} c_a\left(x,y,z,t\right) dt}$$

On a la relation : $BV(x,y,z) = BF(x,y,z) \cdot MTT(x,y,z)$.

Etant donnée la mesure de l'évolution de l'état du système artère/tissu/veine $c(x,y,z,t)$, il s'agit donc d'estimer conjointement :

- le système lui-même, à savoir sa fonction de répartition complémentaire $R(x,y,z,t)$ (ou sa réponse impulsionnelle $h(x,y,z,t)$);
- les paramètres hémodynamiques tels que *BF, MTT* et *BV ;*
- l'entrée du système $c_a(x,y,z,t)$ ou sa sortie $c_v(x,y,z,t)$.

Ce problème se ramène à un problème classique d'estimation de paramètres à traiter par exemple par la méthode du maximum de vraisemblance, la méthode des moindres carrés ou la méthode de Bayes, si on dispose de modèles paramétriques théoriques pour la fonction d'entrée artérielle $c_a(x,y,z,t)$ et la fonction de répartition complémentaire $R(x,y,z,t)$.

On dispose effectivement de modèles paramétriques éprouvés pour les fonctions d'entrée artérielles tels que les modèles Gamma (*Gamma-variate* suivant une terminologie anglo-saxonne). Cependant, on peut réécrire le modèle de la perfusion de Meier et Zierler, sous la forme équivalente :

$$c\left(x,y,z,t\right) = \frac{BF\left(x,y,z\right)}{\lambda\left(x,y,z\right)} \cdot \left[\lambda\left(x,y,z\right) \cdot c_a\left(x,y,z,t\right)\right] \otimes R\left(x,y,z,t\right)$$

pour tout $\lambda(x,y,z)$, non nul. Il est donc nécessaire d'ajouter une contrainte dans le modèle paramétrique de $c_a(x,y,z,t)$ permettant de fixer la constante $\lambda(x,y,z)$ pour tous les voxels l'intérêt, sans quoi, on peut seulement estimer le produit $BF(x,y,z) \cdot c_a(x,y,z,t)$ mais pas chacun de ses termes. Par exemple, une telle contrainte peut être

$$\forall (x,y,z), \quad \int_0^{+\infty} c_a(x,y,z,t)\,dt = c_0$$

Le problème est alors double. D'une part, on voit mal comment démontrer qu'une telle contrainte doit forcément être vérifiée. D'autre part, les fonctions d'entrée artérielles locales n'étant pas observables dans le cadre du modèle de la perfusion de Meier et Zierler puisque non spatialement localisées, il est impossible de s'assurer a posteriori si une telle contrainte est vérifiée ou pas et, par conséquent, de s'assurer de la pertinence des estimations des paramètres en résultant.

Pour cette raison, il est coutume d'éluder le problème de l'estimation des fonctions d'entrée artérielles locales pour chaque voxel d'intérêt en les supposant connues, données a priori. Diverses approches ont donc été proposées afin de fournir ces fonctions.

Dans une première approche, une fonction d'entrée artérielle globale expérimentale est choisie manuellement par le praticien. Elle peut être mesurée, par exemple, au niveau de l'artère sylvienne controlatérale ou de l'artère carotide interne pour l'imagerie de perfusion du cerveau, ou obtenue par des mesures supplémentaires, par exemple optiques. Si elle permet d'obtenir des signaux avec hauts rapports signal sur bruit, cette approche a néanmoins de nombreux inconvénients. Tout d'abord, elle nécessite une intervention humaine et/ou des mesures supplémentaires. Ceci n'est pas souhaitable en situation d'urgence clinique et rend les procédures et les résultats finaux plus difficilement reproductibles. Ensuite et surtout, cette fonction d'entrée artérielle globale ne correspond pas aux fonctions d'entrée artérielles locales pour chaque voxel. Elle en diffère en termes de délai (car les fonctions d'entrée artérielles locales sont en général en retard par rapport à la fonction d'entrée artérielle globale souvent prise en amont du système vasculaire) et de dispersion (car la propagation de l'agent de contraste est plus lente en aval qu'en amont du système vasculaire, de sorte que les fonctions d'entrée artérielles sont plus étalées, plus dispersées en aval du système vasculaire). Or on sait que ces phénomènes ont au final une incidence considérable sur les estimations des paramètres hémodynamiques puisque, par symétrie du produit de convolution, ces défauts se répercutent directement dans l'estimation de la fonction de répartition complémentaire. Ainsi, par exemple, on n'obtient pas au final une estimation du véritable temps de transit moyen $MTT$ entre la fonction d'entrée artérielle locale et la fonction de sortie veineuse locale mais seulement un temps de transit moyen entre la fonction d'entrée artérielle globale et la fonction de sortie veineuse locale. Afin de pallier ces discordances, certains auteurs ont introduit de nouveaux paramètres dans le modèle de Meier et Zierler tels que le paramètre $TMAX = \mathrm{argmax}_t\, R(t)$ quantifiant le délai entre la fonction d'entrée artérielle globale et la fonction d'entrée artérielle locale, quand bien même ils n'interviennent pas dans le modèle de perfusion standard original (dans lequel la fonction d'entrée artérielle est censée être la véritable fonction d'entrée artérielle locale pour chaque voxel). D'autres méthodes tendent à minimiser l'influence des différences entre fonctions d'entrée artérielles globale et locales sur l'estimation des paramètres hémodynamiques. Elles introduisent toutefois de nouvelles inconnues dans le problème global et ne font, comme nous allons le voir, que l'éluder.

Selon une deuxième approche, une fonction d'entrée artérielle globale est obtenue automatiquement à partir d'images de perfusion via des techniques de traitement du signal telles que le partitionnement de données ou l'analyse en composantes indépendantes (*Independent Component Analysis* - ICA - selon une terminologie anglo-saxonne). Si cette approche permet de s'affranchir de l'intervention humaine, elle ne résout pas les problèmes de délai et de dispersion inhérents aux fonctions d'entrée artérielles globales et introduit de nouvelles inconnues (e.g. il se peut qu'on obtienne des fonctions de sortie veineuses au lieu des fonctions d'entrée artérielles). De plus ces fonctions sont souvent obtenues en moyennant plusieurs fonctions d'entrée artérielles prises à différents endroits, de sorte qu'elles ne sont plus localisées dans l'espace et que par conséquent, elles n'ont plus de sens physique et physiologique.

Selon une troisième approche, des fonctions d'entrée artérielle locales sont obtenues automatiquement à partir d'images de perfusion à l'aide de techniques de traitement du signal et de critères de sélection. On recherche par exemple la « meilleure » fonction dans le voisinage du voxel tissulaire courant où l'on souhaite estimer les paramètres hémodynamiques. L'objet de cette troisième approche est à nouveau d'obtenir au final des estimations moins biaisées et plus précises en s'affranchissant, du moins en partie, des problèmes de délai et de dispersion. Cependant, rien ne garantit a *priori* et a *posteriori* que les fonctions d'entrée artérielle locales ainsi obtenues sont « proches » de la « véritable fonction locale » pour le voxel d'intérêt. Par exemple, cette « véritable » fonction pourrait ne pas se situer dans le voisinage considéré (s'il est trop petit) ou, au contraire, pourrait être confondu avec une autre fonction d'entrée artérielle (s'il est trop grand). De plus, cette « meilleure » fonction d'entrée artérielle locale est recherchée parmi des fonctions d'entrée artérielle « normales » (i.e. avec un temps d'arrivée de l'agent de contraste court, une grande amplitude, etc.). Or, tout au contraire, on souhaiterait précisément identifier et distinguer fonctions d'entrée artérielles normales et fonctions d'entrée artérielles pathologiques, par exemple ischémiques. Par conséquent, même si les résultats finaux obtenus avec cette approche locale peuvent être apparemment « meilleurs » qu'avec les approches globales décrites précédemment, les incertitudes sur ces fonctions d'entrée artérielles locales, choisies parmi les plus normales, et, a fortiori, sur les estimations des paramètres hémodynamiques ou des fonctions de répartition complémentaires en résultant demeurent en grande partie.

Ces approches ne sont donc pas totalement satisfaisantes. De plus, si donc on peut supposer données a priori les fonctions d'entrée artérielles, pourquoi alors, par symétrie, ne pourrait-on ou ne devrait-on pas supposer les fonctions de sortie veineuses $c_v(x,y,z,t)$ également connues a priori ? Cela aurait au moins le mérite de simplifier grandement le problème de l'estimation des paramètres hémodynamiques puisqu'il n'y aurait plus besoin de déconvoluer les courbes de concentration par les fonction d'entrée artérielles. En effet, on pourrait directement ajuster le modèle de Meier et Zierler sous sa forme différentielle

$$\frac{\partial c(x,y,z,t)}{\partial t} = BF(x,y,z)\Big[ c_a(x,y,z,t) - c_v(x,y,z,t) \Big]$$

par exemple par la méthode des moindres carrés linéaires afin d'estimer $BF(x,y,z)$. Toutefois, si suivant la première approche décrite précédemment $c_a(x,y,z,t)$ et $c_v(x,y,z,t)$ sont fixées globalement pour tous les voxels d'intérêt, les $MTT$ seraient constants sur tous les voxels, de sorte qu'il n'y aurait plus qu'un seul paramètre hémodynamique $BF(x,y,z)$ par voxel. Eluder le problème de l'estimation des fonctions d'entrée artérielles locales entre en quelque sorte en contradiction avec le modèle de Meier et Zierler lui-même.

D'autre part, à l'inverse des fonctions d'entrée artérielle ou des fonctions de sortie veineuse, on ne peut disposer de modèles paramétriques éprouvés pour les fonctions de répartition complémentaire $R(t)$ car celles-ci ne sont, par définition, pas directement observables et testables. Or, des simulations numériques ont démontré que la moindre erreur de spécification sur la forme du modèle paramétrique de $R(t)$ (ou de $h(t)$) engendre des erreurs considérables et inacceptables sur les estimations des paramètres hémodynamiques tels que $BF$, $MTT$ ou $BV$. Pour cette raison, on a introduit diverses approches nonparamétriques au sein desquelles la forme des fonctions de répartition complémentaire n'est pas fixée a priori. Ainsi, le problème de l'estimation des paramètres hémodynamiques se ramène à un problème de déconvolution nonparamétrique des courbes de concentration par les fonctions d'entrée artérielles données.

Le problème de la déconvolution nonparamétrique étant intrinsèquement mal posé, il est alors nécessaire de régulariser les solutions d'une manière ou d'une autre en les contraignant à respecter certaines contraintes diverses et variées au demeurant. A nouveau, comme évoqué précédemment, il est impossible de vérifier a posteriori si de telles contraintes sont satisfaites ou non. Par conséquent, il est impossible de vérifier a posteriori si les estimations des paramètres en résultant sont valides ou pas. C'est la raison pour laquelle, de nombreuses méthodes de déconvolution existent, fournissant des estimations de paramètres hémodynamiques elles-mêmes potentiellement fort différentes. Ces méthodes présentent de nombreux défauts théoriques (conduisant par exemple à l'obtention d'estimations en contradiction avec le modèle de perfusion théorique) et engendrent de nombreuses difficultés pratiques (notamment la détermination des paramètres de régularisation) qu'il serait trop long de décrire ici. En découle une absence de consensus dans le choix de telle ou telle méthode, empêchant une standardisation du post-traitement de la tomographie par agent de contraste, notamment médicale.

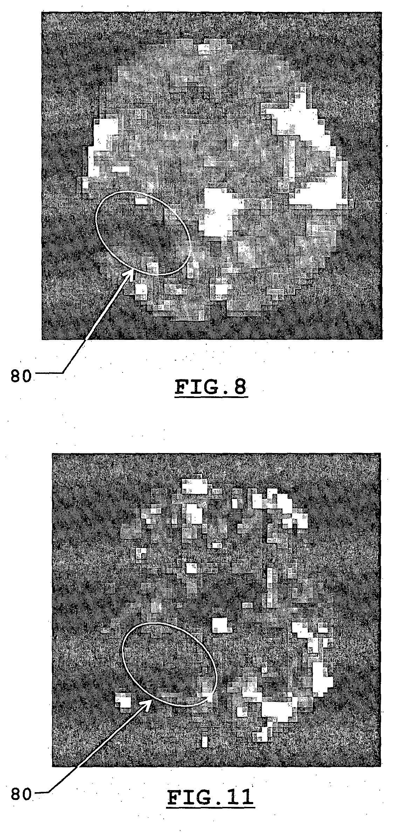

A titre d'exemple, la figure 8 illustre une carte typique d'estimations du flux sanguin $BF$ obtenues par DSC-MR. Cette figure présente un cas d'ischémie cérébrale. On constate clairement une zone hypoperfusée 80 dans l'hémisphère droit correspondant au territoire vasculaire de l'artère occluse par un caillot sanguin.

Le modèle standard de la perfusion soulève en outre de nombreuses questions parmi lesquelles, nous pouvons mentionner:

- un flux étant défini à travers une surface, de quelle surface $BF(x,y,z)$ est-il le flux ?
- où sont spatialement localisées la fonction d'entrée artérielle $c_a(x,y,z,t)$ et la fonction de sortie veineuse $c_v(x,y,z,t)$ pour chaque voxel? En particulier, de quel trajet $MTT(x,y,z)$ est-il le temps de transit moyen ?
- est-il cohérent de définir un seul temps de transit moyen $MTT(x,y,z)$ pour chaque voxel quand bien même celui-ci n'est pas cubique ? Ne devrait-on pas définir au moins trois temps de transit moyen suivant les trois dimensions spatiales du voxel ?
- le flux sanguin $BF(x,y,z)$, le temps de transit moyen $MTT(x,y,z)$ et le volume sanguin $BV(x,y,z)$ ne devraient-ils pas dépendre de la taille du voxel ?

D'autre part, par rapport à l'imagerie de perfusion où on suppose que l'agent de contraste demeure intravasculaire, en imagerie de perméabilité, on considère qu'une partie dudit agent de contraste peut passer du milieu intravasculaire au milieu extravasculaire. Plusieurs modèles paramétriques connus permettent alors de décrire les courbes de concentration de l'agent de contraste dans chaque voxel, parmi lesquels :

- le modèle de Kety qu'on écrit généralement sous la forme différentielle :

$$\frac{\partial c(x,y,z,t)}{\partial t} = K_{Trans}(x,y,z) \cdot c_p(x,y,z,t) - k_{ep}(x,y,z) \cdot c(x,y,z,t)$$

ou sous la forme intégrale :

$$c(x,y,z,t) = K_{Trans}(x,y,z) \cdot c_p(x,y,z,t) \otimes \exp\left\lfloor -k_{ep}(x,y,z)t \right\rfloor$$

- le modèle de Kety-Tofts ou de Tofts-Kermode étendu qu'on écrit généralement sous la forme intégrale :

$$c(x,y,z,t) = v_p(x,y,z) \cdot c_p(x,y,z,t) + K_{Trans}(x,y,z) \cdot c_p(x,y,z,t) \otimes \exp\left\lfloor -k_{ep}(x,y,z)t \right\rfloor$$

- le modèle de St Lawrence et Lee qu'on écrit généralement sous la forme intégrale :

$$c(x,y,z,t) =$$
$$F(x,y,z) \cdot c_p(x,y,z,t) \otimes \left\{ \chi_{[0,Tc]}(t) + \chi_{]T_c,+\infty[}(t) E(x,y,z) \exp\left[ -\frac{F(x,y,z)E(x,y,z)}{v_e(x,y,z)}(t - T_c(x,y,z)) \right] \right\}$$

où :

- $c_p(x,y,z,t)$ désigne dans tous les cas la concentration plasmatique de l'agent de contraste dans l'artère alimentant le volume de tissu contenu dans le voxel (*plasmatic arterial input function* - PIF - selon une terminologie anglo-saxonne);
- $\otimes$ désigne le produit de convolution de Volterra;
- $K_{Trans}$, $k_{ep}$, $v_p$, $F$, $E$, $v_e$, $T_c$... sont les paramètres respectifs des modèles.

Nous pouvons constater que les modèles de perméabilité sont mathématiquement assez similaires au modèle de la perfusion de Meier et Zierler sous sa forme intégrale (i.e. ce sont des modèles de convolution).

Par conséquent, ils soulèvent également bon nombre de questions d'ordre conceptuel, en particulier :

- un flux n'étant défini qu'à travers une surface, de quelles surfaces $K_{Trans}(x,y,z)$ ou $F(x,y,z)$ sont-ils les flux ?
- où est spatialement localisée la fonction d'entrée plasmatique $c_p(x,y,z,t)$ ?
- pourquoi la fonction de sortie veineuse $c_v(x,y,z,t)$ du modèle standard de la perfusion a-t-elle disparu dans les modèles de perméabilité, alors que le fait que le sang n'est désormais plus forcément confiné au système vasculaire n'implique pas forcément qu'il n'existe plus de sortie veineuse ?
- puisque la perfusion intravasculaire n'est qu'un cas particulier de la perméabilité, lorsque celle-ci est nulle, pourquoi le modèle de la perfusion de Meier et Zierler n'est-il pas un cas particulier des différents modèles de perméabilité ? Pourquoi, au contraire, inclut-il les différents modèles de perméabilité paramétriques comme cas particuliers puisque la fonction de répartition complémentaire n'est pas spécifiée ? Les modèles de perfusion et de perméabilité sont-ils seulement mutuellement compatibles ? Comment peut-on les unifier?

En imagerie de perméabilité, on rencontre également le même type de difficultés pratiques qu'en imagerie de perfusion. En particulier, il conviendrait d'estimer localement les fonctions d'entrée plasmatiques $c_p(x,y,z,t)$ en ajoutant une contrainte afin de rendre le problème bien déterminé. Or, à nouveau, cette contrainte ne pouvant être vérifiée par l'expérience, il est coutume de donner a priori cette ou ces fonctions d'entrée plasmatique comme évoqué précédemment.

En outre, contrairement au modèle de la perfusion de Meier et Zierler, les modèles de perméabilité sont paramétriques. Comme évoqué précédemment, on sait que si le modèle paramétrique du noyau de convolution est inapproprié, on peut obtenir des estimations de paramètres hémodynamiques aberrantes. Ce problème est particulièrement épineux dans le cadre du modèle de Saint Lawrence et Lee. Ce dernier est souvent préféré aux modèles de Kety et Kety-Tofts-Kermode car il permet de séparer les phases intravasculaire (sur l'intervalle de temps $[0, T_c]$) et extravasculaire (sur l'intervalle de temps $]T_c,+\infty[$). Toutefois, le noyau de convolution intravasculaire est supposé constant sur $[0,T_c]$. Cette hypothèse implique entre autre (par analogie avec le modèle de la perfusion de Meier et Zierler) que le temps de transit intravasculaire est toujours strictement égal à $T_c$ (i.e. que $h(t) = \delta(t\text{-}T_c)$ où $\delta()$ est la fonction généralisée de Dirac). Cela revient à exprimer, en particulier, qu'il n'existe qu'un seul chemin microcapillaire (par opposition au bain capillaire) entre l'entrée artérielle et la sortie veineuse. Or, cette hypothèse est hautement improbable. De plus, le noyau de convolution est fortement discontinu à l'instant $t = T_c$ puisqu'il passe de 1 pour $t{\leq}T_c$ à $E$ pour $t{>}T_c$. On devrait pourtant s'attendre, en vertu du Principe de Continuité, à une transition douce entre les phases intravasculaire et extravasculaire.

Les nombreuses difficultés tant conceptuelles que techniques inhérentes aux modèles de perfusion et de perméabilité suivant l'état de l'art, laissent donc à penser qu'ils sont, d'une certaine manière, inadaptés bien qu'utilisés depuis fort longtemps et d'utilité clinique établie. Afin de mettre en évidence l'origine de cette insuffisance théorique, commençons par rappeler quelques notions de Cinématique des Fluides.

Considérons un écoulement tridimensionnel dans un système cinématique tel qu'un organe par exemple. Fixons un référentiel Galiléen $(O,\vec{x},\vec{y},\vec{z})$ typiquement immobile par rapport à cet organe, suite à titre d'exemple à la mise en oeuvre d'une phase de pré-recalage temporel rigide (e.g. correction de mouvement) ou non-rigide (e.g. pour les organes élastiques tels que le foie ou le coeur). Soit $\vec{v}(x,y,z,t)$ le champ de vecteur vitesse Eulérien à l'instant $t$ au point de coordonnées $(x,y,z)$. Soit $\Sigma$ une surface de contrôle orientée donnée, de vecteur surface local unitaire $\vec{d\Sigma}$.

Le flux ou débit volumique $\Phi_\Sigma^v(t)$ (volumetric flow (rate), suivant une terminologie anglo-saxonne) à travers

$$\Phi_\Sigma^v(t) = \iint_\Sigma \vec{v}(x,y,z,t)\cdot\vec{d\Sigma} \qquad\qquad \Phi_\Sigma^v(t) = \frac{\partial V_\Sigma}{\partial t}(t)$$

la surface $\Sigma$ à l'instant $t$ est défini par $\qquad\qquad$ ou, de manière équivalente, par $\qquad\qquad$ où $V_\Sigma(t)$ est le volume traversant la surface $\Sigma$ dans l'intervalle de temps $[t,t+\partial t]$.

Pour une surface $\Sigma$ fermée orientée sortante, le théorème de divergence de Green-Ostrogradsky s'écrit :

$$\Phi_\Sigma^v(t) = \oiint_\Sigma \vec{v}(x,y,z,t)\cdot\vec{d\Sigma} = \iiint_V \vec{\nabla}\cdot\vec{v}(x,y,z,t)\,dx\,dy\,dz$$

où $V$ est le volume délimité par $\Sigma$. Pour un écoulement incompressible, homogène ou inhomogène, nous avons par définition $\vec{\nabla}\cdot\vec{v}(x,y,z,t)=\mathrm{div}\,\vec{v}(x,y,z,t)\equiv0$.

Par application du théorème de divergence de Green-Ostrogradsky, il s'ensuit que le flux volumique d'un écoulement incompressible à travers une surface orientée fermée est nul.

Pour un écoulement stationnaire ou permanent, les différentes quantités définies précédemment sont indépendantes du temps.

Tâchons à présent d'établir le modèle standard de la perfusion de Meier et Zierler à partir de ces notions élémentaires. Pour cela, considérons l'écoulement d'un fluide incompressible transportant un agent de contraste. Soit $m(x,y,z,t)$ la masse d'agent de contraste dans le voxel de coordonnées $(x,y,z)$ et de volume $V$ et

$$c(x,y,z,t) = \frac{m(x,y,z,t)}{V}$$

la concentration massique dudit agent.

Considérons, dans le cadre du modèle de Meier et Zierler, une surface fermée orientée sortante $\Sigma$ fixe par rapport au référentiel Galiléen $(O,\vec{x},\vec{y},\vec{z})$, constituée d'une et une seule surface entrante $\Sigma_E$ et d'une et une seule surface sortante $\Sigma_S$. Soit $\Sigma_R$ la surface restante : on a donc $\Sigma=\Sigma_E\cup\Sigma_S\cup\Sigma_R$. On peut voir $\Sigma$ comme la surface d'un tuyau ou d'un tube, $\Sigma_E$ étant la section d'entrée du tuyau, $\Sigma_S$ la section de sortie du tuyau et $\Sigma_R$ la surface du tuyau proprement dite.

Soit $\Phi_{\Sigma_E}^v(t)$, $\Phi_{\Sigma_S}^v(t)$ et $\Phi_{\Sigma_R}^v(t)$ les flux volumiques à travers les surface $\Sigma_E$, $\Sigma_S$ et $\Sigma_R$ respectivement à l'instant $t$. Par application du théorème de divergence de Green-Ostrogradsky pour un écoulement incompressible et additivité, nous avons d'une part :

$$\Phi_\Sigma^v(t) = \oiint_\Sigma \vec{v}(x,y,z,t)\cdot\vec{d\Sigma} = \iint_{\Sigma_E} \vec{v}(x,y,z,t)\cdot\vec{d\Sigma} + \iint_{\Sigma_S} \vec{v}(x,y,z,t)\cdot\vec{d\Sigma} + \iint_{\Sigma_R} \vec{v}(x,y,z,t)\cdot\vec{d\Sigma}$$

$$= \Phi_{\Sigma_E}^v(t) + \Phi_{\Sigma_S}^v(t) + \Phi_{\Sigma_R}^v(t) = 0$$

et d'autre part $\Phi_{\Sigma_R}^{v}(t) \equiv 0$ puisque la vitesse est nulle sur $\Sigma_R$, de sorte que $\Phi_{\Sigma_S}^{v}(t) = -\Phi_{\Sigma_E}^{v}(t) \equiv \Phi(t)$. On peut donc définir un et un seul flux volumique total non nécessairement nul $\Phi(t)$ à l'instant $t$ pour un tel système.

De manière générale, nous pouvons supposer que le fluide inhomogène dans un voxel d'intérêt est constitué d'un fluide occupant l'espace extravasculaire (*extravascular fluid - EF -* suivant une terminologie anglo-saxonne) c'est-à-dire l'interstitium, d'un fluide occupant l'espace intravasculaire (*intravascular fluid - IF -* suivant une terminologie anglo-saxonne) c'est-à-dire le sang ainsi que de vaisseaux sanguins (blood vessels - *BV -* suivant une terminologie anglo-saxonne) eux-mêmes. Par additivité, nous avons donc :

$$\Phi(t) = \Phi^{IF+EF+BV}(t) = \Phi^{IF}(t) + \Phi^{EF}(t) + \Phi^{BV}(t)$$

Puisque l'on suppose, dans le cadre du modèle de Meier et Zierler, que l'artère alimentant le voxel et la veine le drainant ne contiennent que du sang intravasculaire, on a *de facto* $\Phi^{EF}(t) = \Phi^{BF}(t) \equiv 0$ de sorte que $\Phi(t) = \Phi^{IF}(t)$.

En supposant de plus les vaisseaux immobiles par rapport au voxel, le volume intravasculaire est constant au cours du temps : $V^{IF}(t) = V^{IF}$.

Le sang étant lui-même constitué du plasma (**P**) transportant l'agent de contraste ainsi que des éléments figurés (*blood cells - **C** -* suivant une terminologie anglo-saxonne), on a encore :

$$\Phi(t) = \Phi^{IF}(t) = \Phi^{P}(t) + \Phi^{C}(t)$$

Ecrivons à présent le bilan de masse de l'agent de contraste dans le système délimité par $\Sigma$ pendant un laps de temps infinitésimal $[t, t+\partial t]$.

La variation de la masse de l'agent de contraste s'écrit :

$$\partial m(t) = \partial \left[ V \cdot c(t) \right] = V \cdot \partial c(t) = m_E(t) - m_S(t)$$

où :

- $V$ est la mesure du volume délimité par la surface de contrôle fermée $\Sigma$ ;
- $m_E(t)$ est la masse d'agent de contraste entrante par la surface $\Sigma_E$;
- $m_S(t)$ est la masse d'agent de contraste sortante par la surface $\Sigma_S$.

En supposant l'agent de contraste uniformément dilué dans le fluide le transportant (i.e. le plasma), de sorte que la masse est proportionnelle au volume, nous avons par définition :

$$m_E(t) = V_E(t) \cdot c_E(t) = c_E(t) \cdot \frac{\partial V_E}{\partial t}(t) \cdot \partial t = c_E(t) \cdot \Phi_E(t) \cdot \partial t$$

où $V_E(t)$ est le volume de plasma entrant par $\Sigma_E$ dans l'intervalle de temps $[t, t+\partial t]$, $c_E(t)$ est la concentration massique plasmatique de l'agent de contraste et $\Phi_E(t)$ son flux volumique à travers $\Sigma_E$. De même : $m_S(t) = V_S(t) \cdot c_S(t) = c_S(t) \cdot \Phi_S(t) \cdot \partial t$.

Puisque la concentration massique de l'agent de contraste dans un volume $V$ de l'artère alimentant le système délimité par $\Sigma$ vaut par hypothèse $c_a(t)$, nous avons $c_E(t) = \dfrac{c_a(t) \cdot V}{V_{AIF}^{P}}$ où $V_{AIF}^{P}$ est le sous-volume de plasma contenu dans un volume de mesure $V$ de l'artère. De la même manière, la concentration de l'agent de contraste dans le plasma sortant du système délimité par $\Sigma$ est $c_S(t) = \dfrac{c(t) \cdot V}{V^{P}}$ où $V^{P}$ est le sous-volume de plasma contenu dans le volume délimité par $\Sigma$, non pas $c_S(t) = \dfrac{c_v(t) \cdot V}{V_{VOF}^{P}}$ où $V_{VOF}^{P}$ est le volume de plasma contenu dans un volume de mesure $V$ de la veine drainant le système délimité par $\Sigma$.

Nous avons donc:

$$\partial m(t) = V \cdot \partial c(t) = m_E(t) - m_S(t) =$$

$$\left[ \frac{c_a(t) \cdot V}{V_{\mathrm{AIF}}^{\mathrm{P}}} \cdot \Phi_E(t) - \frac{c(t) \cdot V}{V^{\mathrm{P}}} \cdot \Phi_S(t) \right] \cdot \partial t$$

Supposons de plus - dans le cadre du modèle de Meier et Zierler - que le ratio $\dfrac{\Phi^{\mathrm{C}}(t)}{\Phi^{\mathrm{IF}}(t)}$ est partout constant et égal à la fraction d'hématocrite *Ht*. Nous avons donc $\Phi^{\mathrm{P}}(t) = (1-Ht)\cdot\Phi^{\mathrm{IF}}(t)$, $\Phi^{\mathrm{C}}(t) = Ht\cdot\Phi^{\mathrm{IF}}(t)$ et

$$\Phi(t) = \Phi^{\mathrm{IF}}(t) = \Phi^{\mathrm{P}}(t) + \Phi^{\mathrm{C}}(t) = \Phi^{\mathrm{P}}(t) + Ht \cdot \frac{\Phi^{\mathrm{P}}(t)}{1-Ht} = \frac{1}{1-Ht} \cdot \Phi^{\mathrm{P}}(t)$$

de sorte qu'il existe un unique flux plasmatique $\Phi^{\mathrm{P}}(t)$ signé entrant par $\Sigma_E$ et sortant par $\Sigma_S$ tel que

$$\Phi_E(t) = \Phi_S(t) = \Phi^{\mathrm{P}}(t) = \Phi(t) \cdot (1-Ht) .$$

Il s'ensuit que $\dfrac{\partial c}{\partial t}(t) = \Phi^{\mathrm{P}}(t) \cdot \left[ \dfrac{c_a(t)}{V_{\mathrm{AIF}}^{\mathrm{P}}} - \dfrac{c_v(t)}{V^{\mathrm{P}}} \right] .$

En supposant enfin que l'écoulement est permanent de sorte que $\Phi^{\mathrm{P}}(t) \equiv \Phi^{\mathrm{P}}$ il vient finalement :

$$\frac{\partial c}{\partial t}(t) = \Phi^{\mathrm{P}} \cdot \left[ c_a(t)/V_{\mathrm{AIF}}^{\mathrm{P}} - c(t)/V^{\mathrm{P}} \right]$$

A moins que $c_v(t) = c(t)$ et $V_{\mathrm{AIF}}^{\mathrm{P}} = V^{\mathrm{P}}$, ce qui n'est pas nécessairement le cas, ce modèle ne correspond pas au modèle différentiel de Meier et Zierler $\dfrac{\partial c}{\partial t}(t) = BF \cdot \left[ c_a(t) - c_v(t) \right]$ mais, tout au contraire, au modèle de per-méabilité différentiel de Kety $\dfrac{\partial c}{\partial t}(t) = K^{\mathrm{trans}} \cdot c_a(t) - k_{\mathrm{ep}} \cdot c(t)$ si l'on pose $K^{\mathrm{trans}} = \dfrac{\Phi^{\mathrm{P}}}{V_{\mathrm{AIF}}^{\mathrm{P}}}$ et $k_{\mathrm{ep}} = \dfrac{\Phi^{\mathrm{P}}}{V^{\mathrm{P}}}$ .

Nous pouvons constater ainsi que le modèle de Meier et Zierler ne peut s'appliquer à un écoulement dont le sens global est connu a priori. En effet, la concentration sortante de l'agent de contraste doit alors être fonction de la concentration *c*(*t*) dans le volume délimité par $\Sigma$ et non pas fonction de la concentration $c_v(t)$ dans la veine drainant ce système qui ne joue aucun rôle.

Le modèle de Meier et Zierler ne peut donc s'appliquer tout au plus qu'à un écoulement dont le sens global n'est pas connu a priori. Or, le fait même de nommer, et a fortiori de spécifier, fonction d'entrée artérielle et fonction de sortie veineuse les courbes de concentration respectives $c_a(t)$ et $c_v(t)$ ou encore le fait de supposer *BF* positif implique qu'on suppose le sens global de l'écoulement connu a priori, de l'artère vers la veine.

De plus, si le sens de l'écoulement est inconnu a priori, le modèle cinétique est alors constitué par deux modèles a priori équiprobables, conditionnés par la direction globale de l'écoulement ou, de manière équivalente par le signe du flux volumique $\Phi^{\mathrm{P}}$:

$$M: \begin{cases} M|\Phi^P \geq 0 : \dfrac{\partial c(t)}{\partial t} = \Phi^P \left[ c_a(t)/V_{\mathrm{AIF}}^P - c(t)/V^P \right] \\[3mm] M|\Phi^P < 0 : \dfrac{\partial c(t)}{\partial t} = -\Phi^P \left\{ c_v(t)/V_{\mathrm{VOF}}^P - c(t)/V^P \right\} \end{cases}$$

Ce modèle ne correspond toujours pas au modèle standard de la perfusion de Meier et Zierler. Il s'ensuit que ce modèle n'est pas applicable à aucun cas de figure et qu'il doit être remplacé par le modèle de type Kety établi précédemment dans le cas ou le sens de l'écoulement est connu a priori.

Partant de la définition du flux volumique en Cinématique des Fluides, du théorème de divergence de Green-Ostrogradsky pour un écoulement incompressible et du principe de conservation de la masse, nous avons donc établi un modèle différentiel cinétique local de type Kety pour un écoulement d'un agent de contraste intravasculaire de type tuyau dont le sens est connu a priori.

Nous pouvons ainsi conclure que ce modèle s'applique tout au plus à un écoulement dans un tuyau ou un tube ayant un et un seul orifice d'entrée et un et un seul orifice de sortie. Cela est nécessaire afin de pouvoir définir un et un seul flux volumique non nécessairement nul $\Phi(t)$ pour ce système puis un et un seul flux plasmatique $\Phi^P(t)$, le flux volumique total, entrant ou sortant, étant quant à lui nécessairement nul par hypothèse d'incompressibilité.

Or, en imagerie de perfusion ou de perméabilité, le modèle de perfusion de Meier et Zierler ou les modèles de perméabilité tel que le modèle de Kety sont utilisés pour décrire les phénomènes de transport d'un agent de contraste dans un voxel. Un tel voxel est un parallélépipède rectangle dont la surface fermée est constituée par ses six faces. De manière générale, on ne peut donc pas définir a priori ni une et une seule surface entrante pour un tel voxel ni une et une seule surface sortante, de sorte qu'on ne peut pas définir un et un seul flux volumique total non nécessairement nul $\Phi(t)$ pour ce voxel, comme le requière lesdits modèles. Au contraire, le théorème de divergence de Green-Ostrogradsky pour un écoulement incompressible implique que le flux volumique total, entrant ou sortant, à travers la surface fermée d'un tel voxel est nul.

Ainsi, le flux volumique plasmatique $\Phi^P$ du modèle de type Kety établi précédemment ne peut pas être le flux volumique plasmatique (à travers la surface fermée) d'un voxel puisqu'il est généralement non nul. Réciproquement, il n'est nul besoin d'estimer le flux volumique plasmatique (à travers la surface fermée) d'un voxel puisque celui-ci est nul sous les hypothèses du modèle de Meier et Zierler et du modèle de type Kety établi précédemment. Il s'ensuit que, de manière générale, tous ces modèles sont inadaptés à décrire les phénomènes de transport d'un agent de contraste dans un voxel puisqu'on y définit un et un seul flux non nul alors que le flux (à travers la surface fermée) d'un voxel est nul. Par conséquent, ils ne sauraient constituer des modèles de perfusion ou de perméabilité admissibles du point de vue de la Cinématique des Fluides.

Autrement dit, si $\Phi^P$ est bien un flux au sens de la Mécanique, alors il est forcément pris à travers une surface ouverte du voxel car généralement non nul. Donc, tant que cette surface n'est pas donnée, définie, c'est-à-dire localisée dans l'espace et dans le temps, cette quantité ne sera pas un flux au sens de la Mécanique. Puisqu'elle ne peut pas être définie, il faut bien admettre que $\Phi^P$, et a fortiori le paramètre $BF$ du modèle standard de la perfusion, sont tout sauf des flux. De toute manière, la dimension physique de $BF$ dans le modèle de Meier et Zierler est $T^{-1}$, de sorte que $BF$ ne peut pas être un flux volumique de dimension $L^3T^{-1}$ ou un flux massique de dimension $MT^{-1}$.

Le modèle de type Kety établi précédemment peut-il cependant décrire un écoulement d'un agent de contraste intravasculaire dans un voxel dans certains cas particuliers ?

Supposons donc que l'écoulement dans le voxel soit du type de celui envisagé par Meier et Zierler : écoulement de type tuyau comportant une et une seule surface entrante $\Sigma_E$ et une et une seule surface sortante $\Sigma_S$. C'est typiquement le cas lorsque le voxel contient un seul vaisseau sanguin dont la section est petite par rapport aux dimensions du voxel. Supposons de plus le sens de l'écoulement connu a priori.

Peut-on alors appliquer le modèle de type Kety? On le pourrait si et seulement si lesdites surfaces entrante et sortante étaient connues, données a priori. En effet, un flux volumique au sens de la Mécanique des Fluides est défini à travers une surface donnée. On ne peut pas définir un flux volumique à travers une surface virtuelle car la Mécanique traite uniquement de grandeurs physiques, donc réelles. Or en général, on ne connaît pas a priori, en tout cas pas précisément, ces surfaces entrante et sortante (i.e. on ne connaît pas a priori, en tout cas pas précisément, ni la position ni l'orientation des vaisseaux sanguins) surtout si on dispose uniquement des images de perfusion ou de perméabilité qu'il s'agit justement de traiter afin d'en extraire l'information disponible. Tout au contraire, on souhaiterait pouvoir déterminer a posteriori si ces surfaces existent et, si tel est le cas, déterminer alors leurs orientations. Donc le modèle de type Kety ne s'applique pas non plus à un écoulement de type tuyau à moins que celui-ci (i.e. les surfaces $\Sigma_E$, $\Sigma_S$ et $\Sigma_R$) ne soit donné a priori.

Supposons maintenant que le tuyau et ses sections entrante et sortante soient donnés a priori. On ne peut alors appliquer le modèle de type Kety que dans certains cas très particuliers, à savoir que lorsque lesdites surfaces entrante et sortante sont chacune situées sur au plus une des six faces du voxel. En effet, d'une part le modèle de type Kety (ou de Meier et Zierler) suppose que les concentrations de l'agent de contraste sont spatialement uniformes dans le voisinage extérieur immédiat des surfaces entrante et sortante, égales à $c_a(t)$ et $c_v(t)$ respectivement. D'autre part, on mesure les concentrations supposées uniformes de l'agent de contraste dans les six voxels voisins du voxel courant. Or ces concentrations ne sont pas a priori égales entre elles. Donc, si les surfaces entrante et sortante sont constituées de plusieurs faces du voxel, on se retrouve à supposer égales des concentrations qui ne le sont pas forcément expérimentalement. Il y a contradiction.

On voit donc que le modèle de type Kety ne peut s'appliquer que dans le cas d'un écoulement de type tuyau, et uniquement lorsque ledit tuyau est donné a priori et que ses sections entrante et sortante reposent chacune sur une et une seule des six faces du voxel. D'autre part, en vertu du Principe de Localité de la Physique Classique, la courbe de concentration $c_a(t)$ doit être prise dans le voisinage extérieur immédiat de l'entrée du tuyau suivant Meier et Zierler. Or, à supposer que ledit tuyau existe, ce n'est souvent pas le cas, en particulier lorsqu'on utilise une fonction d'entrée artérielle globale spatialement séparée du voxel courant comme expliqué précédemment.

Enfin, il faut garder à l'esprit que le tuyau suivant Meier et Zierler doit être contenu dans le voxel ou de manière plus générale dans le volume élémentaire défini par la technique de mesure tomographique exploitée. En particulier la surface $\Sigma_R$ du tuyau doit être contenue dans le volume du voxel afin que le flux à travers la surface du voxel privée de $\Sigma_E$ et $\Sigma_S$ soit nul. Cela implique que la section des vaisseaux-tuyaux doit être plus petite que les dimensions du voxel, ce qui constitue une contrainte clairement violée pour les gros vaisseaux tels que les artères ou les veines étant données les dimensions typiques actuelles des voxels de l'ordre du millimètre. Si ce n'est pas le cas, c'est-à-dire si la section du tuyau est répartie sur plusieurs voxels adjacents, il faut supposer que l'écoulement est parallèle aux faces du voxel (ou des hypothèses encore plus improbables) afin à nouveau que le flux à travers ces faces soit nul. Or cette condition géométrique a pour probabilité zéro.

Le modèle de type Kety (et a fortiori celui de Meier et Zierler) n'est donc pas adapté pour décrire les phénomènes de transport d'un agent de contraste dans les principaux cas d'intérêt. Il en va de même pour les autres modèles de perfusion connus, en particulier les modèles utilisés en ASL, CTP et DSC-MR puisque, en tant qu'ils ne définissent qu'une seule entrée ou qu'un seul « flux » par voxel, ils supposent également implicitement un écoulement de type tuyau.

Il en va encore de même avec les modèles de perméabilité classiques, qu'il s'agisse des modèles utilisés en DCE-MR et DCE-CT tels que les modèles de Kety proprement dit, de Kety-Tofts-Kermode étendu et de St Lawrence et Lee, ou des modèles utilisés en SPECT et PET puisqu'ils définissent également un et un seul « flux » ($K_{Trans}$ pour les modèles de Kety et Kety-Tofts-Kermode, $F$ pour le modèle de Saint Lawrence et Lee, $CBF$ en PET et SPECT) et reposent sur une unique fonction d'entrée artérielle plasmatique.

On comprend donc ainsi les limites fondamentales sous-tendant les modèles de perfusion et de perméabilité connus : une application illégitime du Principe de Conservation de la Masse à des systèmes virtuels, i.e. des tuyaux, au lieu de l'application légitime du même principe aux systèmes physiques donnés a priori par les techniques d'imagerie tomographiques, i.e. les voxels.

La présente invention permet de répondre aux limites et de résoudre les inconvénients induits par la mise en oeuvre des méthodes connues, en proposant des modèles, par exemple de perfusion ou de perméabilité, déduits de la Cinématique des Fluides, et non pas en contradiction avec elle.

Parmi les nombreux avantages conférés par l'invention, nous pouvons citer, de manière non limitative, le fait de:

- réconcilier notamment les techniques d'imagerie de perfusion et de perméabilité avec la Mécanique des Fluides, en particulier avec le Principe de Localité et le Principe de Conservation de la Masse ;
- unifier notamment les techniques d'imagerie de perfusion et de perméabilité dans un même cadre théorique ;
- permettre une estimation de flux volumiques et de sous-volumes au sens de la Mécanique des Fluides et ainsi prévenir toute estimation douteuse de flux sans surface, de temps de transit moyens sans point de départ ni point d'arrivée et indépendants de la dimension des voxels (volumes élémentaires définis par la technique de mesure tomographique exploitée) ;
- permettre une meilleure compréhension des phénomènes liés à un écoulement au sein d'un système cinématique tel que la circulation sanguine au sein d'un organe par exemple au moyen de l'imagerie tomographique (de perfusion, de perméabilité notamment) ;
- connaître les limites d'application d'un procédé conforme à l'invention en explicitant les hypothèses sur lesquelles repose tout modèle rigoureusement démontré ;
- supprimer toutes hypothèses superflues ou indésirables telles que par exemple l'hypothèse LTI, la négligence des flux interstitiels dans le modèle de Meier et Zierler et de type Kety, etc. ;
- ne plus avoir recours à des concepts virtuels, obscurs voire douteux tels que les fonctions d'entrée artérielle et les fonctions de sortie veineuse locales mais non localisées, les réponses impulsionnelles et de répartition complémentaires les reliant, les phénomènes de délai et de dispersion, etc. ;
- supprimer de nombreux faux problèmes tels que la détermination ou l'estimation des fonctions d'entrée artérielle ou de sortie veineuse locales ou globales mais non localisées, la gestion des phénomènes de délai et de dispersion, de volumes partiels, etc. ;

- délivrer des estimations de quantités d'intérêt tels que des flux volumiques ou des sous-volumes de fluides transportant un agent de contraste quasi-absolues quelle que soit la technique d'imagerie employée ;
- définir des modèles par exemple de perfusion et de perméabilité tridimensionnels simples et complets, ne nécessitant l'introduction d'aucune quantité externe ;
- produire des estimations de quantité d'intérêt telle que des flux volumiques ou des volumes de manière automatique, sans recours à une quelconque intervention humaine, de sorte à accroître la reproductibilité et donc la confiance dans ladite estimation ;
- rendre comparables des estimations d'un même paramètre provenant de différentes modalités d'imagerie, de différents équipements ou de différentes conditions expérimentales ;
- faciliter les études cliniques multicentriques ;
- faciliter et permettre de standardiser le post-traitement des données tomographiques tels que la segmentation des différentes parties d'un organe (e.g. matières blanche et grise pour le cerveau), la définition et la segmentation de zones pathologiques (e.g. coeur et pénombre ischémiques dans le cas des accidents vasculaires cérébraux, tumeurs cancéreuses), la reconnaissance de pathologies (e.g. gradation des tumeurs cancéreuses) ;
- produire et visualiser des lignes de courant, des trajectoires, des lignes d'émission en encore des lignes fluides, de sorte à obtenir de nouvelles techniques de tractographie et d'angiographie dynamique par tomographie par agent de contraste conventionnelle ;
- produire et visualiser de nouvelles quantités d'intérêt telles que des temps de parcours le long des trajectoires des fluides, des vitesses, des accélérations, des jerks ou des snaps particulaires, etc.
- accélérer notamment le processus de diagnostic, de pronostic, de prise de décision thérapeutique et de prise en charge des patients ;
- faciliter le diagnostic et le pronostic du praticien au bénéfice des patients ;
- permettre à la physiopathologie et à l'anatomopathologie de progresser sereinement sur des bases théoriques solides.

A ce titre, l'invention prévoit un procédé pour produire une estimation d'une quantité d'intérêt relative à un écoulement d'un fluide dans un système cinématique à partir de signaux expérimentaux délivrés par un système de mesure tomographique et reliés aux concentrations d'un agent de contraste au sein de volumes polyédriques donnés, ledit procédé étant mis en oeuvre par une unité de traitement. Selon l'invention, le procédé comporte une étape pour estimer ladite quantité d'intérêt à partir d'un modèle cinétique et paramétrique comportant une pluralité de paramètres dont un flux à travers une face d'un desdits volumes polyédriques donnés.

Selon un mode de réalisation préféré, l'invention prévoit que ledit modèle cinétique puisse comporter une pluralité de paramètres dont un flux à travers chaque face d'un desdits volumes polyédriques donnés.

Pour réduire les temps de traitement nécessaires à l'estimation de la quantité d'intérêt, le modèle cinétique et paramétrique peut avantageusement être exprimé sous la forme d'un modèle bilinéaire par morceaux en les flux volumiques à travers les faces d'un desdits volumes polyédriques donnés et les sous-volumes. L'étape pour estimer ladite quantité d'intérêt peut alors comporter une étape pour estimer les paramètres du modèle par une méthode des moindres carrés linéaires alternés.

Pour quantifier l'incertitude sur l'estimation de la quantité d'intérêt ou l'adéquation du modèle cinétique aux données expérimentales, le procédé peut comporter une étape pour produire une quantité complémentaire associée à la quantité d'intérêt estimée ou associée audit modèle cinétique.

Selon une application préférée, l'écoulement peut être celui d'un fluide corporel dans un organe d'intérêt.

Selon l'invention, la quantité d'intérêt peut être un flux à travers une face d'un volume polyédrique donné, un flux par unité de surface, un sous-volume dudit volume polyédrique donné, un vecteur vitesse d'écoulement, une vitesse d'écoulement, un temps de transit moyen local d'un volume polyédrique donné à l'un de ses voisins, un vecteur d'accélération particulaire, une accélération particulaire, un vecteur jerk particulaire, un jerk particulaire, un vecteur snap particulaire, un snap particulaire, un flux absolu ou quadratique total ou un flux absolu ou quadratique maximal. Ladite quantité d'intérêt estimée peut en outre être un champ de flux à travers des faces respectives de volumes polyédriques donnés, un champ de sous-volumes desdits volumes polyédriques donnés, un champ de vecteurs vitesse d'écoulement, un champ de vitesses d'écoulement, une position d'un point matériel du fluide, un champ de temps de transits moyens locaux d'un volume polyédrique donné à l'un de ses voisins, un champ de vecteurs accélération particulaire, un champ d'accélérations particulaires, un champ de vecteurs jerks particulaires, un champ de jerks particulaires, un champ de vecteurs snaps particulaires, un champ de snaps particulaires, un champ de flux absolus ou quadratiques totaux, un champ de flux absolus ou quadratiques maximaux ou un temps de propagation le long d'une trajectoire de l'écoulement. Dans ce cas, le procédé peut avantageusement comporter en outre une étape pour estimer une trajectoire, une ligne de courant, une ligne d'émission ou une ligne fluide à partir du champ de vecteurs vitesse préalablement estimé.

Pour faciliter le traitement d'un dispositif chargé de restituer une estimation voire pour pouvoir exporter ladite estimation, un procédé pour produire une estimation d'une quantité d'intérêt selon l'invention peut comporter en outre une étape pour produire un contenu représentant ladite quantité d'intérêt, ledit contenu étant destiné à être exploité par un dispositif de restitution idoine. Un tel procédé peut en outre comporter une étape pour délivrer le contenu préalablement produit.

L'invention permettant d'estimer des quantités d'intérêt inédites à ce jour, celle-ci concerne - selon un deuxième objet - un procédé de restitution d'une telle quantité d'intérêt relative à un écoulement d'un fluide corporel dans un organe à partir de signaux expérimentaux délivrés par un système de mesure tomographique et reliés aux concentrations d'un agent de contraste au sein de volumes polyédriques donnés. Un tel procédé est mis en oeuvre par un dispositif de restitution comportant une interface homme-machine. En particulier, certaines quantités d'intérêt sont désormais respectivement associées à une face d'un volume polyédrique. Pour une telle quantité d'intérêt, le procédé de restitution comporte une étape pour restituer par ladite interface homme-machine une représentation d'une face d'un volume polyédrique dépendant de la valeur de la quantité d'intérêt pour ladite face. En variante, l'étape pour restituer peut consister à restituer par ladite interface homme-machine une représentation d'une pluralité de faces d'un volume polyédrique dépendant des valeurs de la quantité d'intérêt pour lesdites faces. Cette étape peut également consister à restituer par ladite interface homme-machine une représentation d'un volume polyédrique dépendant de la valeur d'une quantité d'intérêt associée à une face du volume polyédrique.

Pour une quantité d'intérêt vectorielle associée à un volume polyédrique, l'étape pour restituer peut consister à restituer une flèche dont la longueur est proportionnelle à une norme de la quantité vectorielle associée audit volume et dont la direction est celle de ladite quantité.

En variante, ladite étape peut consister à restituer une représentation d'un volume polyédrique coloriée à partir de trois couleurs primaires dont les intensités respectives dépendent des composantes de la quantité vectorielle associée audit volume.

Avantageusement, un procédé d'estimation conforme à l'invention peut comporter une étape pour produire un une trajectoire, une ligne de courant, une ligne d'émission ou une ligne fluide. Pour pouvoir restituer un tel objet inédit, un procédé de restitution selon l'invention peut comporter une étape pour restituer par une interface homme-machine idoine une représentation d'un arc paramétré correspondant à la trajectoire ou la ligne de courant ou la ligne d'émission ou la ligne fluide. En outre, une représentation d'une position dans l'arc paramétré peut être coloriée à chaque instant avec une couleur dépendant de la valeur d'une quantité d'intérêt audit instant. L'invention prévoit également, que peut être restituée, à chaque instant, une représentation de la portion de l'arc paramétré parcouru jusqu'à cet instant.

L'invention prévoit en outre un procédé particulièrement inédit pour aider un praticien dans son diagnostic en restituant via une interface homme-machine d'un dispositif de restitution, une quantité d'intérêt relative à un écoulement d'un fluide corporel dans un organe à partir de signaux expérimentaux délivrés par un système de mesure tomographique et reliés aux concentrations d'un agent de contraste au sein de volumes polyédriques donnés. Un tel procédé comporte avantageusement une étape pour restituer par ladite interface homme-machine, une représentation choroplèthique d'un volume déformée par anamorphose suivant ladite quantité d'intérêt.

Pour pouvoir mettre en oeuvre un procédé d'estimation conforme à l'invention, celle-ci concerne une unité de traitement comportant des moyens de mémorisation, des moyens pour communiquer avec le monde extérieur, et des moyens de traitement. Les moyens pour communiquer d'une telle unité sont aptes à recevoir du monde extérieur des signaux expérimentaux délivrés par un système de mesure tomographique et reliés aux concentrations d'un agent de contraste au sein de volumes polyédriques donnés d'un système cinématique. Les moyens de mémorisation comportent des instructions exécutables par les moyens de traitement mettant en oeuvre un procédé pour estimer une quantité d'intérêt conforme à l'invention lorsqu'ils les exécutent.

L'invention prévoit qu'une telle unité de traitement puisse coopérer avec un dispositif de restitution pour délivrer à ce dernier une quantité d'intérêt estimée éventuellement formatée sous la forme d'un contenu.

A ce titre, un tel dispositif de restitution comporte des moyens de mémorisation, une interface homme-machine et des moyens pour communiquer avec le monde extérieur coopérant respectivement avec des moyens de traitement. Selon l'invention, les moyens pour communiquer sont aptes à recevoir du monde extérieur (par exemple depuis une unité de traitement) une quantité d'intérêt relative à un écoulement d'un fluide corporel dans un organe à partir de signaux expérimentaux délivrés par un système de mesure tomographique et reliés aux concentrations d'un agent de contraste au sein de volumes polyédriques donnés. L'interface homme-machine d'un tel dispositif est apte à restituer à un utilisateur une représentation de la quantité d'intérêt. Quant à eux, les moyens de mémorisation comportent des instructions exécutables par les moyens de traitement mettant en oeuvre un procédé de restitution lorsqu'ils les exécutent.

Dans le cas où une quantité d'intérêt - relative à un écoulement d'un fluide corporel dans un organe à partir de signaux expérimentaux délivrés par un système de mesure tomographique et reliés aux concentrations d'un agent de contraste au sein de volumes polyédriques donné - est estimée puis formatée sous la forme d'un contenu conformément à l'invention, les moyens pour communiquer d'un tel dispositif de restitution sont aptes à recevoir du monde extérieur ledit contenu. Les moyens de traitement du dispositif sont agencés pour, lire ledit contenu et commander l'interface homme-machine pour que cette dernière restitue la représentation de la quantité d'intérêt.

Il est en outre prévu un système d'analyse d'imagerie tomographique comportant une unité de traitement et un dispositif de restitution, tous deux conformes à l'invention, ledit dispositif de restitution coopérant avec ladite unité de traitement.

Un procédé d'estimation conforme à l'invention peut être avantageusement mis en oeuvre par unité de traitement par le truchement d'un programme d'ordinateur ad hoc exploitable par l'unité de traitement et enregistrable dans les moyens de mémorisation coopérant avec les moyens de traitement de ladite unité de traitement. Un tel programme comporte ainsi des instructions exécutables par lesdits moyens de traitement mettant en oeuvre le procédé d'estimation lorsqu'ils les exécutent.

De même, l'invention prévoit un programme d'ordinateur enregistrable dans des moyens de mémorisation coopérant avec des moyens de traitement d'un dispositif de restitution, ledit programme comportant des instructions exécutables par lesdits moyens de traitement mettant en oeuvre un procédé de restitution conforme à l'invention lorsqu'ils les exécutent.

D'autres caractéristiques et avantages apparaîtront plus clairement à la lecture de la description qui suit et à l'examen des figures qui l'accompagnent parmi lesquelles :

- les figures 1 et 2 (précédemment décrites) présentent deux variantes de réalisation d'un système d'analyse d'imagerie de perfusion ;
- Les figures 3 et 4 (précédemment décrites) présentent respectivement une image de perfusion, obtenue par un appareil d'imagerie par Résonance Magnétique Nucléaire, d'une tranche d'un cerveau humain avant l'injection d'un agent de contraste et pendant la circulation de celui-ci dans les tissus dudit cerveau ;
- les figures 5a et 5b (précédemment décrites) présentent un signal de perfusion $s(x,y,z,t)$ par résonance magnétique nucléaire typique relatif à un voxel d'un cerveau humain ;
- la figure 6 (précédemment décrite) présente une courbe de concentration $c(x,y,z,t)$ typique d'un agent de contraste circulant au sein d'un voxel d'un cerveau humain ;
- la figure 7 (précédemment décrite) présente une fonction d'entrée artérielle $c_a(t)$ typique ;
- la figure 8 présente un exemple de rendu graphique - au moyen d'un dispositif de restitution connu - d'une estimation du paramètre *CBF* conforme à l'état de la technique sous la forme d'une carte choroplèthe ;
- la figure 9a présente un exemple de rendu graphique - délivré par un dispositif de restitution conforme à l'invention - d'estimation d'un flux plasmatique à travers une face orientée pour un ensemble de voxels d'intérêt ;
- la figure 9b présente un exemple de rendu graphique - délivré par un dispositif de restitution conforme à l'invention - d'estimation des six flux plasmatiques à travers chacune des six faces orientées pour un ensemble de voxels d'intérêt ;
- la figure 10 présente un exemple de rendu graphique - délivré par un dispositif de restitution conforme à l'invention - de l'estimation de volumes plasmatiques pour un ensemble de voxels d'intérêt ;
- la figure 11 présente un exemple de rendu graphique - délivré par un dispositif de restitution conforme à l'invention - de l'estimation de vitesses plasmatiques pour un ensemble de voxels d'intérêt ;
- la figure 12 présente un exemple de rendu graphique - délivré par un dispositif de restitution conforme à l'invention - de l'estimation d'un champ de vecteur vitesse plasmatique pour un ensemble de voxels d'intérêt.

A titre d'exemple d'application préférée et selon l'invention, commençons par établir les nouveaux modèles standard locaux de la cinétique des agents de contraste purement intravasculaires pour toute technique de mesure tomographique par agent de contraste.

Comme évoqué précédemment, il est nécessaire de se donner a priori des surfaces ouvertes sur le voxel afin de définir les flux non nécessairement nuls associés. On peut a priori se donner n'importe quelles surfaces mais, de même que le voxel est l'unité de volume, ses faces sont les unités de surface dans notre problème. Considérons donc

$$\Phi_i^v\left(t\right) = \iint_{F_i} \vec{v}\left(x,y,z,t\right) \cdot \overrightarrow{d\Sigma}$$

les six faces $F_i$, $i=1,6$ du voxel. Orientons-les toutes sortantes. Soit donc le flux volumique total à travers la face orientée $F_i$ à l'instant $t$. Par application du théorème de divergence de Green-Ostrogradsky pour

$$\Sigma = \bigcup_{i=1}^{6} F_i$$

un écoulement incompressible et additivité, le flux volumique total à travers la surface fermée du voxel s'écrit à l'instant $t$ :

$$\Phi_\Sigma^\nu(t) = \oiint_\Sigma \vec{v}(x,y,z,t) \cdot \overrightarrow{d\Sigma} = \sum_{i=1}^{6} \iint_{F_i} \vec{v}(x,y,z,t) \cdot \overrightarrow{d\Sigma} = \sum_{i=1}^{6} \Phi_i^\nu(t) = 0$$

Nous avons par ailleurs $\Phi_i^\nu(t) = \Phi_i^{\mathrm{IF}}(t) + \Phi_i^{\mathrm{EF}}(t) + \Phi_i^{\mathrm{BV}}(t)$. Soit $c(t)$ la concentration massique de l'agent de contraste dans le voxel courant, $V^P$ le sous-volume plasmatique dans ce voxel, $c_i(t), i = 1,6$ les concentrations massiques dans les six voxels voisins du voxel courant partageant respectivement avec lui la face $F_i$ et enfin $V_i^P, i = 1,6$ les sous-volumes plasmatiques respectifs dans ces voxels voisins.

Le bilan de masse de l'agent de contraste dans le volume du voxel de mesure $V$ délimité par $\Sigma$ s'effectue comme précédemment. En notant $m_i(t)$ la masse signée de l'agent de contraste sortant par la face $F_i$ dans l'intervalle de temps $[t, t + \partial t]$, on a :

$$\partial m(t) = V \cdot \partial c(t) = -\sum_{i=1}^{6} m_i(t)$$

D'autre part, en supposant comme précédemment l'agent de contraste uniformément dilué dans le fluide le transportant, c'est-à-dire le plasma, de sorte que la masse est proportionnelle au volume, nous avons :

$$m_i(t) = V_i(t) \cdot c_i^S(t) = c_i^S(t) \cdot \Phi_i^P(t) \cdot \partial t$$

où $V_i(t)$ est le sous-volume signé de fluide plasmatique sortant par la face $F_i$ dans l'intervalle de temps $[t, t+\partial t]$, $\Phi_i^P(t)$ son flux volumique et $c_i^S(t)$ la concentration massique plasmatique de l'agent de contraste dans le voisinage immédiat de $F_i$.

Toutes les surfaces étant orientées sortantes, le flux à travers une face $F_i$ d'un voxel est égal à l'opposé du flux à travers la même face pour le voxel voisin partageant cette face avec ce voxel : $\Phi_i(t)_{\text{neighbor}} = -\Phi_i(t)_{\text{current}}$.

Comme décrit précédemment, le modèle cinétique local est conditionné par les six directions globales d'écoulement à travers chacune des six faces ou, de manière équivalente, par les signes des six flux volumiques à travers lesdites faces. Les concentrations massiques sortantes de l'agent de contraste au niveau des faces $F_i$ s'écrivent donc pour $i=1,6$ :

$$c_i^S(t) = \begin{cases} c(t)V / V^P & \text{ssi } \Phi_i^P(t) \geq 0 \\ c_i(t)V / V_i^P & \text{ssi } \Phi_i^P(t) < 0 \end{cases}$$

Le modèle cinétique local s'écrit donc

$$\frac{\partial c}{\partial t}(t) = -\frac{1}{V} \cdot \sum_{i=1}^{6} \Phi_i^P(t) \cdot c_i^S(t)$$

Si l'on suppose l'écoulement uniquement permanent pendant la durée $D$ d'acquisition des signaux, c'est-à-dire $\forall i \forall t \in [0,D]$, $\Phi_i^P(t) \equiv \Phi_i^P$, nous avons donc un premier modèle cinétique local à sept compartiments :

$$\frac{\partial c}{\partial t}(t) = -\frac{1}{V} \cdot \sum_{i=1}^{6} \Phi_i^P \cdot c_i^S(t) = -\sum_{i=1}^{6} \Phi_i^P \cdot \begin{cases} c(t) / V^P \text{ ssi } \Phi_i^P(t) \geq 0 \\ c_i(t) / V_i^P \text{ ssi } \Phi_i^P(t) < 0 \end{cases}$$

dont les paramètres sont, de manière générale, les six flux volumiques plasmatiques $\Phi_i^{\mathrm{P}}, i = 1,6$ et les sept sous-volumes plasmatiques $V_i^{\mathrm{P}}, i = 1,6$ et $V^{\mathrm{P}}$. Si on suppose de plus l'écoulement toujours permanent, c'est-à-dire $\forall i \forall t$, $\Phi_i^{\mathrm{P}}(t) \equiv \Phi_i^{\mathrm{P}}$, et non infiniment compressible, alors le flux plasmatique total $\sum_{i=1}^{6} \Phi_i^{\mathrm{P}}$ est forcément identiquement nul puisque le voxel ne peut pas se remplir ou se vider indéfiniment. Nous avons donc seulement cinq flux plasmatique libres et un second modèle cinétique local à sept compartiments s'écrit par exemple, si on élimine $\Phi_6^{\mathrm{P}}$ :

$$\frac{\partial c}{\partial t}(t) = -\frac{1}{V} \cdot \sum_{i=1}^{5} \Phi_i^{\mathrm{P}} \cdot c_i^{S}(t) + \frac{1}{V} \cdot c_6^{S}(t) \cdot \sum_{i=1}^{5} \Phi_i^{\mathrm{P}}$$

Les paramètres de ce modèle sont, de manière générale, les cinq flux volumiques plasmatiques $\Phi_i^{\mathrm{P}}, i = 1,5$ et les sept sous-volumes plasmatiques $V_i^{\mathrm{P}}, i = 1,6$ et $V^{\mathrm{P}}$.

Ce second modèle est à un écoulement permanent dans un voxel ce que le modèle de type Kety, tel que nous l'avons établi à partir de la Cinétique des Fluides, est à un écoulement dans un tuyau dont le sens global est connu a priori, par exemple $\Phi_1^{\mathrm{P}} < 0$. En effet, si le voxel avait seulement deux voxels voisins $i = 1,2$, nous aurions bien $c_1^{S}(t) = c_1(t) V / V_1^{\mathrm{P}}$ puisque $\Phi_1^{\mathrm{P}} < 0$ et $c_2^{S}(t) = c(t) V / V^{\mathrm{P}}$ puisque $\Phi_2^{\mathrm{P}} = -\Phi_1^{\mathrm{P}} > 0$, de sorte que :

$$\frac{\partial c}{\partial t}(t) = -c_1(t) \Phi_1^{\mathrm{P}} / V_1^{\mathrm{P}} + c(t) \Phi_1^{\mathrm{P}} / V^{\mathrm{P}} = -\Phi_1^{\mathrm{P}} \left[ c_1(t) / V_1^{\mathrm{P}} - c(t) / V^{\mathrm{P}} \right]$$

Ces deux modèles locaux sont a priori pertinents. Dans le cas où on suppose l'écoulement permanent uniquement pendant la durée de l'acquisition, la valeur absolue du flux plasmatique total $\left| \sum_{i=1}^{6} \Phi_i^{\mathrm{P}} \right|$ est une quantité d'intérêt fournissant une mesure de la non-stationnarité de l'écoulement pour chaque voxel d'intérêt.

Les modèles locaux établis précédemment sont tout aussi valables pour des agents de contraste purement extravasculaires que pour des agents de contraste purement intravasculaires: dans le cas où l'agent de contraste est uniquement transporté par l'interstitium et qu'il y est uniformément dilué, il suffit de remplacer les flux volumiques et les sous-volumes plasmatiques par leurs équivalents interstitiels. Ainsi, le premier modèle local de la cinétique d'un agent de contraste purement extravasculaire s'écrit par exemple :

$$\frac{\partial c}{\partial t}(t) = -\frac{1}{V} \cdot \sum_{i=1}^{6} \Phi_i^{\mathrm{I}} \cdot c_i^{S}(t) = -\sum_{i=1}^{6} \Phi_i^{\mathrm{I}} \cdot \begin{cases} c(t) / V^{\mathrm{I}} & \text{ssi } \Phi_i^{\mathrm{I}}(t) \geq 0 \\ c_i(t) / V_i^{\mathrm{I}} & \text{ssi } \Phi_i^{\mathrm{I}}(t) < 0 \end{cases}$$

dont les paramètres sont, de manière générale, les six flux volumiques interstitiels $\Phi_i^{\mathrm{I}}, i = 1,6$ et les sept sous-volumes interstitiels $V_i^{\mathrm{I}}, i = 1,6$ et $V^{\mathrm{I}}$.

Plus précisément et sans perte de généralité, indexons maintenant un voxel par ses coordonnées entières $(i,j,k)$ dans le référentiel Galiléen $(O, \vec{x}, \vec{y}, \vec{z})$. Nous notons ainsi $c_{i,j,k}(t)$ la concentration massique de l'agent de contraste dans ce voxel et $V_{i,j,k}$ le sous-volume, plasmatique en imagerie intravasculaire ou interstitiel en imagerie extravasculaire, dans le voxel.

Orientons désormais les six faces du voxel et les flux correspondant suivant les axes du référentiel $(O, \vec{x}, \vec{y}, \vec{z})$

et indexons-les par leurs coordonnées demi-entières $(i-\frac{1}{2},j,k)$, $(i+\frac{1}{2},j,k)$, $(i,j-\frac{1}{2},k)$, $(i,j+\frac{1}{2},k)$, $(i,j,k-\frac{1}{2})$ et $(i,j,k+\frac{1}{2})$. Par exemple nous notons $\Phi_{i+\frac{1}{2},j,k}$ le flux volumique stationnaire à travers la face du voxel de coordonnées $(i,j,k)$ orientée sortante suivant le vecteur $\vec{x}$ et $\Phi_{i-\frac{1}{2},j,k}$ le flux à travers la face opposée du voxel orientée suivant le même vecteur $\vec{x}$, etc.

De la sorte, le flux à travers la surface orientée sortante suivant le vecteur $\vec{x}$ pour le voxel de coordonnées ($i$-1,$j$,$k$) est bien $\Phi_{(i-1)+\frac{1}{2},j,k} = \Phi_{i-\frac{1}{2},j,k}$ conformément à la condition $\Phi_i(t)_{\text{neighbor}} = -\Phi_i(t)_{\text{current}}$. Soit $\alpha_{i,j,k} = 1/V_{i,j,k}$ et

$$
\begin{cases}
c^S_{i+\frac{1}{2},j,k}(t) = \begin{cases} c_{i,j,k}(t)V\alpha_{i,j,k} & \text{ssi } \Phi_{i+\frac{1}{2},j,k}(t) \geq 0 \\ c_{i+1,j,k}(t)V\alpha_{i+1,j,k} & \text{ssi } \Phi_{i+\frac{1}{2},j,k}(t) < 0 \end{cases} \\[2em]
c^S_{i-\frac{1}{2},j,k}(t) = \begin{cases} c_{i,j,k}(t)V\alpha_{i,j,k} & \text{ssi } \Phi_{i-\frac{1}{2},j,k}(t) < 0 \\ c_{i-1,j,k}(t)V\alpha_{i-1,j,k} & \text{ssi } \Phi_{i+\frac{1}{2},j,k}(t) \geq 0 \end{cases} \\[2em]
c^S_{i,j+\frac{1}{2},k}(t) = \begin{cases} c_{i,j,k}(t)V\alpha_{i,j,k} & \text{ssi } \Phi_{i,j+\frac{1}{2},k}(t) \geq 0 \\ c_{i,j+1,k}(t)V\alpha_{i,j+1,k} & \text{ssi } \Phi_{i,j+\frac{1}{2},k}(t) < 0 \end{cases} \\[2em]
c^S_{i,j-\frac{1}{2},k}(t) = \begin{cases} c_{i,j,k}(t)V\alpha_{i,j,k} & \text{ssi } \Phi_{i,j-\frac{1}{2},k}(t) < 0 \\ c_{i,j-1,k}(t)V\alpha_{i,j-1,k} & \text{ssi } \Phi_{i,j-\frac{1}{2},k}(t) \geq 0 \end{cases} \\[2em]
c^S_{i,j,k+\frac{1}{2}}(t) = \begin{cases} c_{i,j,k}(t)V\alpha_{i,j,k} & \text{ssi } \Phi_{i,j,k+\frac{1}{2}}(t) \geq 0 \\ c_{i,j,k+1}(t)V\alpha_{i,j,k+1} & \text{ssi } \Phi_{i,j,k+\frac{1}{2}}(t) < 0 \end{cases} \\[2em]
c^S_{i,j,k-\frac{1}{2}}(t) = \begin{cases} c_{i,j,k}(t)V\alpha_{i,j,k} & \text{ssi } \Phi_{i,j,k-\frac{1}{2}}(t) < 0 \\ c_{i,j,k-1}(t)V\alpha_{i,j,k-1} & \text{ssi } \Phi_{i,j,k-\frac{1}{2}}(t) \geq 0 \end{cases}
\end{cases}
$$

Avec cette nouvelle convention d'orientation, il convient de réécrire le premier modèle cinétique local

$$
\frac{\partial c}{\partial t}(t) = -\frac{1}{V}\cdot\sum_{i=1}^{6}\Phi_i^P \cdot c_i^S(t) = -\sum_{i=1}^{6}\Phi_i^P \cdot \begin{cases} c(t)/V^P & \text{ssi } \Phi_i^P(t) > 0 \\ c_i(t)/V_i^P & \text{ssi } \Phi_i^P(t) < 0 \end{cases}
$$

comme

$$\frac{\partial c_{i,j,k}}{\partial t}(t) = -\frac{1}{V} \cdot \left\{ \begin{array}{l} \Phi_{i+\frac{1}{2},j,k} c^S_{i+\frac{1}{2},j,k}(t) - \Phi_{i-\frac{1}{2},j,k} c^S_{i-\frac{1}{2},j,k}(t) + \\ \Phi_{i,j+\frac{1}{2},k} c^S_{i,j+\frac{1}{2},k}(t) - \Phi_{i,j-\frac{1}{2},k} c^S_{i,j-\frac{1}{2},k}(t) + \\ \Phi_{i,j,k+\frac{1}{2}} c^S_{i,j,k+\frac{1}{2}}(t) - \Phi_{i,j,k-\frac{1}{2}} c^S_{i,j,k-\frac{1}{2}}(t) \end{array} \right\}$$

pour chacun des voxels de coordonnées (*i,j,k*) ayant six voxels voisins, voxels que nous appellerons intérieurs. De même, si on élimine les flux $\Phi_{i,j,k+\frac{1}{2}}$, il convient de réécrire le second modèle cinétique local

$$\frac{\partial c}{\partial t}(t) = -\frac{1}{V} \cdot \sum_{i=1}^{5} \Phi_i^P \cdot c_i^S(t) + \frac{1}{V} \cdot c_6^S(t) \cdot \sum_{i=1}^{5} \Phi_i^P$$

comme

$$\frac{\partial c_{i,j,k}}{\partial t}(t) = -\frac{1}{V} \cdot \left[ \begin{array}{l} \Phi_{i+\frac{1}{2},j,k} c^S_{i+\frac{1}{2},j,k}(t) - \Phi_{i-\frac{1}{2},j,k} c^S_{i-\frac{1}{2},j,k}(t) + \\ \Phi_{i,j+\frac{1}{2},k} c^S_{i,j+\frac{1}{2},k}(t) - \Phi_{i,j-\frac{1}{2},k} c^S_{i,j-\frac{1}{2},k}(t) + \\ \left( \Phi_{i,j,k-\frac{1}{2}} - \Phi_{i+\frac{1}{2},j,k} + \Phi_{i-\frac{1}{2},j,k} - \Phi_{i,j+\frac{1}{2},k} + \Phi_{i,j-\frac{1}{2},k} \right) c^S_{i,j,k+\frac{1}{2}}(t) - \\ \Phi_{i,j,k-\frac{1}{2}} c^S_{i,j,k-\frac{1}{2}}(t) \end{array} \right]$$

ou comme

$$\frac{\partial c_{i,j,k}}{\partial t}(t) = -\frac{1}{V} \cdot \left\{ \begin{array}{l} \Phi_{i+\frac{1}{2},j,k} \left[ c^S_{i+\frac{1}{2},j,k}(t) - c^S_{i,j,k+\frac{1}{2}}(t) \right] - \Phi_{i-\frac{1}{2},j,k} \left[ c^S_{i-\frac{1}{2},j,k}(t) - c^S_{i,j,k+\frac{1}{2}}(t) \right] + \\ \Phi_{i,j+\frac{1}{2},k} \left[ c^S_{i,j+\frac{1}{2},k}(t) - c^S_{i,j,k+\frac{1}{2}}(t) \right] - \Phi_{i,j-\frac{1}{2},k} \left[ c^S_{i,j-\frac{1}{2},k}(t) - c^S_{i,j,k+\frac{1}{2}}(t) \right] - \\ \Phi_{i,j,k-\frac{1}{2}} \left[ c^S_{i,j,k-\frac{1}{2}}(t) - c^S_{i,j,k+\frac{1}{2}}(t) \right] \end{array} \right\}$$

Pour les voxels extérieurs, c'est-à-dire ceux ayant au plus cinq voxels voisins, deux cas de figure sont possibles :

- soit on sait a priori, par exemple grâce à l'anatomie, que tous les flux à travers chacune des faces où le voxel extérieur n'a pas de voisin sont nécessairement nuls. Nous appelons ces voxels intérieurs voxels frontaliers. Dans ce cas, nous avons des équations similaires à celles pour les voxels intérieurs mais avec certains flux nuls. Par exemple pour un voxel frontalier sans voisin (*i*-1,*j*,*k*), (*i*,*j*-1,*k*) et (*i*,*j*,*k*-1) (i.e. situé dans un coin du volume imagé), nous aurons par exemple l'équation réduite pour le second modèle local

$$\frac{\partial c_{i,j,k}}{\partial t}(t) = -\frac{1}{V} \cdot \left[ \Phi_{i+\frac{1}{2},j,k} c^S_{i+\frac{1}{2},j,k}(t) + \Phi_{i,j+\frac{1}{2},k} c^S_{i,j+\frac{1}{2},k}(t) - \left( \Phi_{i+\frac{1}{2},j,k} + \Phi_{i,j+\frac{1}{2},k} \right) c^S_{i,j,k+\frac{1}{2}}(t) \right]$$

- soit au moins un flux à travers une face où le voxel extérieur n'a pas de voxel voisin n'est pas nécessairement nul ou du moins connu a priori. Dans ce cas, il n'y a pas d'équation pour ce voxel extérieur car le système d'équations résultant serait alors sous-déterminé. Seule la concentration de l'agent de contraste $c_{i,j,k}(t)$ dans ce voxel intervient dans le système d'équations, au niveau des voxels voisins de ce voxel, intérieurs ou frontaliers. Ces voxels extérieurs non frontaliers jouent donc le rôle d'entrées ou de sorties dans le système cinématique. On peut dire qu'ils sont, pour le système cinématique imagé tout entier, les analogues tridimensionnels des fonctions d'entrée artérielles et des fonctions de sortie veineuse pour chaque voxel des modèles de perfusion et de perméabilité suivant l'état de l'art.

Pour les deux modèles locaux décrits précédemment, les équations locales pour tous les voxels intérieurs et frontaliers à flux volumiques fixés constituent un système d'équations différentielles ordinaires linéaires du premier ordre inhomogène à coefficients constants. Il peut être mis sous la forme matricielle $\frac{\partial \mathbf{c}}{\partial t}(t) = \mathbf{A} \cdot \mathbf{c}(t) + \mathbf{b_E}(t)$ où $\mathbf{c}(t)$ est le vecteur de toutes les concentrations à l'instant $t$ dans les voxels intérieurs ou frontaliers, $\mathbf{b_E}(t)$ est le vecteur correspondant pour les voxels extérieurs non frontaliers et $\mathbf{A}$ est une matrice symétrique creuse dont les coefficients dépendent des flux volumiques, des sous-volumes et de la géométrie du volume imagé. La solution analytique de ce système avec condition initiale $\mathbf{c}(t_0) = \mathbf{c_0}$ est donnée par :

$$\mathbf{c}(t) = e^{\mathbf{A}(t-t_0)} \cdot \mathbf{c_0} + e^{\mathbf{A}(t-t_0)} \cdot \int_{t_0}^{t} e^{-\mathbf{A}(\tau-t_0)} \cdot \mathbf{b_E}(\tau) d\tau \ .$$

En particulier, si $\mathbf{c_0}=0$, nous avons :

$$\mathbf{c}(t) = e^{\mathbf{A}(t-t_0)} \cdot \int_{t_0}^{t} e^{-\mathbf{A}(\tau-t_0)} \cdot \mathbf{b_E}(\tau) d\tau = \int_{t_0}^{t} e^{\mathbf{A}(t-\tau)} \cdot \mathbf{b_E}(\tau) d\tau = e^{\mathbf{A}t} \otimes \mathbf{b_E}$$

On reconnaît un modèle cinétique global de type Kety intégral monoexponentiel mais matriciel et tridimensionnel.

Ces solutions analytiques constituent respectivement les deux modèles globaux de la cinétique des agents de contraste purement intravasculaires ou purement extravasculaires suivant l'invention tel que déduits par application stricte du Principe de Conservation de la Masse.

A l'inverse des modèles suivant l'état de l'art qui décrivent la cinétique d'un agent de contraste dans chaque voxel complètement indépendamment des autres voxels, comme s'il n'y avait aucune circulation d'un voxel à un autre mais seulement par l'intermédiaire des obscures et virtuelles fonctions d'entrée artérielle et de sortie veineuse locales mais non localisées, les modèles locaux et globaux conforme à l'invention reposent sur le Principe de Localité de la Physique Classique qui stipule qu'un système n'est influencé que par son voisinage immédiat et que par conséquent la circulation dans un voxel se fait forcément par les six voxels voisins dudit voxel (au plus). Autrement dit, pour reprendre la terminologie consacrée, lesdits modèles se basent sur le fait que l'entrée artérielle et la sortie veineuse d'un voxel ne peuvent être en fait constituées que par les courbes de concentration dans les six voxels voisins. En résumé, qui dit voxel dit six faces, donc six flux (à travers chaque face dudit voxel) et donc six fonctions d'entrée artérielles (AIF) ou de sortie veineuses (VOF).

De manière générale, l'invention s'applique à tout pavage par des volumes polyédriques du volume imagé. On a donc au moins quatre flux et quatre AIF/VOF par polyèdre dans le cas d'un volume tétraédrique comportant quatre faces planes.

Alors que les modèles suivant l'état de l'art ne sont que des modèles de perfusion et de perméabilité dans chaque volume élémentaire local tel qu'un voxel parallélépipédique, de sorte qu'il n'y a plus à vrai dire de dimension spatiale, les modèles cinétiques globaux suivant l'invention décrivent la circulation dans tout le volume tridimensionnel d'intérêt déterminé par l'ensemble de ces volumes élémentaires. Ainsi l'invention permet enfin la mise en oeuvre de techniques de tomographie par agent de contraste tridimensionnelle.

Examinons maintenant le cas général de la cinétique d'un agent de contraste intravasculaire et extravasculaire. Juste après son injection, l'agent de contraste est tout d'abord transporté par le plasma intravasculaire lors de son premier passage dans un volume polyédrique (par exemple un voxel). Par la suite, sa concentration plasmatique diminue par excrétion alors qu'une partie passe du milieu intravasculaire dans le milieu extravasculaire, c'est-à-dire dans le liquide interstitiel. On a donc tout d'abord une phase intravasculaire où le fluide transportant l'agent de contraste est le plasma (*wash-in,* suivant une terminologie anglo-saxonne) suivie d'une phase extravasculaire où le fluide transportant l'agent de contraste devient l'interstitium (*wash-out,* suivant une terminologie anglo-saxonne) suivi encore éventuellement d'une phase où une partie de l'agent de contraste repasse du milieu extravasculaire dans le milieu intravasculaire.

Nous avons toujours $\partial m(t) = V \cdot \partial c(t) = -\sum_{i=1}^{6} m_i(t)$ avec désormais $m_i(t) = m_i^P(t) + m_i^I(t)$ où $m_i^I(t)$ est la masse d'agent de contraste transporté par l'interstitium sortant par la face $F_i$ pendant le laps de temps $[t, t+\partial t]$.

Nous avons toujours $m_i^P(t) = c_i^{S,P}(t) \cdot \Phi_i^P(t) \cdot \partial t$ et $c_i^{S,P}(t) = \begin{cases} c^P(t) & \text{ssi } \Phi_i^P(t) \geq 0 \\ c_i^P(t) & \text{ssi } \Phi_i^P(t) < 0 \end{cases}$ si l'agent de contraste est uniformément dilué dans le plasma. De même $m_i^I(t) = c_i^{S,I}(t) \cdot \Phi_i^I(t) \cdot \partial t$ avec

$c_i^{S,I}(t) = \begin{cases} c^I(t) & \text{ssi } \Phi_i^I(t) > 0 \\ c_i^I(t) & \text{ssi } \Phi_i^I(t) < 0 \end{cases}$ si l'agent de contraste est également uniformément dilué dans l'interstitium.

A l'instant *t*, la masse totale d'agent de contraste dans le voxel vaut $m(t)=c(t)V-m^P(t)+m^I(t)=c^P(t)V^P+c^I(t)V^I$.

En négligeant le volume des vaisseaux par rapport aux volumes intravasculaire et extravasculaire, nous avons $V = V^{IF}+V^{EF}= V^P(t)+V^C(t)+V^I(t)+V^{EC}(t)$ où $V^I(t)$ est le sous-volume interstitiel et $V^{EC}(t)$ le sous-volume cellulaire extravasculaire.

En supposant constantes les fractions volumétriques d'hématocrite $V^C(t)/V^I \equiv \rho^P$ et interstitielle $V^{EC}(t)/V^{EF} \equiv \rho^I$, nous avons

$$\begin{cases} c^P(t) = \left[ c(t)V - c^I(t)V^I \right] / \left[ V - V^I / (1-\rho^I) \right] / (1-\rho^P) \\ c_i^P(t) = \left[ c_i(t)V - c_i^I(t)V_i^I \right] / \left[ V - V_i^I / (1-\rho^I) \right] / (1-\rho^P) \end{cases}$$

de sorte que nous avons le premier modèle cinétique local

$$\frac{\partial c}{\partial t}(t) = -\frac{1}{V} \sum_{i=1}^{6} c_i^{S,P}(t)\Phi_i^P(t) + c_i^{S,I}(t)\Phi_i^I(t) =$$

$$-\frac{1}{V} \sum_{i=1}^{6} \Phi_i^P(t) \begin{cases} c^P(t) & \text{ssi } \Phi_i^P(t) \geq 0 \\ c_i^P(t) & \text{ssi } \Phi_i^P(t) < 0 \end{cases} + \Phi_i^I(t) \begin{cases} c^I(t) & \text{ssi } \Phi_i^I(t) \geq 0 \\ c_i^I(t) & \text{ssi } \Phi_i^I(t) < 0 \end{cases} =$$

$$-\frac{1}{V} \sum_{i=1}^{6} \Phi_i^P(t) \begin{cases} \left[ c(t)V - c^I(t)V^I \right] / \left[ V - V^I / (1-\rho^I) \right] / (1-\rho^P) & \text{ssi } \Phi_i^P(t) \geq 0 \\ \left[ c_i(t)V - c_i^I(t)V_i^I \right] / \left[ V - V_i^I / (1-\rho^I) \right] / (1-\rho^P) & \text{ssi } \Phi_i^P(t) < 0 \end{cases} + \Phi_i^I(t) \begin{cases} c^I(t) & \text{ssi } \Phi_i^I(t) \geq 0 \\ c_i^I(t) & \text{ssi } \Phi_i^I(t) < 0 \end{cases}$$

En supposant l'écoulement toujours permanent, les flux volumiques plasmatiques et interstitiels totaux s'annulent et nous avons seulement cinq flux volumiques plasmatiques et cinq flux volumiques interstitiels libres, satisfaisant par exemple, si on élimine les sixièmes flux volumiques, le second modèle cinétique local :

$$\frac{\partial c}{\partial t}(t) = -\frac{1}{V}\sum_{i=1}^{6} c_i^{S,P}(t)\Phi_i^P(t) + c_i^{S,I}(t)\Phi_i^I(t) =$$

$$-\frac{1}{V}\sum_{i=1}^{5} c_i^{S,P}(t)\Phi_i^P(t) + c_i^{S,I}(t)\Phi_i^I(t) + \frac{1}{V}c_6^{S,P}(t)\sum_{i=1}^{5}\Phi_i^P(t) + \frac{1}{V}c_6^{S,I}(t)\sum_{i=1}^{5}\Phi_i^I(t)$$

On constate que dans tous les cas les équations font désormais intervenir les courbes de concentration massique interstitielles (ou plasmatiques) inconnues en plus des courbes de concentration massique dans les voxels. De manière générale, il est donc nécessaire de rajouter de l'information ou des équations permettant de séparer les composantes plasmatique et interstitielle. Puisqu'il s'agit ici seulement d'exprimer le Principe de Conservation de la Masse, nous devons nous arrêter.

Cependant, les modèles de la cinétique des agents de contraste purement extravasculaires décrits précédemment peuvent s'appliquer à des données d'imagerie de perméabilité (e.g DCE-MR) du moment où il est possible de séparer les phases intravasculaire et extravasculaire. C'est le cas par exemple pour les organes où il existe une barrière intra/extravasculaire tel que le cerveau. On peut en effet déterminer la fin de la phase intravasculaire comme le plus petit instant $t$ auquel les courbes de concentration, là où il n'y a pas rupture de barrière, reviennent à zéro. On peut alors appliquer un modèle cinétique extravasculaire aux courbes de concentration là où il y a rupture de barrière sur l'intervalle de temps $[t,+\infty]$ afin de déterminer des flux et des sous-volumes extravasculaires.

Dans tous les cas, on peut toujours ne plus tâcher de séparer les composantes intravasculaire et extravasculaire et travailler avec les flux et les sous-volumes plasmatiques et interstitiels composés $\Phi_i^{P\cup I}$ et $V_i^{P\cup I}$ qui satisfont sous les mêmes hypothèses que précédemment par exemple le premier modèle cinétique local

$$\frac{\partial c}{\partial t}(t) = -\frac{1}{V}\sum_{i=1}^{6}\Phi_i^{P\cup I}c_i^{S}(t)$$

avec $c_i^{S}(t) = \begin{cases} c(t)V/V^{P\cup I} & \text{ssi } \Phi_i^{P\cup I}(t) \geq 0 \\ c_i(t)V/V_i^{P\cup I} & \text{ssi } \Phi_i^{P\cup I}(t) < 0 \end{cases}$ . En supposant les fractions volumétriques d'hématocrite et interstitielle constantes dans l'espace, les sous-volumes composés $V_i^{P\cup I}$ sont partout constants de sorte que seuls les flux volumiques $\Phi_i^{P\cup I}$ doivent être estimés.

L'invention permet d'estimer les paramètres des modèles cinétiques tridimensionnels décrits précédemment, à savoir les flux volumiques $\Phi = \{\Phi_{\dots}\}$, les sous-volumes du fluide transportant l'agent de contraste ou leurs inverses $\alpha = \{\alpha_{\dots}\}$ et l'instant $t_0$ (ou seulement $(\Phi,t_0)$ dans le cas où les sous-volumes composés plasmatiques et interstitiels $V_i^{P\cup I}$ sont supposés constants). En toute rigueur, il convient avantageusement de transformer préalablement les modèles analytiques à temps continu obtenus précédemment en modèles à temps discret puisque les concentrations sont échantillonnées sur des grilles temporelles. En particulier, il convient de traiter le cas où ces échantillons sont en fait des intégrales temporelles des concentrations sur la période d'échantillonnage (*flow data* suivant une terminologie économétrique anglo-saxonne). Par souci de concision, nous négligeons cette étape dans la suite et nous supposons comme de coutume que la simple discrétisation d'un modèle à temps continu fournit une bonne approximation d'un modèle à temps discret.

Il convient également de remarquer que le vecteur des flux $\Phi$ et le vecteur des inverses des volumes $\alpha$ sont globalement sous-déterminés à une constante multiplicative près puisque les modèles cinétiques globaux sont invariants par la transformation $(\Phi,\alpha) \mapsto \left(\lambda\Phi, \dfrac{\alpha}{\lambda}\right)$ pour tout $\lambda \neq 0$. Afin de fixer $\lambda$ en tomographie intravasculaire, il est particulièrement avantageux de contraindre le sous-volume plasmatique dans les voxels dont on sait a priori qu'ils ne contiennent que du sang par $V_{max}^{P} = \dfrac{1}{\alpha_{min}} = (1 - Ht')\cdot V^{IF} = (1 - Ht')\cdot V$ où $Ht' \equiv \dfrac{V^{C}}{V^{BV}}$ est la fraction d'hématocrite supposée partout et toujours constante. On pourra procéder de la même manière en tomographie extravasculaire en

EP 2 904 582 B1

contraignant le volume interstitiel dans au moins un voxel dont on sait a priori qu'il ne contient pas de sang.

On suppose qu'il existe un modèle paramétrique M reliant le signal tomographique théorique $s_{i,j,k}(t)$ à la concentration massique de l'agent de contraste $c_{i,j,k}(t)$ dans le voxel de coordonnées $(i,j,k)$ tel que

$$\mathrm{M}: \quad s_{i,j,k}(t) = f\left[ c_{i,j,k}(t), \Theta_{i,j,k} \right]$$ où $\Theta_{i,j,k}$ est le vecteur des paramètres inconnus du modèle à estimer.

Par exemple, comme décrit précédemment, nous avons typiquement $\mathrm{M}: \quad s_{i,j,k}(t) = kc_{i,j,k}(t) + s_{i,j,k}^0$,

$\Theta = s_{i,j,k}^0$ en tomographie de perfusion par rayons X et $\mathrm{M}: \quad s_{i,j,k}(t) = s_{i,j,k}^0 e^{-k \cdot TE \cdot c_{i,j,k}(t)}$, $\Theta = s_{i,j,k}^0$ en DSC-MR, les constantes inconnues $k$ étant fixées une fois pour toute. On obtient ainsi un modèle théorique global des signaux tomographiques $s_{i,j,k}(t)$. Il est entendu qu'il convient en toute rigueur d'ajuster ce modèle aux signaux expérimentaux mesurés et non pas d'ajuster le modèle des courbes de concentration aux courbes de concentration « expérimentales » obtenues après conversion desdits signaux expérimentaux. Cependant, par souci de concision, nous considérons dans la suite le problème de l'ajustement de courbes de concentration expérimentales étant donné que l'ajustement des signaux mesurés se fait de manière similaire.

En supposant par exemple les bruits de mesure sur les courbes de concentration expérimentales additifs, on a donc un modèle global des courbes de concentration expérimentales dans les voxels intérieurs et frontaliers $\mathbf{c}^{\exp}(t)$ = $\mathbf{c}(t) + \xi(t)$ où $\xi(t)$ est le vecteur des bruits de mesure à l'instant $t$. L'ajustement de la solution analytique $\mathbf{c}(t)$ telle que décrite précédemment aux courbes de concentration expérimentales $\mathbf{c}^{\exp}(t)$ pour tous les voxels intérieurs et frontaliers peut se faire classiquement en appliquant la méthode de Bayes ou la méthode du maximum de vraisemblance.

L'invention préconise de manière avantageuse le recours à la méthode de Bayes puisque celle-ci permet d'obtenir, outre des estimateurs admissibles des paramètres tels que l'estimateur de Bayes de variance minimale, des quantités d'intérêt complémentaires telles que leurs distributions de probabilité a posteriori conjointe et marginale, des intervalles de confiance sur ces estimations, des paris sur ces intervalles de confiance et enfin la probabilité du modèle sachant les données de perfusion ou de perméabilité. De plus, il convient en toute rigueur d'estimer conjointement de manière nonparamétrique les courbes de concentration théoriques à partir des courbes de concentration expérimentales en les voxels extérieurs non frontaliers, ce qui ne peut être fait rigoureusement que par la méthode de Bayes.

Notons $\Theta$ l'ensemble de tous les paramètres du modèle global des signaux expérimentaux - incluant en particulier tous les flux volumiques et tous les sous-volumes plasmatiques - et $\theta \in \Theta$ une quantité d'intérêt parmi ces paramètres. L'estimateur de Bayes de variance minimale $\hat{\theta}$ de $\theta$ est obtenu par

$$\hat{\theta} = \int_\theta p\left(\theta \,\middle|\, \mathbf{s}^{\exp}(t)\right) d\theta = \int_\theta \int_{\Theta \backslash \theta} p\left(\Theta \,\middle|\, \mathbf{s}^{\exp}(t)\right) d\Theta\, d\theta$$

où $\mathbf{s}^{\exp}(t)$ est le vecteur de tous les signaux expérimentaux dans le système cinématique d'intérêt.

Nous pouvons constater que l'estimation d'une quantité d'intérêt requiert l'évaluation d'une intégrale multiple de très grande dimension (la résolution spatiale actuelle maximale en imagerie de perfusion par tomographie à rayons X est $512 \times 512 \times 320 \simeq 84 \times 10^6$, le cardinal de $\Theta$ étant grosso modo proportionnel au nombre de voxels). Etant donnée leur dimension, l'évaluation de ces intégrales peut nécessiter une unité de traitement comportant des moyens logiciels et matériels dédiés pour satisfaire des contraintes de temps de calcul notamment.

L'invention concerne en outre deux modes de réalisation particulièrement adaptés d'un procédé pour produire une estimation d'une quantité d'intérêt telle qu'un flux volumique ou un sous-volume relative à un écoulement d'un fluide dans un système cinématique à partir de signaux expérimentaux délivrés par un système de mesure tomographique et reliés aux concentrations d'un agent de contraste au sein de volumes polyédriques donnés. Ledit procédé est mis en oeuvre par une unité de traitement telle que l'unité 4 décrite en liaison avec les figures 1 et 2. Ledit procédé comporte une étape pour estimer ladite quantité d'intérêt à partir d'un modèle cinétique et paramétrique comportant une pluralité de paramètres dont un flux à travers une face d'un desdits volumes polyédriques donnés.

Suivant un premier mode de réalisation de l'invention dont la mise en oeuvre par une unité de traitement est particulièrement aisée, si les bruits de mesure $\xi(t)$ sont additifs, blancs, stationnaires, homoscédastiques, non-corrélés et Gaussiens, l'étape pour estimer une quantité d'intérêt selon la méthode du maximum a posteriori, du maximum de vraisemblance ou des moindres carrés nonlinéaires consiste à déterminer le minimum global sur $(\Phi, \alpha, t_0)$ (ou éventuel-

$$\chi^2\left(\Phi, \alpha, t_0\right) = \sum_{(i,j,k)} \sum_{l=1}^{N} \left[ c_{i,j,k}^{\exp}(t_l) - \mathbf{c}_{i,j,k}(t_l) \right]^2$$

lement $(\Phi, t_0)$) d'une fonction telle que                     pour les moindres carrés nonlinéaires, où $c_{i,j,k}^{\exp}\left(t_l\right), l=1,N$ sont les mesures expérimentales de la concentration de l'agent de contraste dans le volume élémentaire intérieur ou frontalier de coordonnées (i,j,k) et $t_l$, l=1,N sont les instants de mesure.

La fonction $\chi^2(\Phi,\alpha,t_0)$ est nonlinéaire en les flux $\Phi$ et les sous-volumes ou leurs inverses $\alpha$, qui sont, comme dit précédemment, potentiellement en très grand nombre. La minimisation d'une telle fonction pourrait être en pratique problématique si elle n'était pas creuse : dans le cas où les volumes polyédriques sont des voxels parallélépipédiques, chaque flux intervient au plus au niveau des équations pour deux voxels et chaque sous-volume intervient au plus au niveau des équations pour sept voxels, non pas au niveau de chaque équation pour chaque voxel. Seul l'instant $t_0$ intervient dans toutes les équations. Cependant, son estimation ne pose pas de problème puisque c'est un paramètre discret dont le nombre de valeurs possibles est modéré. Or il existe des méthodes très efficaces dédiées à la minimisation de fonctions nonlinéaires creuses d'un grand nombre de variables telles que les méthodes des moindres carrés nonlinéaires creuses à grande dimension (*large-scale sparse nonlinear least squares methods* selon une terminologie anglo-saxonne). La minimisation de $\chi^2(\Phi,\alpha,t_0)$ peut donc être effectuée en pratique par une unité de traitement sans que les temps de calcul soient rédhibitoires en utilisant des méthodes numériques idoines.

Cependant, un second mode de réalisation de l'invention peut rendre l'étape pour estimer une quantité d'intérêt encore plus aisée. Ainsi, pour un temps de calcul donné, ce mode de réalisation permet d'optimiser les ressources matérielles nécessaires de l'unité de traitement mettant en oeuvre le procédé par rapport à un autre mode de réalisation de l'invention tel que celui décrit précédemment. Inversement, pour des ressources matérielles données, l'unité de traitement adaptée suivant ce second mode de réalisation permet d'optimiser le temps de calcul nécessaire à l'estimation de la quantité d'intérêt.

Il suffit pour cela de ne pas intégrer analytiquement le système différentiel obtenu à partir des modèles cinétiques locaux pour tous les voxels intérieurs ou frontaliers. On commence par réécrire les équations différentielles locales sous forme intégrée.

En supposant que $\forall(i,j,k)$, $c_{i,j,k}(t_0)=0$, nous avons par exemple pour le second modèle cinétique local :

$$c_{i,j,k}(t)=-\frac{1}{V}\left\{\begin{array}{l}\Phi_{i+\frac{1}{2},j,k}\left[C^S_{i+\frac{1}{2},j,k}(t)-C^S_{i,j,k+\frac{1}{2}}(t)\right]-\Phi_{i-\frac{1}{2},j,k}\left[C^S_{i-\frac{1}{2},j,k}(t)-C^S_{i,j,k+\frac{1}{2}}(t)\right]+\\[2ex]\Phi_{i,j+\frac{1}{2},k}\left[C^S_{i,j+\frac{1}{2},k}(t)-C^S_{i,j,k+\frac{1}{2}}(t)\right]-\Phi_{i,j-\frac{1}{2},k}\left[C^S_{i,j-\frac{1}{2},k}(t)-C^S_{i,j,k+\frac{1}{2}}(t)\right]-\\[2ex]\Phi_{i,j,k-\frac{1}{2}}\left[C^S_{i,j,k-\frac{1}{2}}(t)-C^S_{i,j,k+\frac{1}{2}}(t)\right]\end{array}\right\}$$

où $$C^S_{.,.,.}(t)\equiv\int_{t_0}^{t}c^S_{.,.,.}(\tau)d\tau\ .$$ En remplaçant alors dans le membre de droite les primitives théoriques $C_{1,j,k}(t)$ par leurs analogues expérimentaux $$C^{S,\exp}_{i,j,k}(t)\equiv\int_{t_0}^{t}c^{S,\exp}_{i,j,k}(\tau)d\tau\ ,$$ on obtient un modèle (ou plus précisément un pseudo-modèle) pour les courbes de concentration théoriques :

$$c_{i,j,k}(t)=-\frac{1}{V}\cdot\left\{\begin{array}{l}\Phi_{i+\frac{1}{2},j,k}\left[C^{S,\exp}_{i+\frac{1}{2},j,k}(t)-C^{S,\exp}_{i,j,k+\frac{1}{2}}(t)\right]-\Phi_{i-\frac{1}{2},j,k}\left[C^{S,\exp}_{i-\frac{1}{2},j,k}(t)-C^{S,\exp}_{i,j,k+\frac{1}{2}}(t)\right]+\\[2ex]\Phi_{i,j+\frac{1}{2},k}\left[C^{S,\exp}_{i,j+\frac{1}{2},k}(t)-C^{S,\exp}_{i,j,k+\frac{1}{2}}(t)\right]-\Phi_{i,j-\frac{1}{2},k}\left[C^{S,\exp}_{i,j-\frac{1}{2},k}(t)-C^{S,\exp}_{i,j,k+\frac{1}{2}}(t)\right]-\\[2ex]\Phi_{i,j,k-\frac{1}{2}}\left[C^{S,\exp}_{i,j,k-\frac{1}{2}}(t)-C^{S,\exp}_{i,j,k+\frac{1}{2}}(t)\right]\end{array}\right\}$$

Par rapport aux modèles cinétiques analytiques qui sont nonlinéaires en tous leurs paramètres, ces modèles ont l'avantage d'être bilinéaires par morceaux en les flux volumiques $\Phi$ et les inverses des sous-volumes $\alpha$ dans le sens où :

- à $\alpha_{i,j,k}$ fixés, ils sont linéaires par morceaux en les flux ;
- à flux volumiques fixés, ils sont linéaires en les $\alpha_{i,j,k}$.

Si les bruits de mesure $\xi(t)$ sont supposés additifs, blancs, stationnaires, homoscédastiques, non-corrélés et Gaussiens, l'étape pour estimer la quantité d'intérêt d'un procédé selon ce second mode de réalisation comporte :

- une sous-étape consistant, à $t_0$ fixé, à produire un estimateur des moindres carrés $\Phi^{LS}(\alpha)$ des flux volumiques en fonction des $\alpha$ en résolvant le système linéaire obtenu en annulant par exemple les dérivées partielles $\dfrac{\partial \chi^2}{\partial \Phi_{.,.,.}}$ de

$$\chi^2\left(\Phi,\alpha,t_0\right)=$$

$$\sum_{(i,j,k)}\sum_{l=1}^{N}\left\{\begin{array}{l}V\cdot c_{i,j,k}^{\exp}\left(t_l\right)+\\[6pt]\Phi_{i+\frac{1}{2},j,k}\left[C_{i+\frac{1}{2},j,k}^{S,\exp}\left(t\right)-C_{i,j,k+\frac{1}{2}}^{S,\exp}\left(t\right)\right]-\Phi_{i-\frac{1}{2},j,k}\left[C_{i-\frac{1}{2},j,k}^{S,\exp}\left(t\right)-C_{i,j,k+\frac{1}{2}}^{S,\exp}\left(t\right)\right]+\\[6pt]\Phi_{i,j+\frac{1}{2},k}\left[C_{i,j+\frac{1}{2},k}^{S,\exp}\left(t\right)-C_{i,j,k+\frac{1}{2}}^{S,\exp}\left(t\right)\right]-\Phi_{i,j-\frac{1}{2},k}\left[C_{i,j-\frac{1}{2},k}^{S,\exp}\left(t\right)-C_{i,j,k+\frac{1}{2}}^{S,\exp}\left(t\right)\right]-\\[6pt]\Phi_{i,j,k-\frac{1}{2}}\left[C_{i,j,k-\frac{1}{2}}^{S,\exp}\left(t\right)-C_{i,j,k+\frac{1}{2}}^{S,\exp}\left(t\right)\right]\end{array}\right\}^2$$

dans le cadre du second modèle cinétique local.

- une sous-étape consistant, à $t_0$ fixé, à produire l'estimateur des moindres carrés linéaires $\alpha^{LS}(\Phi)$ des $\alpha$ en fonction des $\Phi$ en résolvant le système linéaire obtenu en annulant les dérivées partielles $\dfrac{\partial \chi^2}{\partial \alpha_{.,.,.}}$.

L'étape pour estimer la quantité d'intérêt consiste alors à mettre en oeuvre par l'unité de traitement une méthode des moindres carrés linéaires alternés (*alternating linear least squares method* suivant une terminologie Anglo-Saxonne) itérative du type :
Pour chaque $t_l, l = 1, n$

$$\left|\begin{array}{l}\alpha\left(t_l\right)\leftarrow\alpha_0\\[4pt]\text{Répéter}\\[4pt]\quad\left|\begin{array}{l}\Phi\left(t_l\right)\leftarrow\Phi^{LS}\left[\alpha\left(t_l\right)\right]\\[4pt]\alpha\left(t_l\right)\leftarrow\alpha^{LS}\left[\Phi\left(t_l\right)\right]\end{array}\right.\\[14pt]\text{jusqu'à ce que }\left[\Phi\left(t_l\right),\alpha\left(t_l\right)\right]\text{ converge}\\[4pt]\text{Calculer }\chi^2\left[\Phi\left(t_l\right),\alpha\left(t_l\right),t_l\right]\end{array}\right.$$

Estimer $(\Phi,\alpha,t_0)$ par $\underset{l=1,n}{\arg\min}\ \chi^2\left[\Phi\left(t_l\right),\alpha\left(t_l\right),t_l\right]$ dont on prouve la convergence vers un minimum local de $\chi^2(\Phi,\alpha,t_0)$.

En pratique, le problème majeur se situe au niveau de l'étape d'estimation des flux volumiques par

$\Phi(t_l) \leftarrow \Phi^{LS}[\alpha(t_l)]$. En effet, en annulant les dérivées partielles $\dfrac{\partial \chi^2}{\partial \Phi_{.,..,.}}$, nous avons pour chaque flux $\Phi_{.,..,.}$ deux conditions

possibles : $\dfrac{\partial \chi^2}{\partial \Phi_{.,..,.}} = 0$ avec $\Phi_{.,..,.} \geq 0$, $\dfrac{\partial \chi^2}{\partial \Phi_{.,..,.}} = 0$ avec $\Phi_{.,..,.} < 0$.

Ainsi, pour chaque valeur de $t_l$, l'étape d'estimation des flux $\Phi$ par la méthode des moindres carrés linéaires par morceaux nécessite en toute rigueur la résolution de $2^{N_\Phi}$ systèmes d'équations normales linéaires où $N_\Phi$ est le nombre de flux volumiques à estimer. Cela est, bien évidemment, impossible à effectuer en pratique, même pour un nombre de flux modéré. Afin de contourner cette difficulté, une étape conforme à l'invention peut alors consister à déterminer préalablement un sous-modèle cinétique global approprié parmi les $2^{N_\Phi}$ sous-modèles possibles suivant les signes des $N_\Phi$ flux volumiques.

Pour ce faire, suivant une première variante de ce mode de réalisation, on estime dans un premier temps le signe de chaque flux, en ajustant les modèles cinétiques locaux pour tous les éléments de volume intérieurs et frontaliers. Nous avons donc par exemple, suivant les signes des six flux volumiques locaux sortants à travers chaque face d'un voxel courant, au plus $2^6 = 64$ sous-modèles possibles de la cinétique dans ce voxel. Par exemple, si tous les flux sont entrants, nous avons, dans le cadre du premier modèle cinétique local, le sous-modèle local

$$\frac{\partial c_{i,j,k}}{\partial t}(t) = - \left\{ \begin{array}{l} \Phi_{i+\frac{1}{2},j,k} \alpha_{i+1,j,k} c_{i+1,j,k}(t) - \Phi_{i-\frac{1}{2},j,k} \alpha_{i-1,j,k} c_{i-1,j,k}(t) + \\ \Phi_{i,j+\frac{1}{2},k} \alpha_{i,j+1,k} c_{i,j+1,k}(t) - \Phi_{i,j-\frac{1}{2},k} \alpha_{i,j-1,k} c_{i,j-1,k}(t) + \\ \Phi_{i,j,k+\frac{1}{2}} \alpha_{i,j,k+1} c_{i,j,k+1}(t) - \Phi_{i,j,k-\frac{1}{2}} \alpha_{i,j,k-1} c_{i,j,k-1}(t) \end{array} \right\}$$

De même, si tous les flux sont sortants, nous avons le sous-modèle local

$$\frac{\partial c_{i,j,k}}{\partial t}(t) = -\alpha_{i,j,k} c_{i,j,k}(t) \left( \Phi_{i+\frac{1}{2},j,k} - \Phi_{i-\frac{1}{2},j,k} + \Phi_{i,j+\frac{1}{2},k} - \Phi_{i,j-\frac{1}{2},k} + \Phi_{i,j,k+\frac{1}{2}} - \Phi_{i,j,k-\frac{1}{2}} \right)$$

On peut donc préalablement estimer localement les paramètres identifiables de ces 64 (au plus) sous-modèles pour tous les voxels intérieurs et frontaliers (e.g. les termes $\Phi_{i+\frac{1}{2},j,k} \alpha_{i+1,j,k}$, $\Phi_{i-\frac{1}{2},j,k} \alpha_{i-1,j,k} \cdots$ pour le sous-modèle à flux entrants, le terme $\alpha_{i,j,k} \left( \Phi_{i+\frac{1}{2},j,k} - \Phi_{i-\frac{1}{2},j,k} + \Phi_{i,j+\frac{1}{2},k} - \Phi_{i,j-\frac{1}{2},k} + \Phi_{i,j,k+\frac{1}{2}} - \Phi_{i,j,k-\frac{1}{2}} \right)$ pour le sous-modèle à flux sortants) en ajustant par exemple les sous-modèles bilinéaires correspondant par moindres carrés linéaires éventuellement contraints sur $\mathbb{R}^-$ ou $\mathbb{R}^+$ si le signe du paramètre identifiable est connu a priori (e.g.

$\Phi_{i+\frac{1}{2},j,k} \alpha_{i+1,j,k} < 0$, $\Phi_{i-\frac{1}{2},j,k} \alpha_{i-1,j,k} > 0 \cdots$ pour le sous-modèle à flux entrants). Une fois chaque modèle ainsi ajusté, on peut calculer une quantité telle que la probabilité des données sachant le sous-modèle, le AIC *(Akaike Information Criterion selon une terminologie anglo-saxonne)* ou le BIC *(Bayesian Information Criterion selon une terminologie anglo-saxonne)* pour chaque sous modèle de sorte à déterminer le sous-modèle de meilleur ajustement et par conséquent le signe des six flux volumiques dans chaque voxel intérieur ou frontalier.

On obtient ainsi deux estimations du signe d'un flux volumique à travers une face lorsqu'elle est partagée par deux voxels intérieurs ou frontaliers. Si ces deux estimations du signe du flux volumique concordent, alors on choisit les deux sous-modèles locaux correspondants afin d'obtenir le modèle cinétique global à ajuster dans un second temps.

Si ces deux estimations sont discordantes, alors on peut avantageusement ajuster le modèle cinétique local pour le couple de voxels intérieurs ou frontaliers partageant la face à travers laquelle le flux volumique est pris. Nous avons alors par exemple $2^{12-1} = 2048$ sous-modèles suivant les signes des 11 flux volumiques à travers les 11 faces de ce couple de voxels. L'ajustement de ce modèle cinétique local se fait comme décrit précédemment, en ajustant par exemple les sous-modèles bilinéaires correspondant par moindres carrés linéaires éventuellement contraints. On détermine ainsi le signe de ces 11 flux volumiques, en particulier celui dont le signe était discordant à l'issue de la première étape d'estimation.

Bien entendu, malgré cette deuxième étape d'estimation locale des signes des flux volumiques, il se peut que des discordances subsistent et que, par conséquent, le modèle cinétique global résultant ne soit pas parfaitement spécifié localement. Ces erreurs de spécification locales inévitables n'ont cependant qu'un impact local et modéré puisque, par définition, elles apparaissent pour des flux volumiques petits en valeur absolue de sorte que les termes locaux erronés dans le modèle cinétique global sont eux-mêmes petits en valeur absolue.

Outre sa simplicité, l'avantage de ce mode de réalisation par rapport à l'ajustement d'un modèle cinétique analytique global réside principalement dans le fait qu'il permet en pratique d'estimer rapidement un nombre de paramètres arbitrairement grand avec des moyens de calcul conventionnels. En outre, ce mode de réalisation peut être avantageusement utilisé pour initialiser un procédé d'estimation d'une quantité d'intérêt à partir d'un modèle cinétique global analytique tel que décrit précédemment. On peut également avantageusement contraindre les $\alpha$ à être plus

$$\alpha_{\min} = \frac{1}{V \cdot (1 - Ht')}$$

grands que en posant $\alpha' = \alpha - \alpha_{\min}$ et en estimant à chaque étape $\alpha(t_l) \leftarrow \alpha^{LS}[\Phi(t_l)]$ d'une méthode des moindres carrés linéaires alternés telle que décrite précédemment les $\alpha'$ par une méthode des moindres carrés linéaires contraints non-négatifs (*non-negative linear least squares method* suivant une terminologie Anglo-Saxonne). De même, on peut contraindre les flux volumiques à avoir leurs signes égaux à ceux préalablement estimés localement en utilisant à nouveau une méthode des moindres carrés linéaire contraints.

Si les bruits de mesure sont additifs, blancs, stationnaires, non-corrélés, Gaussiens et hétéroscédastiques, suivant un troisième mode de réalisation de l'invention, les moindres carrés décrit précédemment peuvent être remplacés

$$\chi^2(\Phi, \alpha, t_0) = \sum_{(i,j,k)} \sum_{l=1}^{N} \left[ c_{i,j,k}^{\exp}(t_l) - \mathbf{c}_{i,j,k}(t_l) \right]^2 / \sigma_{i,j,k}^2 .$$

par les moindres carrés pondérés L'étape pour estimer la quantité d'intérêt selon un procédé conforme à l'invention peut alors consister à mettre en oeuvre une méthode des moindres carrés pondérés faisable (*feasible weighted least square method* selon une terminologie anglo-saxonne) à moins que les $\sigma_{i,j,k}$ puissent être estimés séparément.

Suivant une seconde variante de ce mode de réalisation, on détermine encore préalablement un modèle cinétique global approprié parmi les $2^{N_\Phi}$ modèle possibles a priori en estimant les signes des flux volumiques pour tous les voxels intérieurs ou frontaliers par ajustement de modèles cinétiques locaux invariants suivant les sens d'écoulement à travers les six faces desdits voxels.

Un tel modèle invariant s'obtient comme suit. La masse signée sortante par la face $F_i$ pendant le laps de temps

$[t, t+\partial t]$ s'écrit $m_i(t) = V_i(t) \cdot c_i^S(t) = c_i^S(t) \cdot \Phi_i^P(t) \cdot \partial t$. Le flux $\Phi_i^P(t)$ étant par définition invariant, au signe près, par inversion du sens de l'écoulement à travers la face $F_i$, la masse signée $m_i(t)$ est elle-même invariante, au signe près, par ladite inversion si et seulement si la concentration massique $c_i^S(t)$ est elle-même invariante par cette inversion, c'est-à-dire si elle est fonction symétrique des concentrations plasmatiques $c^P(t)$ et $c_i^P(t)$ seulement. Par principe de

$$c_i^S(t) = \frac{c_i^P(t) + c^P(t)}{2} .$$

continuité, il convient alors de poser On obtient ainsi un premier modèle cinétique local invariant suivant les sens d'écoulement :

$$\frac{\partial c}{\partial t}(t) = -\frac{1}{V} \cdot \sum_{i=1}^{6} \Phi_i^{\mathrm{P}}(t) \cdot \frac{c_i^{\mathrm{P}}(t) + c^{\mathrm{P}}(t)}{2} =$$

$$-\frac{1}{2} \cdot \sum_{i=1}^{6} \Phi_i^{\mathrm{P}}(t) \cdot \left[ \frac{c_i(t)}{V_i^{\mathrm{P}}} + \frac{c(t)}{V^{\mathrm{P}}} \right] =$$

$$-\frac{1}{2} \cdot \sum_{i=1}^{6} \frac{\Phi_i^{\mathrm{P}}(t)}{V_i^{\mathrm{P}}} \cdot c_i(t) - \frac{c(t)}{2 \cdot V^{\mathrm{P}}} \cdot \sum_{i=1}^{6} \Phi_i^{\mathrm{P}}(t)$$

si on suppose l'écoulement permanent pendant la durée de l'acquisition et un second modèle cinétique local invariant du type

$$\frac{\partial c}{\partial t}(t) = -\frac{1}{2} \cdot \sum_{i=1}^{5} \frac{\Phi_i^{\mathrm{P}}}{V_i^{\mathrm{P}}} \cdot c_i(t) + \frac{1}{2} \cdot \frac{c_6(t)}{V_6^{\mathrm{P}}} \cdot \sum_{i=1}^{5} \Phi_i^{\mathrm{P}}$$

si on suppose l'écoulement toujours permanent.

Ces deux modèles peuvent s'exprimer, comme décrit précédemment, sous la forme de modèles qui sont désormais bilinéaires - et non pas seulement bilinéaires par morceaux - en les flux volumiques et les sous-volumes. On peut donc avantageusement les ajuster aux données expérimentales en tous les voxels intérieurs ou frontaliers par une méthode des moindres carrés linéaires alternés telle que décrite précédemment. On obtient ainsi en particulier une estimation du signe de chaque flux à estimer, permettant ainsi de déterminer un modèle cinétique global non-invariant approprié à ajuster par une méthode telle que celles décrites précédemment.

Tous les modes de réalisation conformes à l'invention sont immédiatement applicables aux données des techniques d'imagerie de perfusion ou de perméabilité disponibles à ce jour du moment où elles sont volumiques. Concrètement, il suffit qu'il n'y ait pas de vide inter-tranche, sans quoi il n'y aurait aucun voxel intérieur. Un procédé d'estimation conforme à l'invention peut avantageusement comporter une étape préalable de recalage temporel des signaux pour chaque tranche tomographique du volume imagé si leurs acquisitions ne sont pas simultanées. Dans le cas de l'ajustement d'un modèle global analytique, cela peut se faire en estimant les courbes de concentration théoriques pour chaque tranche sur une même grille temporelle fine. Dans le cas de l'ajustement d'un modèle, cela peut se faire en pré-interpolant tous les signaux sur cette même grille temporelle fine. En outre, un procédé d'estimation conforme à l'invention peut avantageusement comporter une étape pour de pré-segmenter le volume de l'organe d'intérêt afin de déterminer les voxels extérieurs et frontaliers.

Il convient d'observer que, à l'inverse des méthodes connues suivant l'état de l'art qui permettent tout au plus d'obtenir des valeurs relatives définies à une constante multiplicative près (i.e. *relative blood flow - rBF -*, *relative blood volume - rBV -* suivant une terminologie anglo-saxonne), les estimations des flux volumiques et des sous-volumes du fluide transportant l'agent de contraste dans un voxel suivant l'invention sont quasiment absolues notamment dans le cas où le voxel est situé dans une zone de tissu homogène et cela quelle que soit la technique tomographique par agent de contraste employée, en particulier les techniques d'imagerie par résonance magnétique nucléaire. En effet, la méthode n'est déjà pas sujette au problème des volumes partiels puisque ceux-ci sont pris en compte par construction. De plus, dans une zone de tissu homogène il est légitime de considérer que la relation entre les signaux obtenus par les techniques d'imagerie et les courbes de concentration (en particulier les valeurs des constantes $k$ décrites précédemment) est quasiment la même pour tous les voxels de cette zone. Les estimations des flux et des volumes dans un voxel dépendant essentiellement des concentrations dans ce voxel et dans ses six voisins au plus, si les concentrations sont bien déterminées à la même constante $k$ près sur ces sept voxels, elles sont bien quasiment absolues.

Outre les flux volumiques et les sous-volumes estimés comme décrit précédemment pour chaque élément de volume, l'invention permet de déterminer d'autres quantités d'intérêt. Par souci de concision, nous considérons le cas où lesdits éléments de volume sont des voxels parallélépipédiques mais les quantités d'intérêt se généralisent à des pavages polyédriques quelconques.

Les faces d'un voxel étant des surfaces planes, nous avons par exemple pour la face $F$ orientée suivant le vecteur $\vec{x}$

$$\Phi_i^v = \iint_F \vec{v}(x,y,z) \cdot \overrightarrow{d\Sigma} = \iint_F \vec{v}(x,y,z) \cdot \vec{x}\, dS = \iint_F v_x(y,z)\, dy\, dz = S_x \langle v_x \rangle$$

$$S_x = \iint_F dy\,dz$$

où (est la mesure de $F$) est la mesure de $F$ et $\langle v_x \rangle$ est la $F$ composante moyenne suivant l'axe $\vec{x}$ de la vitesse du fluide transportant l'agent de contraste la traversant.

Avec les conventions d'orientation et les notations précédentes, l'unité de traitement conforme à l'invention peut ainsi calculer une quantité d'intérêt vectorielle sous la forme d'un champ de vecteur vitesse moyen canonique en les voxels intérieurs ou frontaliers par

$$\vec{v}_{i,j,k} \equiv \left(v_x, v_y, v_z\right)_{i,j,k} \equiv \left( \frac{\Phi_{i-\frac{1}{2},j,k} + \Phi_{i+\frac{1}{2},j,k}}{2S_x}, \frac{\Phi_{i,j-\frac{1}{2},k} + \Phi_{i,j+\frac{1}{2},k}}{2S_y}, \frac{\Phi_{i,j,k-\frac{1}{2}} + \Phi_{i,j,k+\frac{1}{2}}}{2S_z} \right)$$

ou sous la forme d'une vitesse d'écoulement moyenne en prenant une norme telle que la norme Euclidienne $\langle v_{i,j,k} \rangle = \sqrt{v_x^2 + v_y^2 + v_z^2}$ dudit vecteur vitesse.

Soit $S_i$ l'aire de la face $F_i$, $i$=1,6 du voxel et soit $L_i$ la longueur du voxel dans la direction orthogonale à $F_i$. L'invention prévoit également que l'unité de traitement puisse calculer une quantité d'intérêt sous la forme d'un temps de transit moyen local signé de l'agent de contraste (*Mean Transit Time - MTT* - selon une terminologie anglo-saxonne)

$$MTT_i = \frac{L_i}{\langle v_i \rangle} = \frac{L_i S_i}{\Phi_i^v} = \frac{V}{\Phi_i^v}$$

où $V$ est la

du centre du voxel courant au centre du voxel voisin à travers la face $F_i$ par mesure du volume du voxel et $\Phi_i^v$ est le flux volumique sortant par la face $F_i$ préalablement estimé.

En outre, selon l'invention l'unité de traitement peut estimer des quantités d'intérêt sous la forme de vecteurs ou de champs de vecteurs telles que l'accélération particulaire $(\vec{v}.\vec{\nabla})\vec{v}$ pour un écoulement permanent, le jerk particulaire ou le snap particulaire ou des quantités scalaires telles qu'une norme desdits vecteurs.

A partir du champ de vecteur $\vec{v}_{i,j,k}$ en tous les voxels intérieurs ou frontaliers, l'invention prévoit au-delà que l'unité de traitement puisse estimer d'autres quantités d'intérêt sous la forme de lignes de courant de l'écoulement du fluide transportant l'agent de contraste, de trajectoires, de lignes d'émission à partir d'un point matériel donné ou encore de lignes fluides.

En particulier, l'étape d'estimation de lignes de courant peut être mise en oeuvre en déterminant les solutions

$$\frac{dx}{v_x} = \frac{dy}{v_y} = \frac{dz}{v_z}$$

de l'équation différentielle comme il est coutume de le faire en tractographie, par exemple dans le cadre de l'imagerie du tenseur de diffusion pour la visualisation des axones (*fiber tracking* suivant une terminologie anglo-saxonne). Si l'écoulement est permanent, les lignes de courant estimées sont confondues avec les trajectoires du fluide transportant l'agent de contraste et les lignes d'émission.

En particulier, l'unité de traitement selon l'invention peut estimer un temps de propagation d'un point en amont à un point en aval le long d'une trajectoire préalablement estimée.

Enfin, bien que la question « comment le tissu est-il perfusé ? » reste mal posée tant que la surface ouverte de perfusion n'est pas définie, on peut néanmoins tâcher de répondre au besoin d'une unique mesure de perfusion par voxel en introduisant le flux absolu total $\sum_{i=1}^{6} |\Phi_i|$, le flux absolu maximum $\max_{i=1,6} |\Phi_i|$, le flux quadratique total $\sum_{i=1}^{6} \Phi_i^2$ ou encore le flux quadratique maximum $\max_{i=1,6} \Phi_i^2$. Il convient seulement de garder à l'esprit que ces quantités ne sont plus des paramètres physiques définis dans le cadre de la Cinématique des fluides.

L'invention prévoit encore que l'unité de traitement puisse calculer de quantités complémentaires associées aux quantités d'intérêt décrites précédemment telles qu'un intervalle de confiance sur une estimation d'une quantité d'intérêt, un pari sur ledit intervalle de confiance, une distribution de probabilité a posteriori conjointe ou marginale, une estimation de la probabilité d'un modèle cinétique sachant les données, une estimation d'une courbe de concentration théorique, des résidus entre une courbe de concentration théorique estimée et une courbe de concentration expérimentale et leur somme quadratique, une estimation d'un signal théorique, des résidus entre un signal théorique estimé et un signal expérimental et leur somme quadratique.

L'invention prévoit avantageusement que l'unité de traitement puisse formater voire encoder une quantité d'intérêt estimée 14 sous la forme d'un contenu 14' exploitable par un dispositif de restitution éventuellement distant. La production d'un tel contenu peut dépendre de l'interface homme-machine disponible pour restituer la quantité ou de la manière dont un utilisateur souhaite en disposer.

Suivant un deuxième objet, l'invention concerne au même titre que l'art antérieur un système d'analyse d'imagerie tomographique tel que décrit en liaison avec les figures 1 et 2. Celui-ci comporte une unité de traitement 4 telle que décrite précédemment coopérant avec un dispositif de restitution 5 comportant une interface homme-machine. Ledit système est apte à restituer à un utilisateur 6 une quantité estimée 14 selon un procédé conforme à l'invention mis en oeuvre par ladite unité de traitement 4. Cette quantité est éventuellement traduite sous la forme d'un contenu 14' élaboré par l'unité de traitement 4 selon un format approprié à l'interface homme-machine dudit dispositif de restitution 5.

Bien que les quantités d'intérêt estimées selon l'invention soient toutes inédites, certaines d'entre-elles peuvent être restituées à l'utilisateur 6 sous une forme similaire à celle de certaines quantités estimées selon l'art antérieur. Ainsi, le dispositif de restitution 5 met en oeuvre un procédé de restitution d'une quantité d'intérêt relative à un écoulement d'un fluide corporel dans un organe à partir de signaux expérimentaux 15 délivrés par un système de mesure tomographique et reliés aux concentrations d'un agent de contraste au sein de volumes polyédriques donnés. Ledit procédé comporte une étape pour lire une quantité d'intérêt 14 (ou un contenu 14' la représentant) et la restituer via une interface homme-machine adaptée. La carte du paramètre *BF* décrite en liaison avec la figure 8 est un exemple classique d'une telle restitution.

D'autre part, l'invention permet d'estimer des quantités d'intérêt qui nécessitent une restitution également inédite. Dans ce cas, l'invention concerne en outre un procédé de restitution innovant.

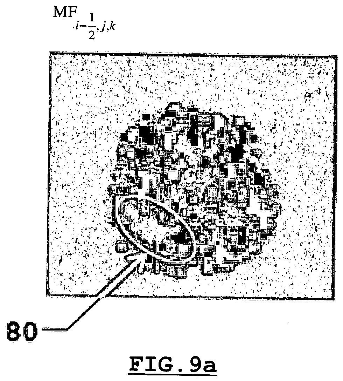

Les figures 9a, 9b, 10, 11 et 12 permettent d'illustrer quelques exemples de restitution de quantités d'intérêt inédites estimées conformément à l'invention à partir du même cas patient que celui en liaison avec la figure 8. De telles restitutions sont exploitables à présent par un praticien utilisant un dispositif de restitution comportant une interface homme-machine idoine et mettant en oeuvre un procédé de restitution conforme à l'invention.

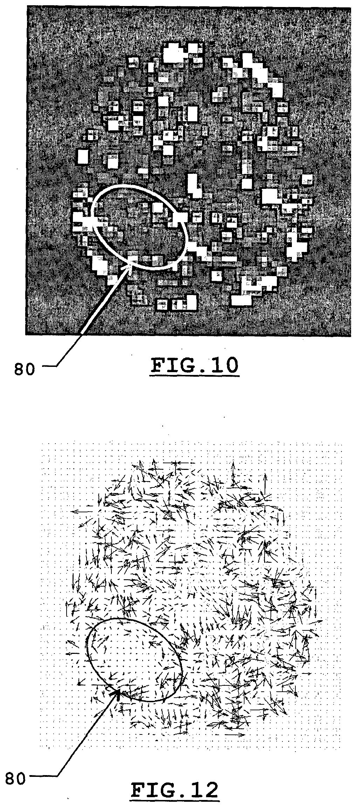

Ainsi, l'invention prévoit un dispositif de restitution pour afficher des estimations de paramètres scalaires tels que des sous-volumes, des normes de vecteurs vitesse ou de vecteurs accélération, jerks ou snaps particuliers, des flux absolus ou quadratiques totaux, des flux absolus ou quadratiques maximum sous forme de « cartes de paramètres » tomographiques choroplèthes ou de rendus tridimensionnels où l'intensité ou la couleur de chaque pixel ou voxel dépend de la valeur estimée en ce pixel ou voxel, par exemple de manière linéaire. A titre d'exemple, la figure 11 illustre une carte d'estimations des normes euclidiennes des vecteurs vitesse plasmatiques suivant l'invention. On constate un effondrement clair desdites vitesses plasmatiques dans la même zone hypoperfusée 80 qui apparait mieux délimitée que dans la figure 8 selon l'art antérieur. De même, la figure 10 illustre une carte d'estimation de sous-volumes plasmatiques élaborée par un dispositif de restitution conforme à l'invention. Chaque pixel est colorié par une couleur dépendant de la valeur estimée du sous-volume. On constate à nouveau un effondrement desdits sous-volumes dans la zone hypoperfusée 80 par rapport à l'hémisphère controlatéral.

Pour une quantité d'intérêt associée selon l'invention à une face d'un volume polyédrique telle qu'un flux volumétrique, une vitesse moyenne ou un temps de transit moyen à travers ladite face, l'invention prévoit la mise en oeuvre par un dispositif de restitution 5 d'un procédé de restitution comportant une étape pour restituer une représentation de ladite face dépendant de la valeur de la quantité d'intérêt pour ladite face. A titre d'exemple, la figure 9a décrit une représentation sous la forme d'une carte choroplèthe $\mathrm{MF}_{i-\frac{1}{2},j,k}$ des flux volumiques plasmatiques à travers les faces respectives $i-\frac{1}{2},j,k$ obtenue en coloriant chaque pixel de coordonnées (*i,j,k*) de la carte par une couleur dépendant de la valeur de $\Phi_{i-\frac{1}{2},j,k}$. De même, la quantité d'intérêt peut moduler la longueur, l'épaisseur, la texture ou plus généralement la géométrie ou la topologie de la représentation de ladite face.

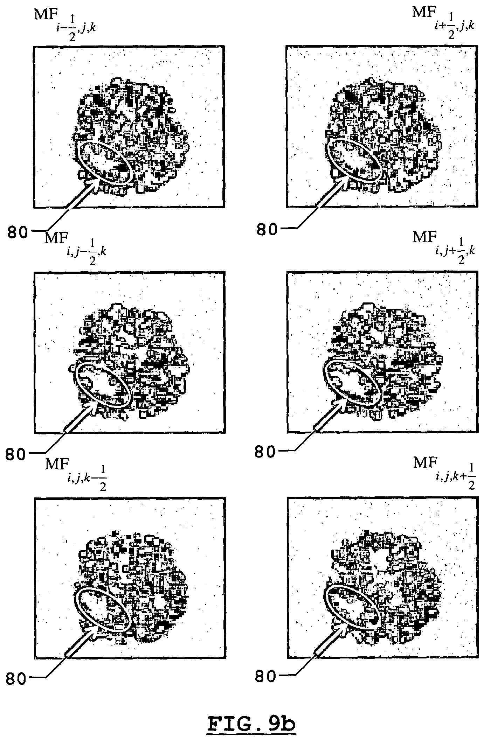

L'invention prévoit en outre que le procédé de restitution puisse consister à restituer une pluralité de cartes choroplèthes respectivement associées à l'une des faces des volumes polyédriques. Ainsi la figure 9b décrit une représentation des flux volumiques plasmatiques à travers les six faces de volumes parallélépipédiques (c'est-à-dire de voxels) sous la forme de six cartes choroplèthes $\mathrm{MF}_{i+\frac{1}{2},j,k}$, $\mathrm{MF}_{i-\frac{1}{2},j,k}$, $\mathrm{MF}_{i,j+\frac{1}{2},k}$, $\mathrm{MF}_{i,j-\frac{1}{2},k}$, $\mathrm{MF}_{i,j,k+\frac{1}{2}}$, $\mathrm{MF}_{i,j,k-\frac{1}{2}}$ obtenues de manière similaire à la carte $\mathrm{MF}_{i-\frac{1}{2},j,k}$ décrite en liaison avec la figure 9a.

$$\text{MF}_{i,j,k-\frac{1}{2}} \qquad \Phi_{i,j,k-\frac{1}{2}} \qquad i,j,k-\frac{1}{2}.$$

Ainsi la carte $\text{MF}_{i,j,k-\frac{1}{2}}$ représente les flux $\Phi_{i,j,k-\frac{1}{2}}$ à travers les faces respectives $i,j,k-\frac{1}{2}$. Sur chacune des six cartes, on constate comme en figure 8 un effondrement des flux en valeur absolue dans la même zone hypoperfusée 80, qui apparaissent ici en gris (et non pas en noir comme dans la figure 8) puisque les flux peuvent être désormais positifs ou négatifs. On voit, grâce à une interface adaptée, que les flux volumiques plasmatiques estimés suivant l'invention permettent d'identifier des zones hypoperfusées. Il est en de même pour les flux plasmatiques représentés par la carte décrite en liaison avec la figure 9a. L'invention prévoit que l'utilisateur puisse choisir les cartes qu'il souhaite visualiser par le truchement de commandes utilisateur.

Au lieu de restituer les quantités d'intérêt pour chaque face tel que décrit par exemple en liaison avec la figure 9b, un procédé de restitution selon l'invention prévoit d'associer des couleurs de base à des faces d'un volume polyédrique et de colorier une représentation dudit volume par une couleur synthétisée en mélangeant lesdites couleurs de base, les intensités respectives desdites couleurs dépendant des valeurs de la quantité d'intérêt estimée pour chacune desdites faces. Par exemple, une représentation d'un volume parallélépipédique (par exemple un voxel) peut être coloriée par hexachromie (avantageusement au moyen d'un modèle de couleur CcMmYK) avec une couleur de base par face dudit volume en mélangeant lesdites couleurs suivant les valeurs respectives des six flux volumiques ou des six temps de transit moyens ou des six vitesses à travers chacune des six faces dudit volume parallélépipédique. De manière plus générale, l'invention prévoit de pouvoir restituer une représentation d'un volume polyédrique dépendant de la valeur d'une quantité d'intérêt associée à une face dudit volume, par exemple en modulant la longueur, l'épaisseur, la texture ou plus généralement la géométrie ou la topologie de la représentation dudit volume en lieu et place de la couleur.

Certaines des quantités d'intérêt inédites estimées selon l'invention sont vectorielles, par exemple les vecteurs vitesse, les vecteurs accélération particulaire, les vecteurs jerks particulaires ou encore les vecteurs snaps particulaires. Un procédé de restitution d'une telle quantité d'intérêt vectorielle suivant l'invention peut consister à restituer par une interface homme-machine idoine (par exemple un écran, une imprimante, etc.), pour un volume polyédrique donné, une flèche partant d'une représentation dudit volume dont la longueur est proportionnelle à une norme de la quantité vectorielle associée audit volume et dont la direction est celle de ladite quantité vectorielle (*quiver* ou *velocity plot* selon une terminologie anglo-saxonne). La figure 12 illustre une telle représentation pour les projections de vecteurs vitesse plasmatiques dans le plan de coupe (*x,y*) sous la forme d'une carte. La zone hypoperfusée 80 est encore clairement visible : on constate en effet que les vitesses y sont significativement moindres qu'ailleurs, conformément à ce à quoi on peut s'attendre du point de vue physiopathologique.

En variante, un procédé de restitution d'une telle quantité d'intérêt vectorielle conforme à l'invention peut consister à associer respectivement trois couleurs primaires telles que rouge, vert et bleu aux trois vecteurs de base $\vec{x}$, $\vec{y}$ et $\vec{z}$ puis à colorier une représentation d'un volume polyédrique à partir desdites couleurs primaires dont les intensités respectives dépendent des composantes de ladite quantité.

D'autre part l'invention permet l'estimation de trajectoires, de lignes de courant, de lignes d'émission ou encore de lignes fluides. L'invention prévoit donc un procédé de restitution consistant à restituer une desdites estimations sous la forme d'une représentation d'un arc paramétré dans l'espace euclidien à trois dimensions. En particulier, l'invention prévoit qu'un dispositif de restitution puisse avantageusement afficher sur un écran à chaque instant une représentation de la portion dudit arc paramétré parcouru jusqu'à cet instant. Ce rendu ou toute autre restitution peut se faire par exemple soit de manière animée soit de manière statique en juxtaposant des représentations de portions dudit arc à différents instants.

En outre, l'invention prévoit qu'une représentation d'une position dans un tel arc paramétré à un instant donné puisse dépendre de la valeur estimée d'une quantité d'intérêt selon l'invention audit instant. Par exemple, un procédé de restitution mis en oeuvre par un dispositif conforme à l'invention peut consister à colorier ladite représentation d'une position par une couleur dépendant du temps de parcours nécessaire estimé pour atteindre cette position à partir d'une position de départ donnée située en amont dudit arc paramétré. De même, la longueur d'une représentation d'une position dans un arc paramétré à un instant donné peut dépendre de la valeur estimée d'une quantité d'intérêt audit instant telle que la vitesse d'écoulement ou l'accélération particulaire en cette position dans le cas d'un écoulement permanent.

De manière plus générale, l'invention prévoit encore un procédé de restitution consistant à restituer au travers d'une interface homme-machine idoine des cartogrammes de distance obtenus par anamorphose suivant une quantité d'intérêt d'une représentation graphique d'intérêt. Par exemple, une telle représentation graphique peut être un rendu bi- ou tridimensionnel de l'anatomie d'un organe d'intérêt affiché/imprimé sur un écran ou tout autre support déformée suivant les temps de parcours du sang dans le système vasculaire de cet organe.

D'autre part, l'invention prévoit éventuellement de restituer des quantités complémentaires - telles que des intervalles de confiance pour ces estimations - par exemple sous la forme de « cartes ou de rendus tridimensionnels de confiance » ainsi que des paris sur lesdits intervalles de confiance sous la forme de « cartes ou de rendus tridimensionnels de paris ». L'invention prévoit également à titre d'exemple préféré le rendu de distances entre courbes de concentration ou signaux théoriques estimés et expérimentaux telles que la somme des résidus quadratiques (*sum of squared errors* - SSE - suivant une terminologie anglo-saxonne) ou la probabilité de la courbe de concentration ou du signal expérimentaux sachant le modèle sous la forme de « cartes ou de rendus tridimensionnels d'erreur ». Pour ce qui est des estimations des courbes de concentration théoriques, des signaux théoriques ou encore des résidus entre courbes de concentration ou signaux théoriques et expérimentaux, l'invention prévoit leur affichage sous forme de séries temporelles pour chaque voxel où l'utilisateur le demande.

Grâce aux exemples de restitution présentés précédemment, l'invention permet de mettre à la disposition d'un utilisateur tout un ensemble d'informations particulièrement aidantes par exemple pour un praticien pour élaborer un diagnostic ou prendre une décision thérapeutique, informations qui ne pouvaient être disponibles à l'aide des techniques connues de l'état de l'art. Cette mise à disposition est rendue possible en adaptant l'unité de traitement 4 et le dispositif de restitution 5 coopérant avec ladite unité selon les figures 1 ou 2 pour respectivement estimer une quantité d'intérêt 14 (voire délivrer un contenu 14' représentant ladite quantité) et restituer celle-ci à l'utilisateur 6 par une interface homme-machine par exemple sous la forme de cartes ou de rendus tridimensionnels tels qu'illustrés par les figures 9a, 9b, 10, 11 et 12. Cette adaptation peut être accomplie une fois pour toutes au moyen de programmes d'ordinateur ad hoc et dédiés dont les instructions exécutables par des moyens de traitement de l'unité de traitement 4 et du dispositif de restitution 5 mettent en oeuvre un procédé d'estimation et/ou de restitution conforme à l'invention lors de leur exécution.

Grâce à l'invention, les informations délivrées sont ainsi plus nombreuses et plus justes. Les informations dont dispose le praticien sont ainsi de nature à accroître sa confiance dans sa détermination d'un diagnostic ou sa prise de décision thérapeutique.

Pour améliorer les performances du système selon l'invention, celle-ci prévoit notamment que l'unité de traitement puisse être dotée de moyens de calcul matériels dédiés tels que les microprocesseurs graphiques (*Graphical Processor Unit* - GPU - selon une terminologie anglo-saxonne), les circuits logiques programmables tels que les FPGA (*Field-Programmable Gate Array* selon une terminologie anglo-saxonne) ou les grappes de calcul (*clusters* selon une terminologie anglo-saxonne). En variante, l'unité de traitement conforme à l'invention peut s'appuyer sur des moyens de calcul distants. Les temps de calculs peuvent ainsi être encore considérablement réduits si nécessaire. Il en va de même pour un dispositif de restitution tel que le prévoit l'invention. En outre, une unité de traitement et un dispositif de restitution conformes à l'invention peuvent consister en une même entité.

A titre d'exemple d'application, nous pouvons citer les principales étapes de mise en oeuvre de l'invention au moyen d'un système d'analyse d'imagerie tomographique, tel que celui décrit en liaison avec figures 1 ou 2 :

- ouverture d'un dossier patient ou prise en compte de séquences d'images par l'unité de traitement 4 (ou de prétraitement 7) pour sélectionner des séquences d'images d'intérêt - en particulier, sélection des images I1 à In de perfusion ou de perméabilité au cours du temps à partir desquelles sont obtenus les signaux de perfusion ou de perméabilité $s(x,y,z,t)$ pour chaque voxel, tel qu'illustré en figure 5a ;
- prévisualisation au moyen d'une interface homme-machine des images pour permettre à un utilisateur 6 d'identifier des tranches ou des zones d'intérêt ;
- configuration de l'unité de traitement 4 à partir d'un programme d'ordinateur dédié et de paramètres de configuration (informations introduite) pour permettre la mise en oeuvre du procédé d'estimation conforme à l'invention ;
- choix de la (ou les) quantité(s) d'intérêt à estimer ;
- estimation par l'unité de traitement 4 de quantités d'intérêt tels que des flux volumiques, des sous-volumes, des temps de transit moyen, des flux totaux absolus ou quadratiques, des flux maximaux absolus ou quadratiques, des vecteurs vitesse, des vitesses, des accélérations, des jerks, des snaps particulaires ou leur norme Euclidiennes, des trajectoires, des lignes de courant, des lignes d'émission ou des lignes fluides, etc. ;
- estimation de quantités d'intérêt complémentaires telles que des intervalles de confiance sur les estimations desdites quantités d'intérêt, des paris sur lesdits intervalles de confiance, des distributions de probabilité a posteriori conjointes ou marginales, la probabilité du modèle sachant les données, des courbes de concentration théoriques estimées, des résidus entre courbes théoriques estimées et courbes expérimentales et leurs sommes quadratiques, des signaux d'intensité théoriques estimés, des résidus entre signaux théoriques estimés et signaux expérimentaux et leurs sommes quadratiques, etc. ;
- délivrance desdites quantités d'intérêt estimées 14 à un dispositif de restitution 5 (si nécessaire préalablement adapté au moyen d'un programme d'ordinateur dédié selon l'invention) pour que celui-ci les restitue *in fine* via une interface homme-machine idoine par exemple sous la forme de cartes ou de rendus tridimensionnels ;
- affichage optionnel de cartes ou de rendus tridimensionnels de confiance ou de paris sur ces intervalles de confiance, de cartes d'erreurs quadratiques, de courbes de concentration ou de signaux théoriques estimées (...) pour certains voxels choisi par l'utilisateur (commandes 16) via une interface du dispositif 5 ;
- sélection assistée de ladite zone pathologique d'intérêt par le praticien, caractérisée par une anomalie de la distribution d'une ou de plusieurs quantités d'intérêt ;
- identification d'une zone de tissus anormalement perfusée éventuellement connexe à une zone lésée et pour laquelle le praticien pourra peaufiner son diagnostic et être efficacement aidé dans sa prise de décision thérapeutique (e.g. thrombolyse intraveineuse afin de résorber le caillot sanguin par exemple dans le traitement de certains accidents vasculaires cérébraux) ;

- production par l'unité de traitement 4 ou par le dispositif de restitution 5, de certaines quantités complémentaires, telles qu'un ratio des volumes des zones lésée et anormalement perfusée...

L'invention a été décrite préférentiellement au travers d'une application en lien avec l'imagerie médicale (notamment de perfusion ou de perméabilité). Toutefois, l'invention ne saurait être limitée à cet exemple d'application préféré. Ainsi, l'invention concerne tout procédé ou système pour estimer une quantité d'intérêt en lien avec un écoulement au sein d'un système cinématique. On pourrait exploiter l'invention pour estimer et délivrer un rendu concernant l'écoulement d'un fluide au sein d'un système par exemple sous-terrain ou au sein de tout autre corps traversé par un fluide que l'on souhaite caractériser.

## Revendications

1. Procédé pour produire une estimation d'une quantité d'intérêt (14) relative à un écoulement d'un fluide inhomogène dans un système dynamique artère/tissu/veine à partir de signaux expérimentaux (15) délivrés par un système de mesure tomographique et reliés aux concentrations d'un agent de contraste au sein de volumes polyédriques donnés, ledit procédé étant mis en oeuvre par une unité de traitement (4), le procédé étant **caractérisé en ce qu'**il comporte une étape pour estimer ladite quantité d'intérêt à partir d'un modèle cinétique et paramétrique comportant une pluralité de paramètres dont un flux à travers une face d'un desdits volumes polyédriques donnés.

2. Procédé selon la revendication précédente, **caractérisé en ce que** ledit modèle cinétique comporte une pluralité de paramètres dont un flux à travers chaque face d'un desdits volumes polyédriques donnés.

3. Procédé selon les revendications 1 ou 2, selon lequel le modèle cinétique et paramétrique est exprimé sous la forme d'un modèle bilinéaire par morceaux en les flux volumiques à travers les faces d'un desdits volumes polyédriques donnés et les sous-volumes dudit un desdits volumes polyédriques donnés.

4. Procédé selon la revendication précédente, selon lequel l'étape pour estimer ladite quantité d'intérêt comporte une étape pour estimer les paramètres du modèle par une méthode des moindres carrés linéaires alternés.

5. Procédé selon l'une quelconque des revendications précédentes, selon lequel il comporte en outre une étape pour produire une quantité complémentaire associée à la quantité d'intérêt estimée ou associée au modèle cinétique.

6. Procédé selon l'une quelconque des revendications précédentes, l'écoulement étant celui d'un fluide corporel dans un organe d'intérêt.

7. Procédé selon l'une quelconque des revendications précédentes, selon lequel la quantité d'intérêt estimée est un flux à travers une face d'un volume polyédrique donné, un flux par unité de surface, un sous-volume dudit volume polyédrique donné, un vecteur vitesse d'écoulement, une vitesse d'écoulement, un temps de transit moyen local d'un volume polyédrique à l'un de ses voisins, un vecteur d'accélération particulaire, une accélération particulaire, un vecteur jerk particulaire, un jerk particulaire, un vecteur snap particulaire, un snap particulaire, un flux absolu ou quadratique total ou un flux absolu ou quadratique maximal.

8. Procédé selon l'une quelconque des revendications 1 à 6, selon lequel la quantité d'intérêt estimée est un champ de flux à travers des faces respectives de volumes polyédriques donnés, un champ de sous-volumes desdits volumes polyédriques donnés, un champ de vecteurs vitesse d'écoulement, un champ de vitesses d'écoulement, une position d'un point matériel du fluide, un champ de temps de transits moyens locaux d'un volume polyédrique à l'un de ses voisins, un champ de vecteurs accélération particulaire, un champ d'accélérations particulaires, un champ de vecteurs jerks particulaires, un champ de jerks particulaires, un champ de vecteurs snaps particulaires, un champ de snaps particulaires, un champ de flux absolus ou quadratiques totaux, un champ de flux absolus ou quadratiques maximaux ou un temps de propagation le long d'une trajectoire de l'écoulement.

9. Procédé selon la revendication précédente lorsque la quantité d'intérêt estimée est un champ de vecteurs vitesse d'écoulement, **caractérisé en ce qu'**il comporte en outre une étape pour estimer une trajectoire, une ligne de courant, une ligne d'émission ou une ligne fluide à partir dudit champ de vecteurs vitesse estimé.

**10.** Procédé selon l'une quelconque des revendications précédentes, ledit procédé comporte une étape pour produire un contenu (14') représentant ladite quantité d'intérêt, ledit contenu étant destiné à être exploité par un dispositif de restitution idoine.

**11.** Procédé selon la revendication précédente, selon lequel, il comporte en outre une étape pour délivrer le contenu (14') préalablement produit.

**12.** Procédé de restitution d'une quantité d'intérêt estimée selon un procédé conforme à l'une quelconque des revendications 1 à 11, ladite quantité d'intérêt étant relative à un écoulement d'un fluide corporel dans un organe à partir de signaux expérimentaux (15) délivrés par un système de mesure tomographique et reliés aux concentrations d'un agent de contraste au sein de volumes polyédriques donnés, ledit procédé de restitution étant mis en oeuvre par un dispositif de restitution (5) comportant une interface homme-machine et **caractérisé en ce qu'**il comporte une étape pour restituer par ladite interface homme-machine une représentation d'une face d'un volume polyédrique dépendant de la valeur de la quantité d'intérêt pour ladite face.

**13.** Procédé de restitution d'une quantité d'intérêt estimée selon un procédé conforme à l'une quelconque des revendications 1 à 11, ladite quantité d'intérêt étant relative à un écoulement d'un fluide corporel dans un organe à partir de signaux expérimentaux (15) délivrés par un système de mesure tomographique et reliés aux concentrations d'un agent de contraste au sein de volumes polyédriques donnés, ledit procédé de restitution étant mis en oeuvre par un dispositif de restitution (5) comportant une interface homme-machine et **caractérisé en ce qu'**il comporte une étape pour restituer par ladite interface homme-machine une représentation d'une pluralité de faces d'un volume polyédrique dépendant des valeurs de la quantité d'intérêt pour lesdites faces.

**14.** Procédé de restitution d'une quantité d'intérêt estimée selon un procédé conforme à l'une quelconque des revendications 1 à 11, ladite quantité d'intérêt étant relative à un écoulement d'un fluide corporel dans un organe à partir de signaux expérimentaux (15) délivrés par un système de mesure tomographique et reliés aux concentrations d'un agent de contraste au sein de volumes polyédriques donnés, ledit procédé de restitution étant mis en oeuvre par un dispositif de restitution (5) comportant une interface homme-machine et **caractérisé en ce qu'**il comporte une étape pour restituer par ladite interface homme-machine une représentation d'un volume polyédrique dépendant de la valeur de ladite quantité d'intérêt associée à une face dudit volume polyédrique.

**15.** Procédé selon la revendication précédente, pour lequel la quantité d'intérêt est vectorielle et l'étape pour restituer par l'interface homme-machine consiste à restituer une flèche dont la longueur est proportionnelle à une norme de la quantité vectorielle associée audit volume et dont la direction est celle de ladite quantité.

**16.** Procédé selon la revendication 14, pour lequel la quantité d'intérêt est vectorielle et l'étape pour restituer par l'interface homme-machine consiste à restituer une représentation d'un volume polyédrique coloriée à partir de trois couleurs primaires dont les intensités respectives dépendent des composantes de la quantité vectorielle associée audit volume.

**17.** Procédé de restitution d'une trajectoire, d'une ligne de courant, d'une ligne d'émission ou d'une ligne fluide, respectivement estimées selon un procédé conforme à l'une quelconque des revendications 9 à 11 et relatives à un écoulement d'un fluide corporel dans un organe à partir de signaux expérimentaux (15) délivrés par un système de mesure tomographique et reliés aux concentrations d'un agent de contraste au sein de volumes polyédriques donnés, ledit procédé de restitution étant mis en oeuvre par un dispositif de restitution (5) comportant une interface homme-machine et comportant une étape pour restituer par ladite interface homme-machine une représentation d'un arc paramétré correspondant à la trajectoire ou la ligne de courant ou la ligne d'émission ou la ligne fluide.

**18.** Procédé selon la revendication précédente, selon lequel une représentation d'une position dans l'arc paramétré à chaque instant dépend de la valeur d'une quantité d'intérêt audit instant.

**19.** Procédé selon l'une des revendications 17 ou 18, selon lequel est restituée, à chaque instant, une représentation de la portion de l'arc paramétré parcouru jusqu'à cet instant.

**20.** Procédé de restitution d'une quantité d'intérêt estimée selon un procédé conforme à l'une quelconque des revendications 1 à 11, ladite quantité d'intérêt étant relative à un écoulement d'un fluide corporel dans un organe à partir de signaux expérimentaux (15) délivrés par un système de mesure tomographique et reliés aux concentrations d'un agent de contraste au sein de volumes polyédriques donnés, ledit procédé de restitution étant mis en oeuvre par un dispositif de restitution (5) comportant une interface homme-machine et caractérisé en qu'il comporte une étape pour restituer par ladite interface homme-machine une représentation choroplèthique d'un volume déformée par anamorphose suivant ladite quantité d'intérêt.

21. Unité de traitement (4) comportant des moyens de mémorisation et des moyens pour communiquer avec le monde extérieur coopérant avec des moyens de traitement, **caractérisée en ce que** :

- les moyens pour communiquer sont aptes à recevoir du monde extérieur des signaux expérimentaux (15) délivrés par un système de mesure tomographique, lesdits signaux étant reliés aux concentrations d'un agent de contraste au sein de volumes polyédriques donnés d'un système cinématique ;
- les moyens de mémorisation comportent des instructions exécutables par les moyens de traitement mettant en oeuvre un procédé pour estimer une quantité d'intérêt (14) selon l'une quelconques des revendications 1 à 9 lorsqu'ils les exécutent.

22. Unité de traitement selon la revendication précédente, selon laquelle :

- les moyens pour communiquer sont en outre aptes à délivrer au monde extérieur un contenu (14') représentant une quantité d'intérêt ;
- les moyens de mémorisation comportent des instructions exécutables par les moyens de traitement mettant en oeuvre un procédé pour estimer une quantité d'intérêt (14) selon les revendications 10 ou 11 lorsqu'ils les exécutent.

23. Dispositif de restitution (5) comportant des moyens de mémorisation, une interface homme-machine et des moyens pour communiquer avec le monde extérieur coopérant respectivement avec des moyens de traitement, **caractérisé en ce que** :

- les moyens pour communiquer sont aptes à recevoir du monde extérieur une quantité d'intérêt (14) relative à un écoulement d'un fluide corporel dans un organe à partir de signaux expérimentaux (15) délivrés par un système de mesure tomographique et reliés aux concentrations d'un agent de contraste au sein de volumes polyédriques donnés ;
- l'interface homme-machine est apte à restituer à un utilisateur (6) une représentation de la quantité d'intérêt ;
- les moyens de mémorisation comportent des instructions exécutables par les moyens de traitement mettant en oeuvre un procédé selon l'une quelconque des revendications 12 à 20 lorsqu'ils les exécutent.

24. Dispositif de restitution (5) comportant une interface homme-machine et des moyens pour communiquer avec le monde extérieur coopérant respectivement avec des moyens de traitement, **caractérisé en ce que** :

- les moyens pour communiquer sont aptes à recevoir du monde extérieur un contenu (14') produit selon la revendication 10 et représentant une quantité d'intérêt (14) relative à un écoulement d'un fluide corporel dans un organe à partir de signaux expérimentaux (15) délivrés par un système de mesure tomographique et reliés aux concentrations d'un agent de contraste au sein de volumes polyédriques donnés ;
- les moyens de traitement sont agencés pour, lire ledit contenu et commander l'interface homme-machine pour que cette dernière restitue la représentation d'un volume polyédrique dépendant de la valeur de ladite quantité d'intérêt associée à une face dudit volume polyédrique.

25. Système d'analyse d'imagerie tomographique comportant une unité de traitement (4) selon les revendications 21 ou 22 et un dispositif de restitution (5) selon les revendications 23 ou 24 coopérant avec ladite unité.

26. Procédé d'analyse d'imagerie tomographique mis en oeuvre par un système selon la revendication précédente comportant une première étape pour estimer une quantité d'intérêt selon un procédé conforme à l'une quelconque des revendications 1 à 11 et une étape pour restituer ladite quantité d'intérêt selon un procédé conforme à l'une quelconque des revendications 12 à 20.

27. Programme d'ordinateur enregistrable dans des moyens de mémorisation coopérant avec des moyens de traitement d'une unité de traitement (4) selon la revendication 21, ledit programme comportant des instructions exécutables par lesdits moyens de traitement mettant en oeuvre un procédé selon l'une quelconque des revendications 1 à 9 lorsqu'ils les exécutent.

**28.** Programme d'ordinateur enregistrable dans des moyens de mémorisation coopérant avec des moyens de traitement d'une unité de traitement (4) selon la revendication 22, ledit programme comportant des instructions exécutables par lesdits moyens de traitement mettant en oeuvre un procédé selon les revendications 10 ou 11 lorsqu'ils les exécutent.

**29.** Programme d'ordinateur enregistrable dans des moyens de mémorisation coopérant avec des moyens de traitement d'un dispositif de restitution (5) selon la revendication 23, ledit programme comportant des instructions exécutables par lesdits moyens de traitement mettant en oeuvre un procédé selon l'une quelconque des revendications 12 à 20 lorsqu'ils les exécutent.


**Patentansprüche**

**1.** Verfahren zum Erzeugen einer Schätzung einer interessierenden Menge (14) in Bezug auf einen Abfluss einer inhomogenen Flüssigkeit in einem dynamischen Arterien-/Gewebe-/Venen-System basierend auf experimentellen Signalen (15), die von einem tomographischen Messsystem bereitgestellt werden und die mit Konzentrationen eines Kontrastmittels innerhalb von gegebenen polyedrischen Volumen verbunden sind, wobei das Verfahren durch eine Behandlungseinheit (4) umgesetzt wird, wobei das Verfahren **dadurch gekennzeichnet ist, dass** es einen Schritt zum Schätzen der interessierenden Menge basierend auf einem kinetischen und parametrischen Modell umfasst, das eine Vielzahl von Parametern umfasst, von denen ein Strom entlang einer Fläche der gegebenen polyedrischen Volumen vorliegt.

**2.** Verfahren nach dem vorhergehenden Anspruch, **dadurch gekennzeichnet, dass** das kinetische Modell eine Vielzahl von Parametern umfasst, von denen ein Strom entlang einer Fläche der gegebenen polyedrischen Volumen vorliegt.

**3.** Verfahren nach Anspruch 1 oder 2, wobei das kinetische und parametrische Modell in Form eines bilinearen Modells anhand von Abschnitten in dem Volumenstrom entlang der Flächen eines der gegebenen polyedrischen Volumen und der Subvolumen eines der gegebenen polyedrischen Volumen ausgedrückt ist.

**4.** Verfahren nach dem vorhergehenden Anspruch, wobei der Schritt zum Schätzen der interessierenden Menge einen Schritt zum Schätzen der Parameter des Modells durch eine Methode der alternierenden linearen kleinsten Quadrate umfasst.

**5.** Verfahren nach einem der vorhergehenden Ansprüche, das ferner einen Schritt zum Herstellen einer komplementären Menge umfasst, die der geschätzten interessierenden Menge oder dem kinetischen Modell zugeordnet ist.

**6.** Verfahren nach einem der vorhergehenden Ansprüche, wobei der Abfluss der einer Körperflüssigkeit in einem interessierenden Organ ist.

**7.** Verfahren nach einem der vorhergehenden Ansprüche, wobei die geschätzte interessierende Menge ein Strom entlang einer Fläche eines gegebenen polyedrischen Volumens, ein Strom per Flächeneinheit, ein Subvolumen des gegebenen polyedrischen Volumens, ein Vektor der Abflussgeschwindigkeit, eine Abflussgeschwindigkeit, eine lokale durchschnittliche Transitzeit eines polyedrischen Volumens zu einem seiner Nachbarn, ein Teilchen-Beschleunigungsvektor, eine Teilchen-Beschleunigung, ein Teilchen-Ruckvektor, ein Teilchen-Ruck, ein Teilchen-Snap-Vektor, ein Teilchen-Snap, ein gesamter absoluter oder quadratischer Strom oder ein absoluter oder quadratischer Maximalstrom ist.

**8.** Verfahren nach einem der Ansprüche 1 bis 6, wobei die geschätzte interessierende Menge ein Strömungsfeld entlang der entsprechenden Flächen der gegebenen polyedrischen Volumen, ein Subvolumenfeld der gegebenen polyedrischen Volumen, ein Vektorfeld der Abflussgeschwindigkeit, ein Feld der Abflussgeschwindigkeiten, eine Position eines Materialpunkts der Flüssigkeit, ein Feld der lokalen durchschnittlichen Transitzeit eines polyedrischen Volumens zu einem seiner Nachbarn, ein Vektorfeld der Teilchen-Beschleunigung, ein Feld der Teilchen-Beschleunigungen, ein Vektorfeld der Teilchenrucks, ein Feld der Teilchen-Rucks, ein Vektorfeld der Teilchen-Snaps, ein Feld der Teilchen-Snaps, ein Feld der gesamten absoluten oder quadratischen Ströme, ein Feld der maximalen quadratischen oder absoluten Ströme oder eine Laufzeitverzögerung entlang einer Abflussbahn ist.

**9.** Verfahren nach dem vorhergehenden Anspruch, wenn die geschätzte interessierende Menge ein Feld von Vektoren der Abflussgeschwindigkeit ist, **dadurch gekennzeichnet, dass** es ferner einen Schritt zum Schätzen einer Bahn, einer Stromleitung, einer Sendeleitung oder einer Flüssigkeitsleitung basierend auf dem Feld der Vektoren der geschätzten Geschwindigkeit umfasst.

10. Verfahren nach einem der vorhergehenden Ansprüche, wobei das Verfahren einen Schritt zum Erzeugen eines Inhalts (14') umfasst, der die interessierende Menge darstellt, wobei der Inhalt dazu bestimmt ist, durch eine Vorrichtung für eine geeignete Wiedergabe genutzt zu werden.

11. Verfahren nach dem vorstehenden Anspruch, das ferner einen Schritt zum Bereitstellen des zuvor erzeugten Inhalts (14') umfasst.

12. Wiedergabeverfahren für eine geschätzte interessierende Menge gemäß einem Verfahren nach einem der Ansprüche 1 bis 11, wobei die interessierende Menge auf einen Abfluss einer Körperflüssigkeit in einem Organ basierend auf den experimentellen Signalen (15) bezogen ist, die durch ein tomographisches Messsystem geliefert werden und die mit einem Kontrastmittel innerhalb der gegebenen polyedrischen Volumen verbunden sind, wobei das Wiedergabeverfahren durch eine Wiedergabevorrichtung (5) umgesetzt wird, die eine Mensch-Maschine-Schnittstelle umfasst, und **dadurch gekennzeichnet ist, dass** es einen Schritt zum Wiedergeben einer Darstellung einer Fläche eines polyedrischen Volumens, das von dem Wert der interessierenden Menge für diese Fläche abhängig ist, mithilfe der Mensch-Maschine-Schnittstelle umfasst.

13. Wiedergabeverfahren für eine geschätzte interessierende Menge gemäß einem Verfahren nach einem der Ansprüche 1 bis 11, wobei die interessierende Menge auf einen Abfluss einer Körperflüssigkeit in einem Organ basierend auf den experimentellen Signalen (15) bezogen ist, die von einem tomographischen Messsystem bereitgestellt werden und die mit Konzentrationen eines Kontrastmittels innerhalb der gegebenen polyedrischen Volumen verbunden sind, wobei das Wiedergabeverfahren durch eine Wiedergabevorrichtung (5) umgesetzt wird, die eine Mensch-Maschine-Schnittstelle umfasst, und das **dadurch gekennzeichnet ist, dass** es einen Schritt zum Wiedergeben einer Darstellung einer Vielzahl von Flächen eines polyedrischen Volumens in Abhängigkeit von den Werten der interessierenden Menge für diese Flächen mithilfe der Mensch-Maschine-Schnittstelle umfasst.

14. Wiedergabeverfahren für eine geschätzte interessierende Menge nach einem Verfahren nach einem der Ansprüche 1 bis 11, wobei die interessierende Menge auf einen Abfluss einer Körperflüssigkeit in einem Organ basierend auf den experimentellen Signalen (15) bezogen ist, die von einem tomographischen Messsystem bereitgestellt werden und die mit Konzentrationen eines Kontrastmittels innerhalb der gegebenen polyedrischen Volumen verbunden sind, wobei das Wiedergabeverfahren durch eine Wiedergabevorrichtung (5) umgesetzt wird, die eine Mensch-Maschine-Schnittstelle umfasst, und das **dadurch gekennzeichnet ist, dass** es einen Schritt zum Wiedergeben einer Darstellung einer Vielzahl von Flächen eines polyedrischen Volumens in Abhängigkeit von den Werten der interessierenden Menge, die einer Fläche des polyedrischen Volumens zugeordnet sind, mithilfe der Mensch-Maschine-Schnittstelle umfasst.

15. Verfahren nach dem vorhergehenden Anspruch, wobei die interessierende Menge vektoriell ist und der Schritt zum Wiedergeben durch die Mensch-Maschine-Schnittstelle aus Wiederherstellen eines Pfeils besteht, dessen Länge proportional zu einem Standard der Vektorgröße ist, die dem Volumen zugeordnet ist, und dessen Richtung die der Menge ist.

16. Verfahren nach Anspruch 14, wobei die interessierende Menge vektoriell ist und der Schritt zum Wiedergeben durch die Mensch-Maschine-Schnittstelle aus Wiedergeben einer Darstellung eines eingefärbten polyedrischen Volumens aus den drei Grundfarben besteht, deren jeweilige Intensitäten von den Komponenten der dem Volumen zugeordneten vektoriellen Menge abhängen.

17. Wiedergabeverfahren einer Bahn, einer Stromleitung, einer Sendeleitung oder einer Flüssigkeitsleitung, das jeweils gemäß einem Verfahren nach einem der Ansprüche 9 bis 11 geschätzt wird und auf einen Abfluss einer Körperflüssigkeit in einem Organ basierend auf den experimentellen Signalen (15) bezogen ist, die von einem tomographischen Messsystem geliefert werden und die mit den Konzentrationen eines Kontrastmittels innerhalb der gegebenen polyedrischen Volumen verbunden sind, wobei das Wiedergabeverfahren durch eine Wiedergabevorrichtung (5) umgesetzt wird, die eine Mensch-Maschine-Schnittstelle umfasst und die einen Schritt zum Wiedergeben einer Darstellung eines parametrierten Bogens entsprechend der Bahn oder der Stromleitung oder der Sendeleitung oder der Flüssigkeitsleitung mithilfe der Mensch-Maschine-Schnittstelle umfasst.

18. Verfahren nach dem vorhergehenden Anspruch, wobei eine Darstellung einer Position in dem parametrierten Bogen zu jedem Zeitpunkt von dem Wert einer interessierenden Menge zu diesem Zeitpunkt abhängt.

19. Verfahren nach einem der Ansprüche 17 oder 18, wobei zu jedem Zeitpunkt eine Wiedergabe des Abschnitts des parametrierten Bogens wiedergegeben wird, der bis zu diesem Zeitpunkt durchlaufen wurde.

20. Wiedergabeverfahren einer geschätzten interessierenden Menge nach einem Verfahren nach einem der Ansprüche 1 bis 11, wobei die interessierende Menge auf einen Abfluss einer Körperflüssigkeit in einem Organ basierend auf den experimentellen Signalen (15) bezogen ist, die von einem tomographischen Messsystem bereitgestellt werden und mit Konzentrationen eines Kontrastmittels innerhalb der gegebenen polyedrischen Volumen verbunden sind, wobei das Wiedergabeverfahren durch eine Wiedergabevorrichtung (5) umgesetzt wird, die eine Mensch-Maschine-Schnittstelle umfasst, und **dadurch gekennzeichnet ist, dass** es einen Schritt zum Wiedergeben einer choroplethischen Darstellung eines deformierten Volumens durch Anamorphose gemäß der interessierenden Menge mithilfe der Mensch-Maschine-Schnittstelle umfasst.

21. Behandlungseinheit (4), die Speichervorrichtungen und Kommunikationsvorrichtungen mit der Außenwelt umfasst, die mit der Behandlungsvorrichtung zusammenwirken, **dadurch gekennzeichnet, dass**:

    - die Kommunikationsvorrichtung dazu geeignet ist, von der Außenwelt die experimentellen Signale (15) zu empfangen, die von einem tomographischen Messsystem geliefert werden, wobei die Signale mit Konzentrationen eines Kontrastmittels innerhalb der gegebenen polyedrischen Volumen eines kinetischen Systems verbunden sind;
    - die Speichervorrichtung ausführbare Befehle für die Behandlungsvorrichtung umfasst, die ein Verfahren zum Schätzen einer interessierenden Menge (14) nach einem der Ansprüche 1 bis 9 umsetzen, wenn sie diese ausführt.

22. Behandlungseinheit nach dem vorhergehenden Anspruch, wobei:

    - die Kommunikationsvorrichtung ferner dazu geeignet ist, für die Außenwelt einen Inhalt (14') bereitzustellen, der eine interessierende Menge darstellt;
    - die Speichervorrichtung durch die Behandlungsvorrichtung ausführbare Befehle umfasst, die ein Verfahren zum Schätzen einer interessierenden Menge (14) nach Anspruch 10 oder 11 umsetzen, wenn sie sie ausführt.

23. Wiedergabevorrichtung (5), die eine Speichervorrichtung, eine Mensch-Maschine-Schnittstelle und eine Kommunikationsvorrichtung zum Kommunizieren mit der Außenwelt umfasst, die mit der Behandlungsvorrichtung zusammenwirken, **dadurch gekennzeichnet, dass**:

    - die Kommunikationsvorrichtung dazu geeignet ist, von der Außenwelt eine interessierende Menge (14) bezogen auf einen Abfluss von Körperflüssigkeit in einem Organ basierend auf den experimentellen Signalen (15) zu empfangen, die von einem tomographischen Messsystem bereitgestellt werden und die mit Konzentrationen eines Kontrastmittels innerhalb der gegebenen polyedrischen Volumen verbunden sind;
    - die Mensch-Maschine-Schnittstelle dazu geeignet ist, von einem Benutzer (6) eine Darstellung der interessierenden Menge wiederzugeben;
    - die Speichervorrichtung durch die Behandlungsvorrichtung ausführbare Befehle umfasst, die ein Verfahren nach einem der Ansprüche 12 bis 20 umsetzen, wenn sie diese ausführt.

24. Wiedergabeverfahren (5), das eine Mensch-Maschine-Schnittstelle und eine Kommunikationsvorrichtung zum Kommunizieren mit der Außenwelt umfasst, die jeweils mit der Behandlungsvorrichtung zusammenwirken, **dadurch gekennzeichnet, dass**:

    - die Kommunikationsvorrichtung dazu geeignet ist, von der Außenwelt einen Inhalt (14') zu empfangen, der nach Anspruch 10 erzeugt wurde und der eine interessierende Menge (14) bezogen auf einen Abfluss einer Körperflüssigkeit in einem Organ basierend auf den experimentellen Signalen (15) darstellt, die durch ein tomographisches Messsystem geliefert werden und die mit Konzentrationen eines Kontrastmittels innerhalb der gegebenen polyedrischen Volumen verbunden sind;
    - die Behandlungsvorrichtung dazu angeordnet ist, den Inhalt zu lesen und die Mensch-Maschine-Schnittstelle anzuweisen, damit diese die Darstellung eines polyedrischen Volumens in Abhängigkeit von dem Wert der interessierenden Menge, der einer Fläche des polyedrischen Volumens zugeordnet ist, wiedergibt.

**25.** Analysesystem zur tomographischen Bildgebung, das eine Behandlungseinheit (4) nach den Ansprüchen 21 oder 22 und eine Wiedergabevorrichtung (5) nach einem der Ansprüche 23 oder 24 umfasst, die mit der Einheit zusammenwirken.

**26.** Verfahren zur Analyse der tomographischen Bildgebung, das durch ein System nach dem vorhergehenden Anspruch umgesetzt wird, umfassend einen ersten Schritt zum Schätzen einer interessierenden Menge gemäß einem Verfahren nach einem der Ansprüche 1 bis 11 und einen Schritt zum Wiedergeben der interessierenden Menge nach einem Verfahren nach einem der Ansprüche 12 bis 20.

**27.** Computerprogramm, das in der Speichervorrichtung installierbar ist, die mit der Behandlungsvorrichtung einer Behandlungseinheit (4) nach Anspruch 21 zusammenwirkt, wobei das Programm durch die Behandlungsvorrichtung ausführbare Befehle umfasst, die ein Verfahren nach einem der Ansprüche 1 bis 9 umsetzen, wenn es diese ausführt.

**28.** Computerprogramm, das in der Speichervorrichtung installierbar ist, die mit der Behandlungsvorrichtung einer Behandlungseinheit (4) nach Anspruch 22 zusammenwirkt, wobei das Programm durch die Behandlungsvorrichtung ausführbare Befehle umfasst, die ein Verfahren nach den Ansprüchen 10 oder 11 umsetzen, wenn es diese ausführt.

**29.** Computerprogramm, das in der Speichervorrichtung installierbar ist, die mit der Behandlungsvorrichtung einer Wiedergabeeinheit (5) nach Anspruch 23 zusammenwirkt, wobei das Programm durch die Behandlungsvorrichtung ausführbare Befehle umfasst, die ein Verfahren nach einem der Ansprüche 12 bis 20 umsetzen, wenn es diese ausführt.

**Claims**

**1.** Method for estimating a quantity of interest (14) relating to a flow of an inhomogeneous fluid in an artery/tissue/vein dynamic system on the basis of experimental signals (15) delivered by a tomographic measurement system and relating to the concentrations of a contrast agent within given polyhedral volumes, said method being implemented by a processing unit (4), the method being **characterized in that** it includes a step of estimating said quantity of interest from a kinematic and parametric model which includes a plurality of parameters, including a flow rate across a face of one of said given polyhedral volumes.

**2.** Method according to the preceding claim, **characterized in that** said kinematic model includes a plurality of parameters, including a flow rate across each face of one of said given polyhedral volumes.

**3.** Method according to either claim 1 or claim 2, wherein the kinematic and parametric model is expressed as a piecewise bilinear model of the volumetric flow rates across the faces of one of said given polyhedral volumes and of the sub-volumes of said one of said given polyhedral volumes.

**4.** Method according to the preceding claim, wherein the step of estimating said quantity of interest includes a step of estimating the parameters of the model by an alternating linear least squares method.

**5.** Method according to any one of the preceding claims, wherein the method also includes a step of producing an additional quantity associated with the estimated quantity of interest or associated with the kinematic model.

**6.** Method according to any one of the preceding claims, the flow being a flow of a bodily fluid inside an organ of interest.

**7.** Method according to any one of the preceding claims, wherein the estimated quantity of interest is a flow rate across a face of a given polyhedral volume, a flow rate per unit of surface, a sub-volume of said given polyhedral volume, a flow velocity vector, a flow velocity value, a local mean transit time from a polyhedral volume to one of its neighbors, a particular acceleration vector, a particular acceleration value, a particular jerk vector, a particular jerk value, a particular snap vector, a particular snap value, a total absolute or quadratic flow rate or a maximum absolute or quadratic flow rate.

**8.** Method according to any one of claims 1 to 6, wherein the estimated quantity of interest is a field of flow rates across respective faces of given polyhedral volumes, a field of sub-volumes of said given polyhedral volumes, a field of flow velocity vectors, a field of flow velocity values, a position of a material point of the fluid, a field of local mean transit times from a polyhedral volume to one of its neighbors, a field of particular acceleration vectors, a field of particular acceleration values, a field of particular jerk vectors, a field of particular jerk values, a field of particular snap vectors, a field of particular snap values, a field of total absolute or quadratic flow rates, a field of maximum absolute or quadratic flow rates, or a propagation time along a flow path.

9. Method according to the preceding claim, the estimated quantity of interest being a field of flow velocity vectors, **characterized in that** it also includes a step of estimating a path, a current line, an emission line or a fluid line on the basis of said estimated field of flow velocity vectors.

10. Method according to any one of the preceding claims, said method including a step of producing a content (14') that represents said quantity of interest, said content being intended for being used by a suitable output apparatus.

11. Method according to the preceding claim, wherein the method also includes a step of delivering the previously produced content (14').

12. Method for outputting an estimated quantity of interest using a method according to any one of claims 1 to 11, said quantity of interest relating to a flow of a bodily fluid inside an organ, on the basis of experimental signals (15) delivered by a tomographic measurement system and relating to the concentrations of a contrast agent within given polyhedral volumes, said output method being implemented by an output apparatus (5) including a man-machine interface, and being **characterized in that** it includes a step of outputting, by means of said man-machine interface, a representation of a face of a polyhedral volume according to the value of the quantity of interest for said face.

13. Method for outputting an estimated quantity of interest using a method according to any one of claims 1 to 11, said quantity of interest relating to a flow of a bodily fluid inside an organ, on the basis of experimental signals (15) delivered by a tomographic measurement system and relating to the concentrations of a contrast agent within given polyhedral volumes, said output method being implemented by an output apparatus (5) including a man-machine interface, and being **characterized in that** it includes a step of outputting, by means of said man-machine interface, a representation of a plurality of faces of a polyhedral volume according to the values of the quantity of interest for said faces.

14. Method for outputting an estimated quantity of interest using a method according to any one of claims 1 to 11, said quantity of interest relating to a flow of a bodily fluid inside an organ, on the basis of experimental signals (15) delivered by a tomographic measurement system and relating to the concentrations of a contrast agent within given polyhedral volumes, said output method being implemented by an output apparatus (5) including a man-machine interface, and being **characterized in that** it includes a step of outputting, by means of said man-machine interface, a representation of a polyhedral volume according to the value of said quantity of interest associated with a face of said polyhedral volume.

15. Method according to the preceding claim, wherein the quantity of interest is vectorial, and the step of outputting by means of the man-machine interface consists in outputting an arrow, whose length is proportional to a norm of the vectorial quantity associated with said volume, and whose direction is that of said quantity.

16. Method according to claim 14, wherein the quantity of interest is vectorial, and the step of outputting by means of the man-machine interface consists in outputting a representation of a polyhedral volume colored on the basis of three primary colors, whose respective intensities depend on the components of the vectorial quantity associated with said volume.

17. Method for outputting a path, a current line, an emission line or a fluid line, respectively estimated using a method according to any one of claims 9 to 11 and relating to a flow of a bodily fluid inside an organ, on the basis of experimental signals (15) delivered by a tomographic measurement system and relating to the concentrations of a contrast agent within given polyhedral volumes, said output method being implemented by an output apparatus (5) including a man-machine interface, and including a step of outputting, by means of said man-machine interface, a representation of a parametrized curve corresponding to the path, the current line, the emission line or the fluid line.

18. Method according to the preceding claim, wherein a representation of a position on the parametrized curve at each moment depends on the value of a quantity of interest at said moment.

19. Method according to either claim 17 or claim 18, wherein, at each moment, a representation of the portion of the parametrized curve that has been travelled up to that moment is output.

40

20. Method for outputting a quantity of interest estimated using a method according to any one of claims 1 to 11, said quantity of interest relating to a flow of a bodily fluid inside an organ, on the basis of experimental signals (15) delivered by a tomographic measurement system and relating to the concentrations of a contrast agent within given polyhedral volumes, said output method being implemented by an output apparatus (5) including a man-machine interface, and being **characterized in that** it includes a step of outputting, by means of said man-machine interface, a chloropleth representation of a volume distorted by anamorphosis according to said quantity of interest.

21. Processing unit (4) including storage means and means for communicating with the outside world that cooperate with processing means, **characterized in that**:

    - the communication means are able to receive, from the outside world, experimental signals (15) delivered by a tomographic measurement system, said signals relating to the concentrations of a contrast agent within given polyhedral volumes of a kinematic system;
    - the storage means include instructions executable by the processing means which, when they execute said instructions, implement a method for estimating a quantity of interest (14) according to any one of claims 1 to 9.

22. Processing unit according to the preceding claim, wherein:

    - the communication means are, in addition, able to supply to the outside world a content (14') that represents a quantity of interest;
    - the storage means include instructions executable by the processing means which, when they execute said instructions, implement a method for estimating a quantity of interest (14) according to either claim 10 or claim 11.

23. Output apparatus (5) including storage means, a man-machine interface and means for communicating with the outside world that cooperate respectively with the processing means, **characterized in that**:

    - the communication means are able to receive, from the outside world, a quantity of interest (14) relating to a flow of a bodily fluid inside an organ, on the basis of experimental signals (15) delivered by a tomographic measurement system and relating to the concentrations of a contrast agent within given polyhedral volumes;
    - the man-machine interface is able to output to a user (6) a representation of the quantity of interest;
    - the storage means include instructions executable by the processing means which, when they execute said instructions, implement a method according to any one of claims 12 to 20.

24. Output apparatus (5) including a man-machine interface and means for communicating with the outside world that cooperate respectively with processing means, **characterized in that**:

    - the communication means are able to receive, from the outside world, a content (14') produced according to claim 10 and representing a quantity of interest (14) relating to a flow of a bodily fluid inside an organ, on the basis of experimental signals (15) delivered by a tomographic measurement system and relating to the concentrations of a contrast agent within given polyhedral volumes;
    - the processing means are designed to read said content and control the man-machine interface such that it outputs the representation of a polyhedral volume according to the value of said quantity of interest associated with a face of said polyhedral volume.

25. Tomographic imaging analysis system including a processing unit (4) according to either claim 21 or claim 22 and an output apparatus (5) according to either claim 23 or claim 24 which cooperates with said unit.

26. Tomographic imaging analysis method, implemented by a system according to the preceding claim, including a first step of estimating a quantity of interest using a method according to any one of claims 1 to 11 and a step of outputting said quantity of interest using a method according to any one of claims 12 to 20.

27. Computer program recordable in storage means and cooperating with processing means of a processing unit (4) according to claim 21, said program including instructions executable by said processing means which, when they execute said instructions, implement a method according to any one of claims 1 to 9.

28. Computer program recordable into storage means and cooperating with processing means of a processing unit (4) according to claim 22, said program including instructions executable by said processing means which, when they execute said instructions, implement a method according to either claim 10 or claim 11.

**29.** Computer program recordable in storage means and cooperating with processing means of an output apparatus (5) according to claim 23, said program including instructions executable by said processing means which, when they execute said instructions, implement a method according to any one of claims 12 to 20.

**FIG.1**

**FIG.2**

**FIG.3**

**FIG.4**

FIG.5a

FIG.5b

FIG.6

FIG.7

80 — FIG.8

80 — FIG.11

$$MF_{i-\frac{1}{2},j,k}$$

80

**FIG.9a**

$$MF_{i-\frac{1}{2},j,k}$$

$$MF_{i+\frac{1}{2},j,k}$$

80

80

$$MF_{i,j-\frac{1}{2},k}$$

$$MF_{i,j+\frac{1}{2},k}$$

80

80

$$MF_{i,j,k-\frac{1}{2}}$$

$$MF_{i,j,k+\frac{1}{2}}$$

80

80

**FIG. 9b**

80 ⌐

**FIG.10**

80 ⌐

**FIG.12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2965951 A1

**Littérature non-brevet citée dans la description**

- **VIMMR J et al.** Non-Newtonian effects of blood flow in complete coronary and femoral bypasses. *Mathematics and computers in simulation,* 2010, vol. 80 (6), 1324-1336

- **TIMOTHY N JONES et al.** Patient-Specific Analysis of Left Ventricular Blood Flow. *International conference on medical image computing and computer-assisted intervention,* 1998, 156-166